# EUROPEAN PATENT SPECIFICATION

(11) **EP 4 202 202 B1**
(45) Date of publication and mention of the grant of the patent: **20.11.2024**
(21) Application number: 21956965.4
(22) Date of filing: 29.09.2021
(51) Int. Cl.: F02M 35/10, B62D 61/10, B60K 13/02, F02M 35/04, F02M 35/16, B62D 23/00, B62D 21/18, B60K 11/02, B60K 11/04, B60K 11/06, B60K 13/04

(54) **ALL-TERRAIN VEHICLE**
GELÄNDEFAHRZEUG
VÉHICULE TOUT-TERRAIN

(43) Date of publication of application: 28.06.2023
(73) Proprietor: Zhejiang CFMOTO Power Co., Ltd., Hangzhou, Zhejiang 311100 (CN)
(72) Inventor: RAO, Lihua, Hangzhou Zhejiang 311100 (CN); YANG, Yibin, Hangzhou Zhejiang 311100 (CN); CHENG, Zhaoyang, Hangzhou Zhejiang 311100 (CN); PENG, Hongbo, Hangzhou Zhejiang 311100 (CN); LIU, Hangyu, Hangzhou Zhejiang 311100 (CN); DING, Weidong, Hangzhou Zhejiang 311100 (CN); ZOU, Pengfei, Hangzhou Zhejiang 311100 (CN); JIANG, Xiaolu, Hangzhou Zhejiang 311100 (CN); DONG, Taotao, Hangzhou Zhejiang 311100 (CN); ZHONG, Mei, Hangzhou Zhejiang 311100 (CN); WU, Tao, Hangzhou Zhejiang 311100 (CN); WANG, Jianyong, Hangzhou Zhejiang 311100 (CN); BAO, Genxin, Hangzhou Zhejiang 311100 (CN); WANG, Silin, Hangzhou Zhejiang 311100 (CN)
(74) Representative: Sun, Yiming
(86) International application number: PCT/CN2021/121820
(87) International publication number: WO 2023/050192

(56) References cited:
- CN-A- 103 387 012
- CN-A- 104 703 865
- CN-A- 105 508 597
- CN-U- 207 018 117
- CN-U- 208 816 254
- US-A- 3 743 045

## Description

### FIELD OF THE DISCLOSURE

The disclosure relates to the technical field of side-by-side utility vehicles.

### BACKGROUND OF THE DISCLOSURE

Side-by-side utility vehicle refers to a vehicle that is designed for use on various types of terrain. Patent document US2013256050 A1 discloses a side-by-side utility vehicle. Side-by-side utility vehicles can be used for off-road, sports and freight transportation. Side-by-side utility vehicles include a frame, a vehicle cover and some other assemblies used to ensure the normal operation of side-by-side utility vehicles, such as air filter, electrical control unit and other components. These assemblies are substantially mounted on the frame and covered and protected by the vehicle cover. Generally, these components, such as air filter, electronic control unit and other components are routine maintenance components, which need regular overhaul and maintenance to ensure the normal operation. However, according to the existing layout of these components, when overhauling and maintaining such components, the vehicle cover needs to removed, leading to a complex and difficult maintenance.

### SUMMARY OF THE DISCLOSURE

There is a need of providing a side-by-side utility vehicle with convenient maintenance.

In order to solve the above problems, this disclosure provides the following technical solutions.

A side-by-side utility vehicle includes a frame, a vehicle cover, a prime mover assembly, an intake and exhaust system, an air filter, and an electrical control unit. The frame includes a front frame portion, a rear frame portion, and a middle frame portion between the front frame portion and the rear frame portion. The vehicle cover includes a front baffle, a bottom plate, a dashboard panel, and a rear baffle. The front baffle is arranged between the front frame portion and the middle frame portion. The bottom plate in arranged on the middle frame portion. The dashboard panel is arranged at an end of the front baffle away from the bottom plate. The rear baffle is arranged between the middle frame portion and the rear frame portion. The front baffle, the bottom plate, the dashboard panel and the rear baffle collectively defines a cabin. The prime mover assembly having an air inlet and an air outlet is mounted on the rear frame portion. The intake and exhaust system includes an intake manifold in fluid communication with the air inlet and an exhaust manifold in fluid communication with the air outlet. The air filter includes a filter element and is at least partially in fluid communication with the intake manifold to filter the gas that enters into the prime mover assembly through the intake manifold. The electrical control unit is mounted on the rear frame portion for monitoring the input data and the running state of the side-by-side utility vehicle and controlling the action of the executing mechanism. The side-by-side utility vehicle further includes an intake seat including a mounting hole and an intake cavity. The intake cavity has an opening. One side of the vehicle cover defines a intake seat mounting cavity positioned above the rear side plate. The intake seat is embedded into the intake seat mounting cavity, the end of the intake manifold away from the air inlet extends toward the intake seat and into the intake seat mounting cavity through the mounting hole. The side-by-side utility vehicle further includes an elevated intake manifold. One end of the elevated intake manifold extends into the intake cavity and is in fluid communication with the intake manifold. The other end of the elevated intake manifold extends away from the intake seat and along a substantially upward direction. The rear baffle defines a filter element access port and an electrical control unit (ECU) access port in fluid communication with the cabin. The filter element access port is in communication with the air filter. The ECU access port is in communication with the electrical control unit.

A side-by-side utility vehicle includes a frame, a vehicle cover, a prime mover assembly, and an intake and exhaust system. The vehicle cover is mounted on the frame and defines a cabin. The vehicle cover further includes rear side plates arranged on the rear sides of the frame. The prime mover assembly having an air inlet and an air outlet is partially mounted on the rear frame portion. The intake and exhaust system includes an intake manifold in fluid communication with the air inlet and an exhaust manifold in fluid communication with the air outlet. The side-by-side utility vehicle further includes an intake seat including a mounting hole and an intake cavity. The intake cavity has an opening. One side of the vehicle cover defines a intake seat mounting cavity positioned above one of the rear side plates. The intake seat is embedded into the intake seat mounting cavity, the end of the intake manifold away from the air inlet extends toward the intake seat and into the intake seat mounting cavity through the mounting hole.

A side-by-side utility vehicle includes a frame, a vehicle cover, a prime mover assembly, and an intake and exhaust system. The vehicle cover is mounted on the frame and defines a cabin. The prime mover assembly having an air inlet and an air outlet is partially mounted on the rear frame portion. The intake and exhaust system includes an intake manifold in fluid communication with the air inlet and an exhaust manifold in fluid communication with the air outlet. The side-by-side utility vehicle further includes an intake seat including a mounting hole and an intake cavity. The intake cavity has an opening. The vehicle cover defines a intake seat mounting cavity. The intake seat is embedded into the intake seat mounting cavity, the end of the intake manifold away from the air inlet extends toward the intake seat and into the intake seat mounting cavity through the mounting hole. The side-by-side utility vehicle further includes an elevated intake manifold. One end of the elevated intake manifold extends into the intake cavity and is in fluid communication with the intake manifold. The other end of the elevated intake manifold extends away from the intake seat and along a substantially upward direction.

A side-by-side utility vehicle includes a frame, a vehicle cover, a prime mover assembly, an intake and exhaust system, an air filter, an electrical control unit, and a mode switch. The frame includes a front frame portion, a rear frame portion, and a middle frame portion between the front frame portion and the rear frame portion. The vehicle cover includes a front baffle, a bottom plate, a dashboard panel, and a rear baffle. The front baffle is arranged between the front frame portion and the middle frame portion. The bottom plate in arranged on the middle frame portion. The dashboard panel is arranged at an end of the front baffle away from the bottom plate. The rear baffle is arranged between the middle frame portion and the rear frame portion. The front baffle, the bottom plate, the dashboard panel and the rear baffle collectively defines a cabin. The prime mover assembly having an air inlet and an air outlet is mounted on the rear frame portion. The intake and exhaust system includes an intake manifold in fluid communication with the air inlet and an exhaust manifold in fluid communication with the air outlet. The air filter includes a filter element and is at least partially in fluid communication with the intake manifold to filter the gas that enters into the prime mover assembly through the intake manifold. The electrical control unit is mounted on the rear frame portion for monitoring the input data and the running state of the side-by-side utility vehicle and controlling the action of the executing mechanism. The mode switch includes a two-wheeled drive gear, a four-wheeled drive gear and a front-wheeled drive lock gear, and the four-wheeled gear is located between the two-wheeled drive gear and the front-wheeled drive lock gear. The rear baffle defines a filter element access port and an electrical control unit (ECU) access port in fluid communication with the cabin. The filter element access port is in communication with the air filter. The ECU access port is in communication with the electrical control unit. The mode switch includes a housing including a cavity, a first gear slot, a second gear slot and a third gear slot being disposed in the cavity, the second gear slot being located between the first gear slot and the third gear slot, all of the first gear slot, the second gear slot and the third gear slot being arc-shaped slots; a pressing plate rotatably connected to the housing; and a gear lever assembly, one end of the gear lever assembly being connected to the pressing plate, and the other end being located in the cavity, and being capable of swinging along with the pressing plate and switching among the first gear slot, the second gear slot and the third gear slot; The second gear slot includes a first connection end connected to the first gear slot, and the first gear slot includes a second connection end connected to the first connection end, the first connection end intersects with the second connection end creating a first intersection point P and a first angle β1. The second gear slot also includes a third connecting end connected to the third gear slot, the third gear slot includes a fourth connecting end connected to the third connecting end, and the third connecting end intersects the fourth connecting end and has a second intersection point Q and a second angle β2. The difference between β1 and β2 is in the range from 5° to 30°.

A side-by-side utility vehicle includes a frame, a vehicle cover, a prime mover assembly, an intake and exhaust system, an air filter, and an electrical control unit. The frame includes a front frame portion, a rear frame portion, and a middle frame portion. The middle frame portion is arranged between the front frame portion and the rear frame portion. The front frame portion, the rear frame portion and the middle frame portion collectively defines an accommodating space. The middle frame portion includes a first type beam at least partially located on the same plane s, at least includes the first beam and the second beam; and a second type beam respectively connected to the first type beam, which at least includes the first longitudinal beam; The vehicle cover includes a front baffle, a bottom plate, a dashboard panel, and a rear baffle. The front baffle is arranged between the front frame portion and the middle frame portion. The bottom plate in arranged on the middle frame portion. The dashboard panel is arranged at an end of the front baffle away from the bottom plate. The rear baffle is arranged between the middle frame portion and the rear frame portion. The front baffle, the bottom plate, the dashboard panel and the rear baffle collectively defines a cabin. The prime mover assembly having an air inlet and an air outlet is mounted on the rear frame portion. The intake and exhaust system includes an intake manifold in fluid communication with the air inlet and an exhaust manifold in fluid communication with the air outlet. The air filter includes a filter element and is at least partially in fluid communication with the intake manifold to filter the gas that enters into the prime mover assembly through the intake manifold. The electrical control unit is mounted on the rear frame portion for monitoring the input data and the running state of the side-by-side utility vehicle and controlling the action of the executing mechanism. The rear baffle defines a filter element access port and an electrical control unit (ECU) access port in fluid communication with the cabin. The filter element access port is in communication with the air filter. The ECU access port is in communication with the electrical control unit. The first longitudinal beam includes a first rod and a second rod, one end of the first rod is connected to the first cross beam, and the other end of the first rod extends upward and toward the second cross beam. One end of the second rod is connected to the second cross beam, and the other end of the second rod extends upward toward the first cross beam and is connected to the first rod. The angle between the first rod and the plane S is A1, and A1 is set to be in the range from 5° to 15°. The angle between the second rod and the plane S is A2, and A2 is set to be in the range from 5° to 15°.

A side-by-side utility vehicle includes a frame, a vehicle cover, a prime mover assembly, an intake and exhaust system, an air filter, an electrical control unit, a suspension assembly, wheels, an electrical terminal assembly, and a battery pack. The frame includes a front frame portion, a rear frame portion, and a middle frame portion between the front frame portion and the rear frame portion. The vehicle cover includes a front baffle, a bottom plate, a dashboard panel, and a rear baffle. The front baffle is arranged between the front frame portion and the middle frame portion. The bottom plate in arranged on the middle frame portion. The dashboard panel is arranged at an end of the front baffle away from the bottom plate. The rear baffle is arranged between the middle frame portion and the rear frame portion. The front baffle, the bottom plate, the dashboard panel and the rear baffle collectively defines a cabin. The prime mover assembly having an air inlet and an air outlet is mounted on the rear frame portion. The intake and exhaust system includes an intake manifold in fluid communication with the air inlet and an exhaust manifold in fluid communication with the air outlet. The air filter includes a filter element and is at least partially in fluid communication with the intake manifold to filter the gas that enters into the prime mover assembly through the intake manifold. The electrical control unit is mounted on the rear frame portion for monitoring the input data and the running state of the side-by-side utility vehicle and controlling the action of the executing mechanism. The suspension assembly in mounted on the frame. The wheels are mounted on the suspension assembly. The electrical terminal assembly mounted on the frame includes a terminal block, a harness, and a terminal. The terminal includes a first type of terminal and a second type of terminal. The battery pack is electrically connected to the electrical terminal assembly. The rear baffle defines a filter element access port and an electrical control unit (ECU) access port in fluid communication with the cabin. The filter element access port is in communication with the air filter. The ECU access port is in communication with the electrical control unit. The electrical terminal assembly further includes a power relay connected between the terminal block and the battery, and the opening/closing of the power relay corresponds to the opening/closing of the side-by-side utility vehicle. The first type of wiring terminals are electrically connected to the battery by the harnesses, and the second type of wiring terminals are electrically connected to the power relay by the harnesses and the power relay is electrically connected to the battery.

The disclosure has at least the following advantages. The positions for the electrical control unit and the air filter are arranged suitably, and the rear baffle defines a filter element access port and ECU access port. When overhauling the air filter and the electronic control unit, only the corresponding components need to be overhauled through the filter element access port and ECU access port, which is convenient for overhaul and simple for operation, which can avoid secondary pollution of the components and reduce the possibility of dust or sediment entering the air filter during maintenance.

### BRIEF DESCRIPTION OF THE DRAWINGS

FIG. 1 is a front perspective view of a side-by-side utility vehicle according to an embodiment of the disclosure.
FIG. 2 is a side perspective view of the frame structure of the vehicle according to an embodiment of the disclosure.
FIG. 3 is an opposing side perspective view of the frame structure of the vehicle according to an embodiment of the disclosure.
FIG. 4 is a schematic view of the connection between a pedal mounting seat and the front frame portion of the vehicle according to an embodiment of the disclosure.
FIG. 5 is a schematic view of the structure of a pedal mounting seat of according to an embodiment of the disclosure.
FIG. 6 is a perspective view from below of the frame structure of according to an embodiment of the disclosure.
FIG. 7 is an enlarged view of part A in FIG. 6.
FIG. 8 is a side schematic view of the preferred middle frame portion.
FIG. 9 is a mostly side, slightly front schematic view of the frame structure of the vehicle according to an embodiment of the disclosure.
FIG. 10 is an enlarged view of part B in FIG. 9.
FIG. 11 is a schematic view of the structure of a second armrest according to an embodiment of the disclosure.

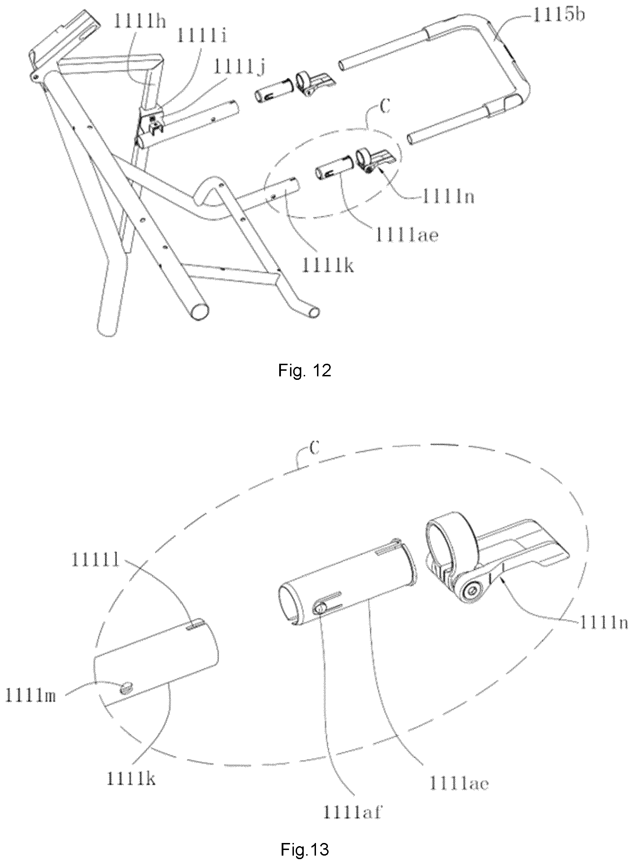

FIG. 12 is an exploded view of the second armrest of FIG. 11.
FIG. 13 is an enlarged view of part C in FIG. 12.
FIG. 14 is perspective view of a locking member.
FIG. 15 is an exploded view of the locking member.
FIG. 16 is a schematic view of a locking ramp wheel at an unlocked state.
FIG. 17 is a schematic view of the locking ramp wheel at a locking state.
FIG. 18 is a schematic view of the structure of a side bumper according to a preferred embodiment of the disclosure.
FIG. 19 is a front perspective view of vehicle cover according to a preferred embodiment of the disclosure.
FIG. 20 is a front perspective view of vehicle cover without a ceiling according to a preferred embodiment of the disclosure.
FIG. 21 is a rear perspective view of vehicle cover according to an embodiment of the disclosure.
FIG. 22 is a perspective view of the structure of a dashboard panel according to a preferred embodiment of the disclosure.
FIG. 23 is an exploded view of the dashboard panel according to an embodiment of the disclosure.
FIG. 24 is an enlarged view of part D in FIG. 22.
FIG. 25 is a schematic view of the structure of a first cover plate of the dashboard panel according to an embodiment of the disclosure.
FIG. 26 is a perspective view of a front baffle of the vehicle according to an embodiment of the disclosure.
FIG. 27 is a top perspective view of a bottom plate of the vehicle according to an embodiment of the disclosure.
FIG. 28 is an exploded view of the bottom plate according to an embodiment of the disclosure.
FIG. 29 is a top perspective view of the vehicle cover according to a preferred embodiment of the disclosure.
FIG. 30 is a top perspective view of a rear trunk according to a preferred embodiment of the disclosure.
FIG. 31 is a perspective view of a D-ring anchors.
FIG. 32 is an exploded view of the roll-over protection system (ROPS) assembly according to a preferred embodiment of the disclosure.
FIG. 33 is a front perspective view of the ceiling of the vehicle according to an embodiment of the disclosure.
FIG. 34 is a top perspective view of the ceiling of the vehicle according to an embodiment of the disclosure.
FIG. 35 is a schematic view of the structure of a first connection member for the ceiling.
FIG. 36 is a schematic view of a rear-view mirror connected to the ceiling.
FIG. 37 is a schematic view of a rear-view mirror support according to a preferred embodiment of the disclosure.
FIG. 38 is a side view of a rear-view mirror support according to an embodiment of the disclosure.
FIG. 39 is a schematic view of assembly of an upper door body and a lower door body.
FIG. 40 is a rear-view of vehicle door according to a preferred embodiment of the disclosure.
FIG. 41 is an exploded view of the vehicle door.
FIG. 42 is an enlarged view of part E in FIG. 41.
FIG. 43 is a schematic view of connection between a vehicle door lock and frame of the vehicle according to a preferred embodiment of the disclosure.

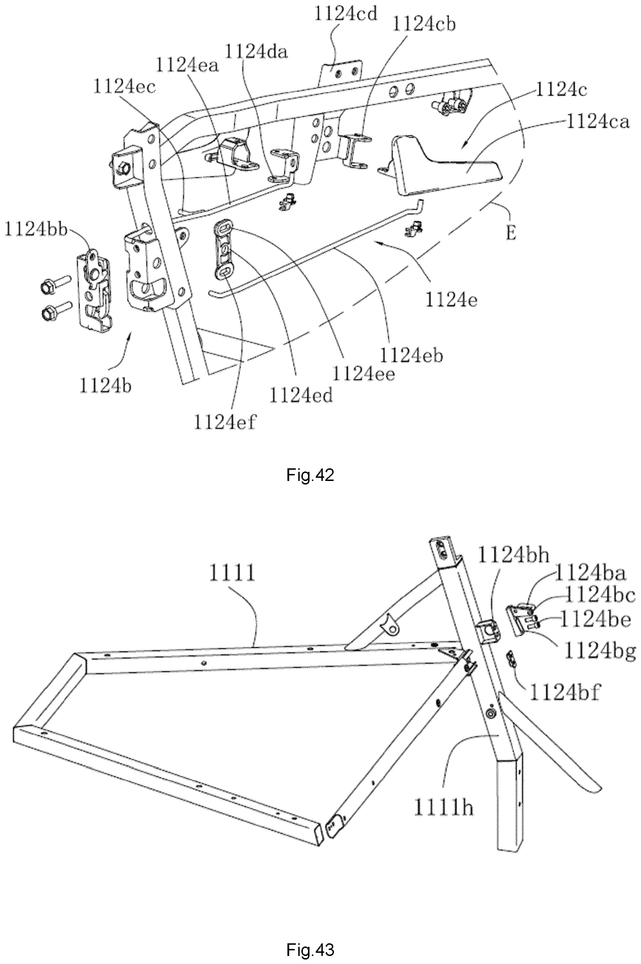

FIG. 43 is a schematic view of connection between the vehicle door and frame of the vehicle according to a preferred embodiment of the disclosure.

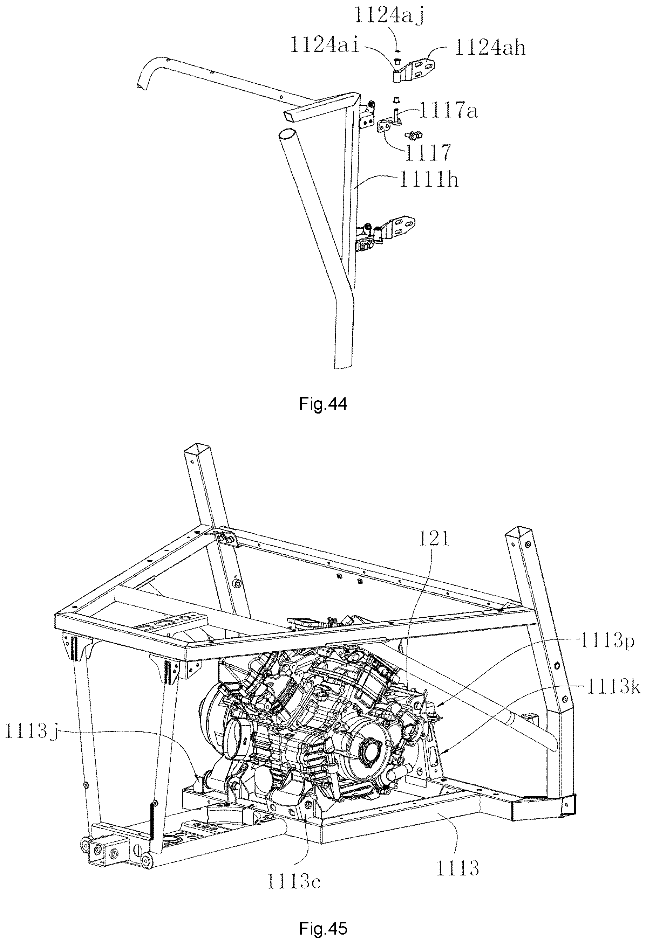

FIG. 45 is a front perspective view of connection between a prime mover assembly lock and frame of the vehicle according to a preferred embodiment of the disclosure.

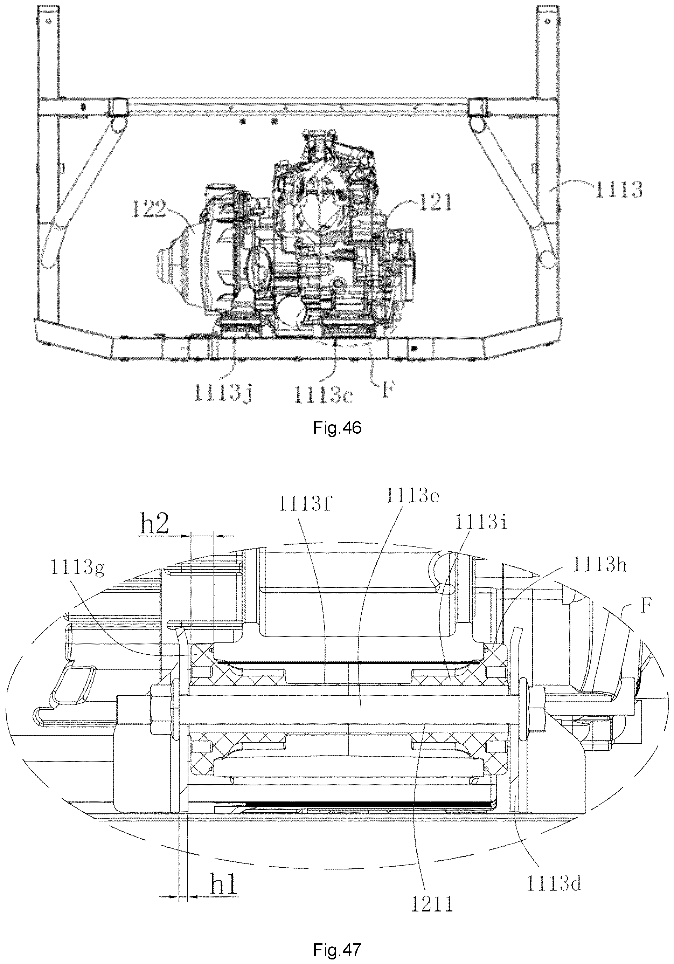

FIG. 46 is a cross-sectional view of the prime mover assembly.
FIG. 47 is an enlarged view of part F in FIG. 46.

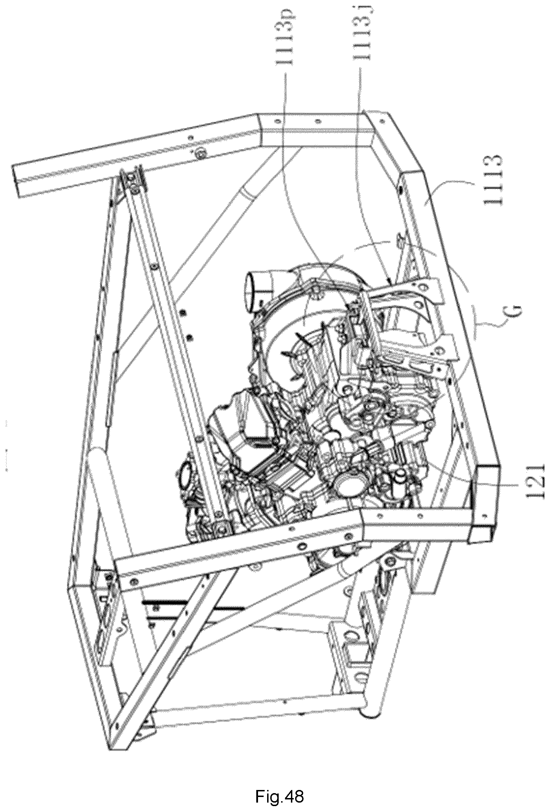

FIG. 48 is a rear perspective view of connection between a prime mover assembly lock and frame of the vehicle according to a preferred embodiment of the disclosure.

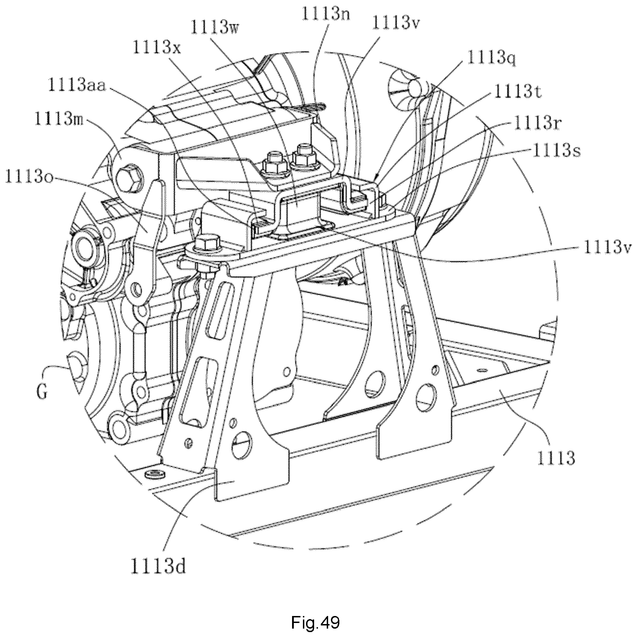

FIG. 49 is an enlarged view of part G in FIG. 48.

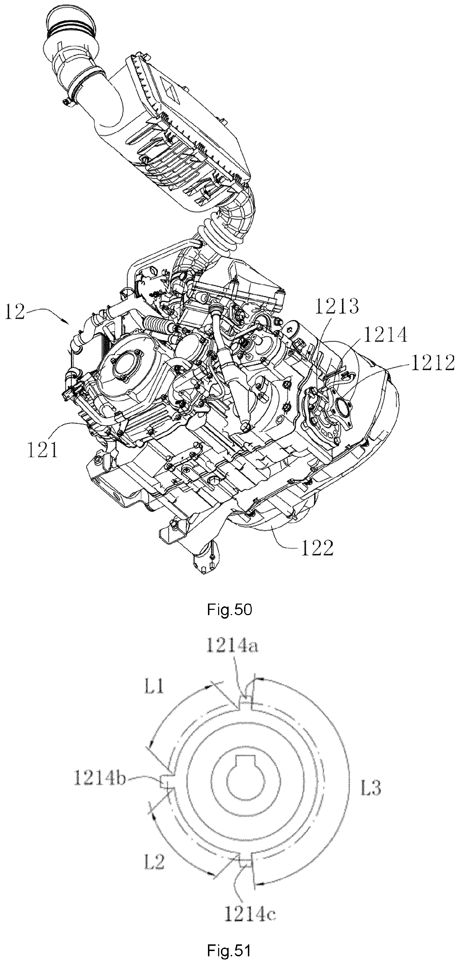

FIG. 50 is schematic view of the prime mover assembly according to a preferred embodiment of the disclosure.
FIG. 51 is a schematic view of a gear according to a preferred embodiment of the disclosure.

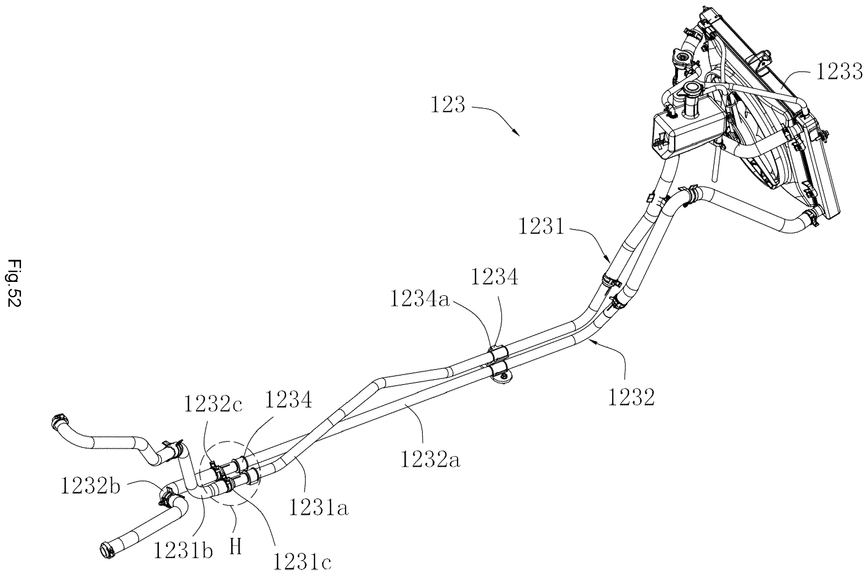

FIG. 52 is a schematic view of a cooling device according to a preferred embodiment of the disclosure.

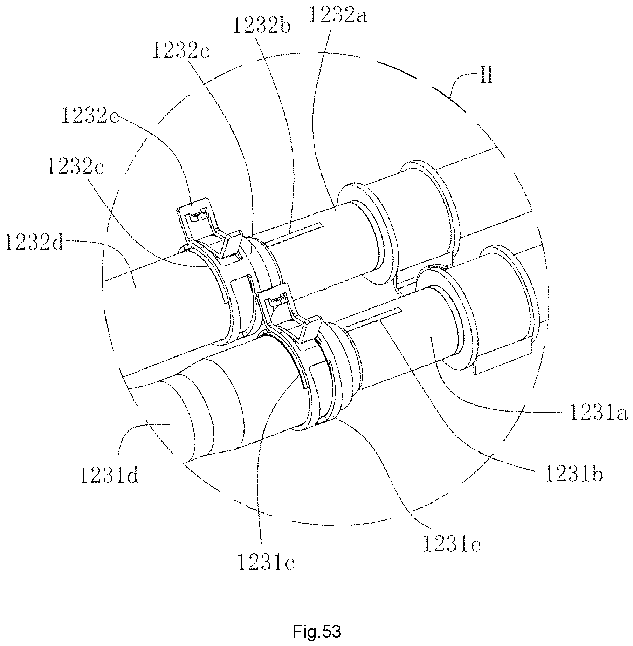

FIG. 53 is an enlarged view of part A in FIG. 52.

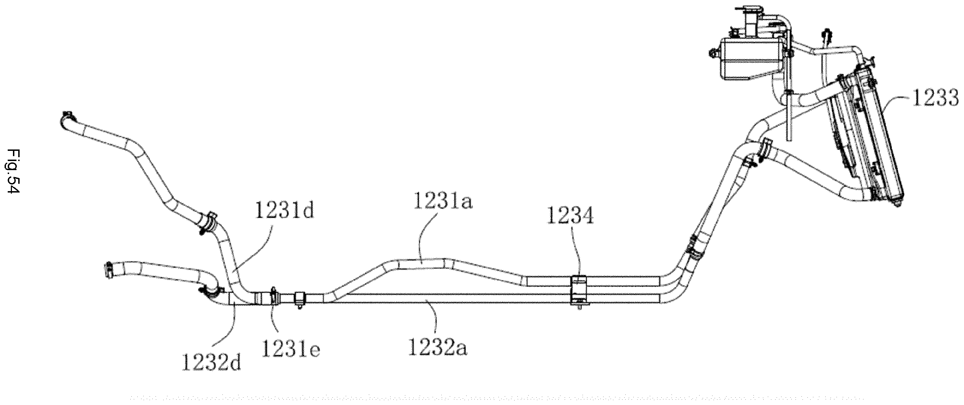

FIG. 54 is side view of the cooling device.

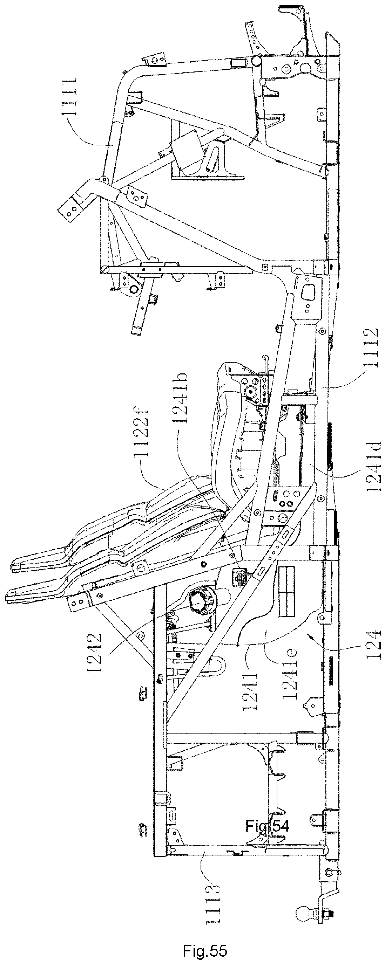

FIG. 55 is a side view of a fuel supply system according to a preferred embodiment of the disclosure.

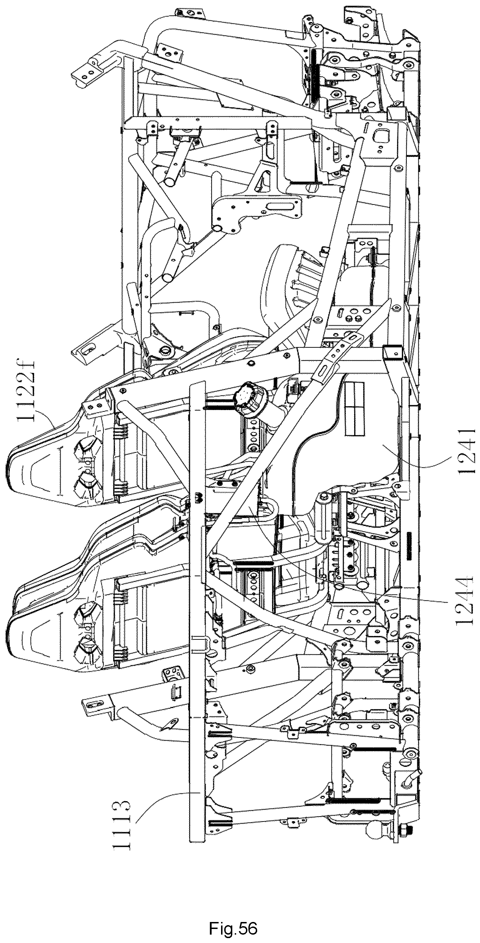

FIG. 56 is a rear-view of a fuel supply system according to an embodiment of the disclosure.

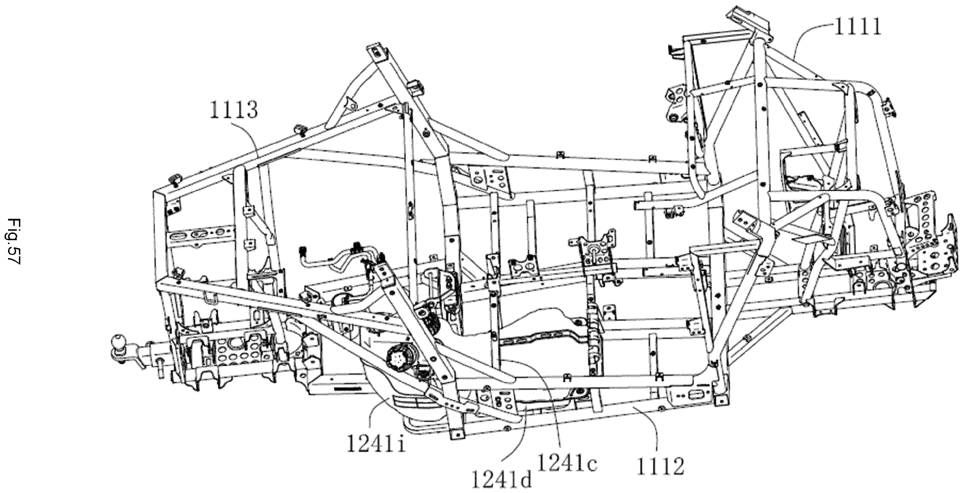

FIG. 57 is a top view of a fuel supply system according to an embodiment of the disclosure.

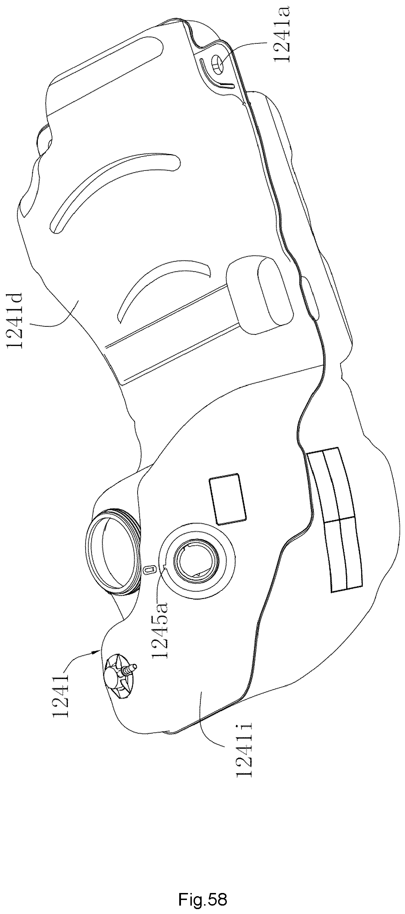

FIG. 58 is a schematic view of a fuel tank according to a preferred embodiment of the disclosure.

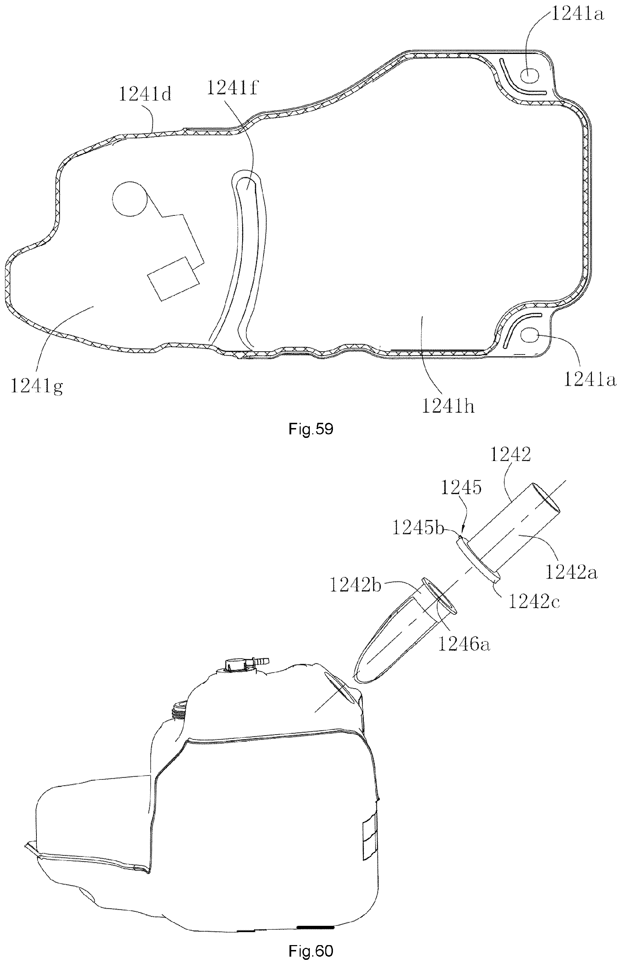

FIG. 59 is a cross-sectional view of the fuel tank according to an embodiment of the disclosure.
FIG. 60 is an exploded view of the fuel supply system of vehicle.

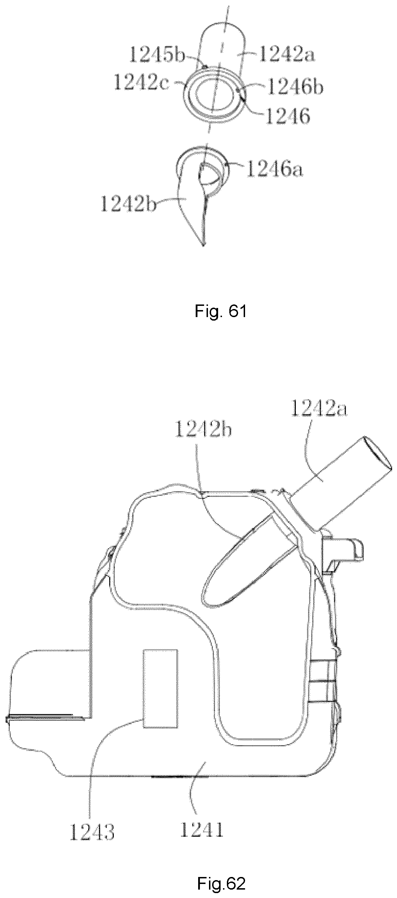

FIG. 61 is a schematic view of an oil inlet pipe and an oil outlet pipe according to a preferred embodiment of the disclosure.
FIG. 62 is a side view of the fuel supply system of vehicle.

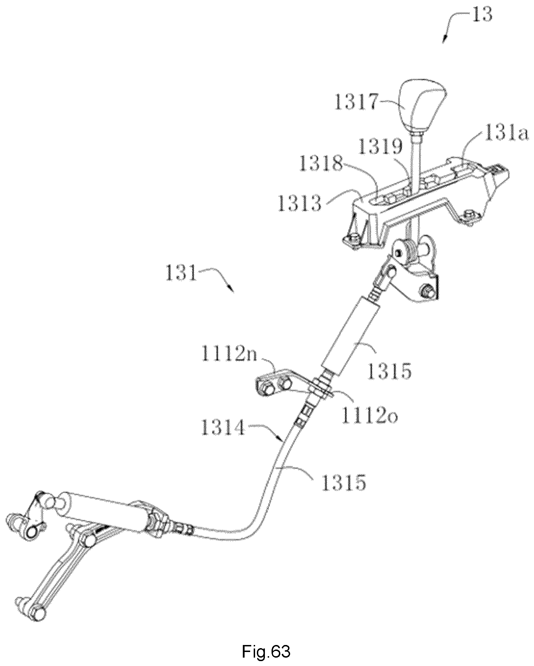

FIG. 63 is a schematic view of a gear selection mechanism according to a preferred embodiment of the disclosure.

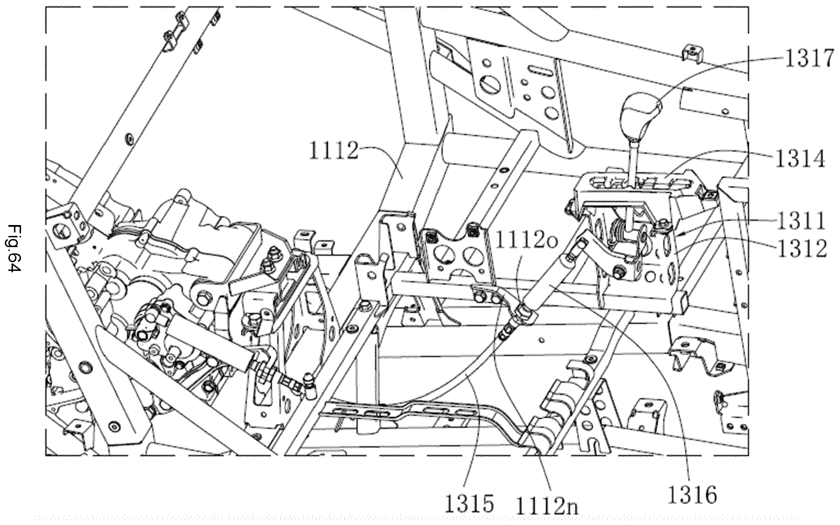

FIG. 64 is a schematic view of a gear selection mechanism mounted on the frame according to a preferred embodiment of the disclosure.

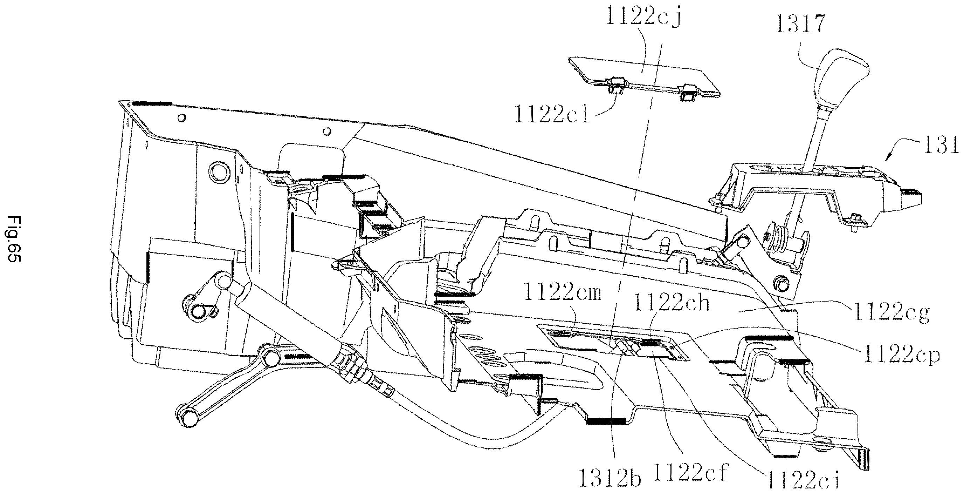

FIG. 65 is a schematic view of relative position relationship between the gear selection mechanism and the bottom plate according to a preferred embodiment of the disclosure.

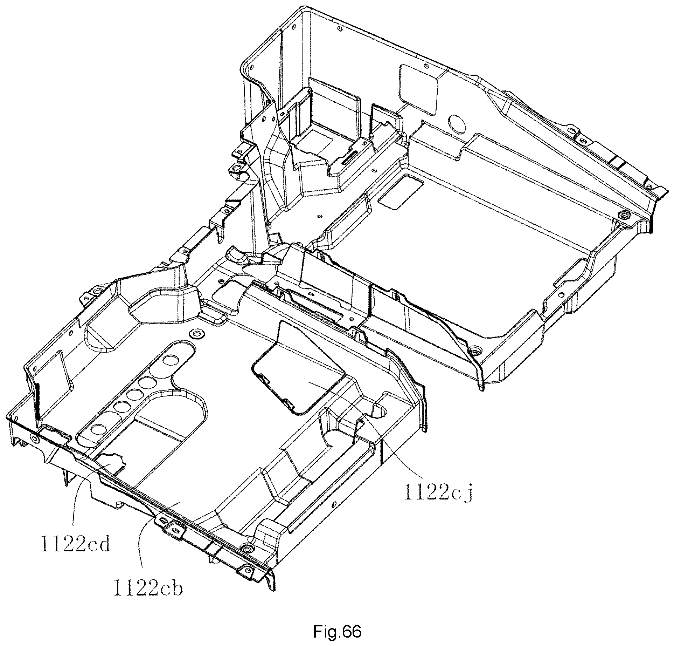

FIG. 66 is a top perspective view of a bottom plate of the vehicle.

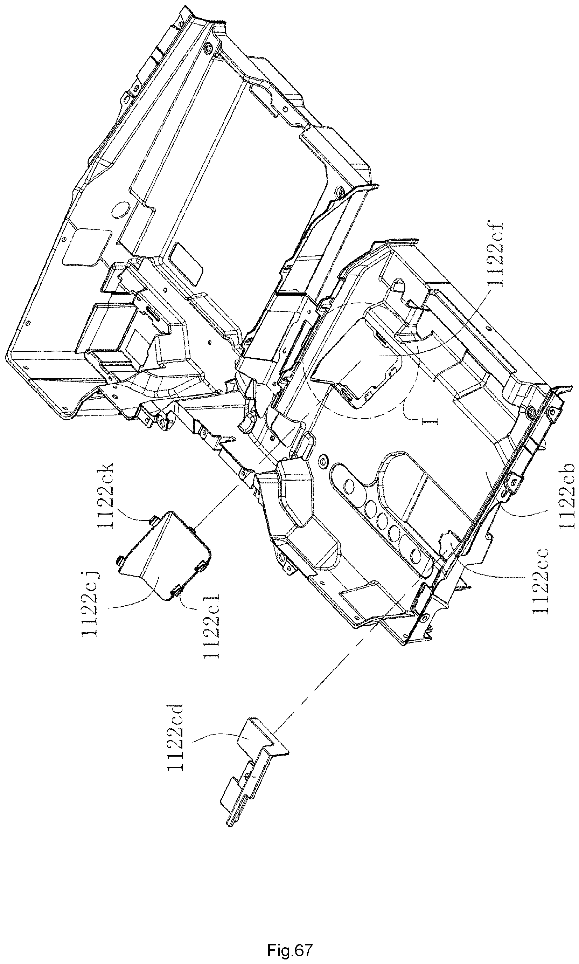

FIG. 67 is an exploded view of the bottom plate of FIG. 66.

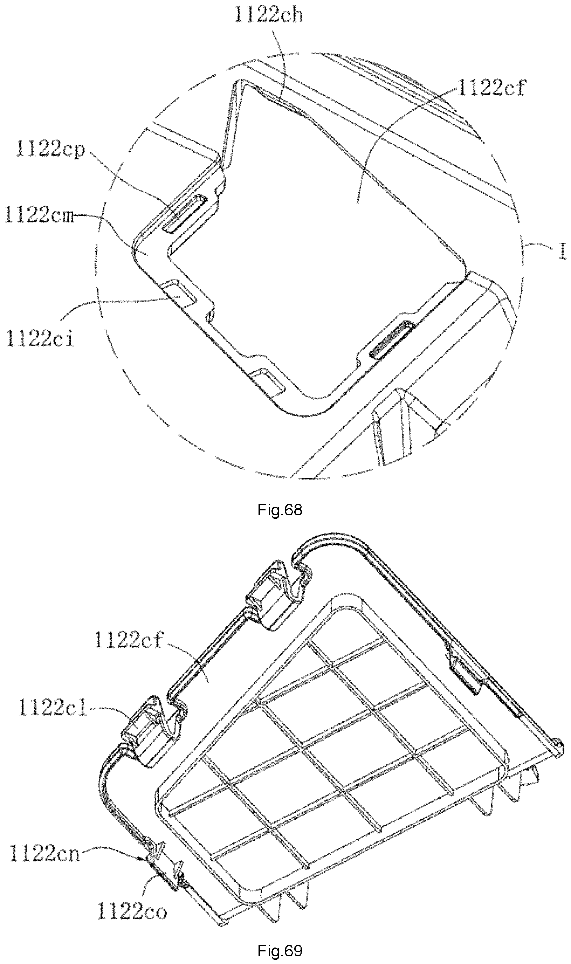

FIG. 68 is an enlarged view of part I in FIG. 67.
FIG. 69 is a schematic view of the structure of a fourth cover plate according to a preferred embodiment of the disclosure.

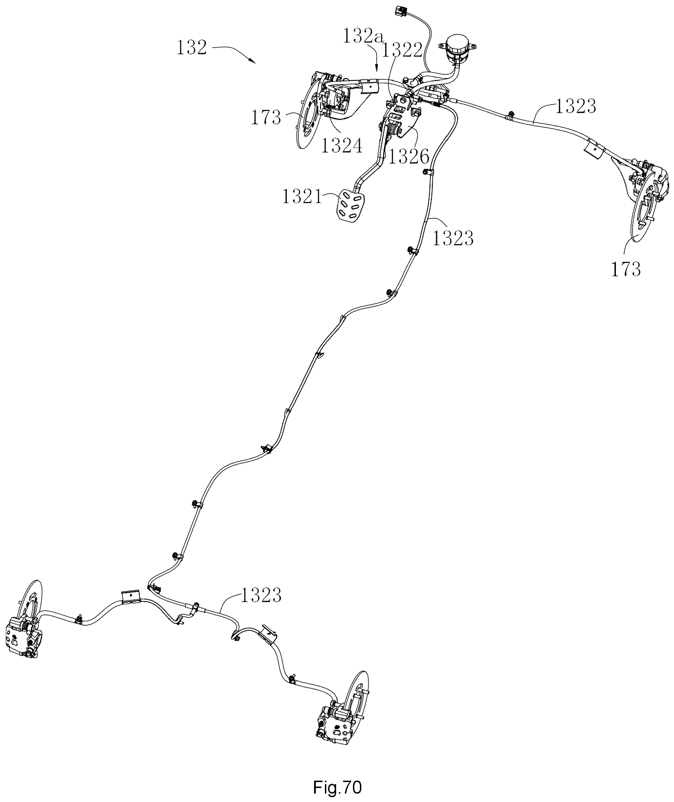

FIG. 70 is a schematic view of a brake assembly according to a preferred embodiment of the disclosure.

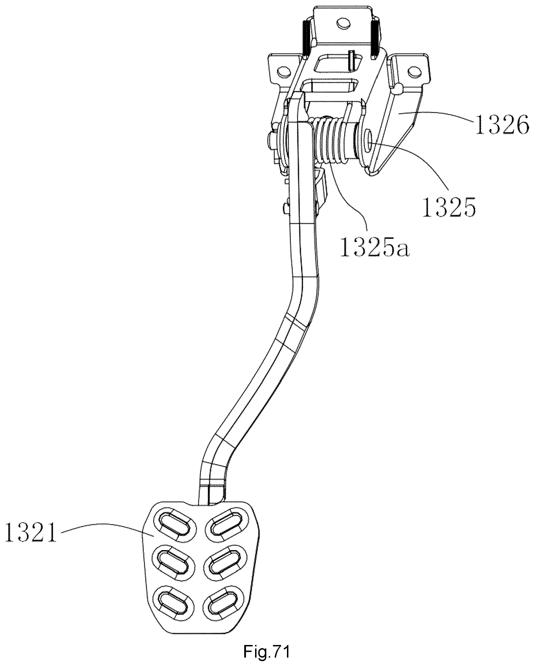

FIG. 71 is a schematic view of a pedal-operated brake portion according to a preferred embodiment of the disclosure.

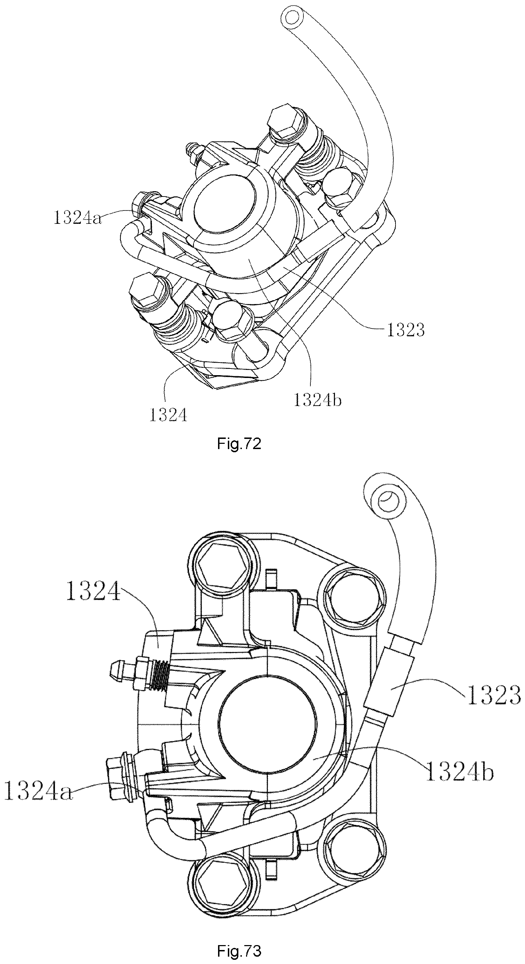

FIG. 72 is a top perspective view of a brake caliper according to a preferred embodiment of the disclosure.
FIG. 73 is a top view of the brake caliper according to an embodiment of the disclosure.

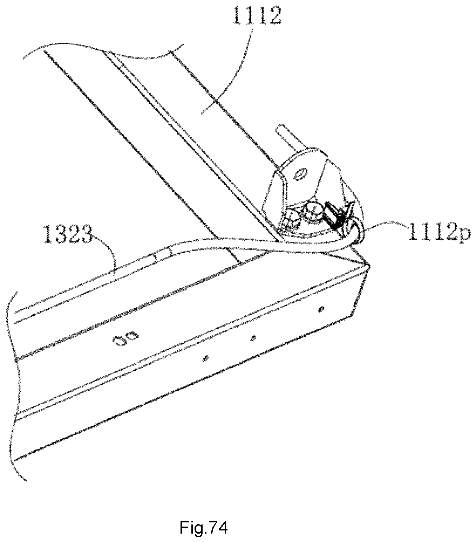

FIG. 74 is a schematic view of mounting of a brake line according to a preferred embodiment of the disclosure.

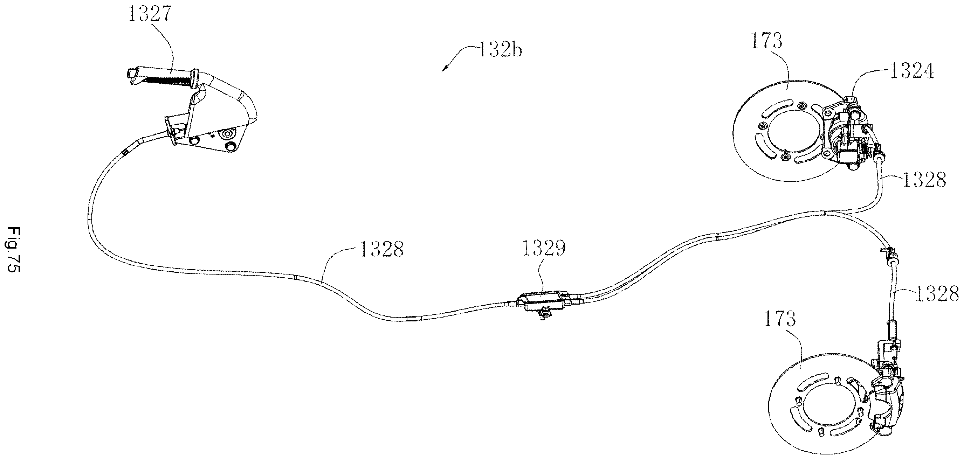

FIG. 75 is a schematic view of a hand-operated brake portion according to a preferred embodiment of the disclosure.

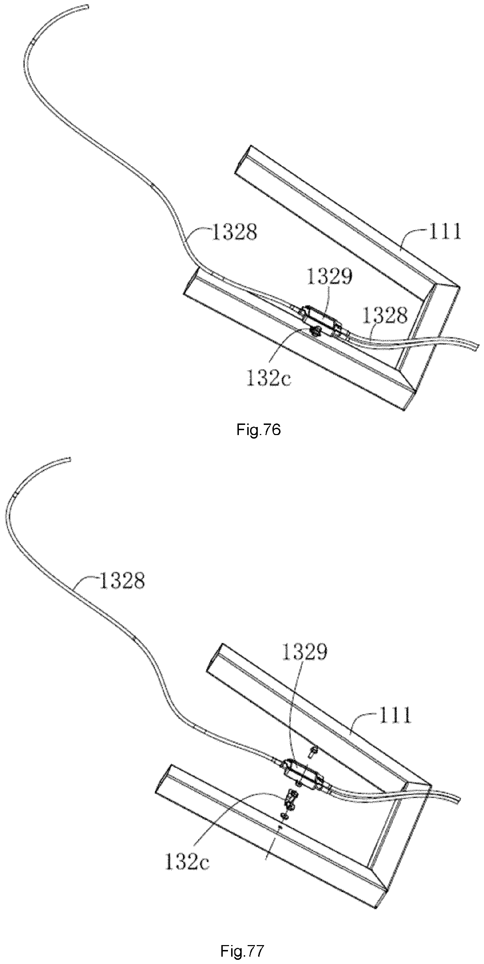

FIG. 76 is a schematic view of a distribution box mounted on the frame.
FIG. 77 is an exploded view of FIG. 76.

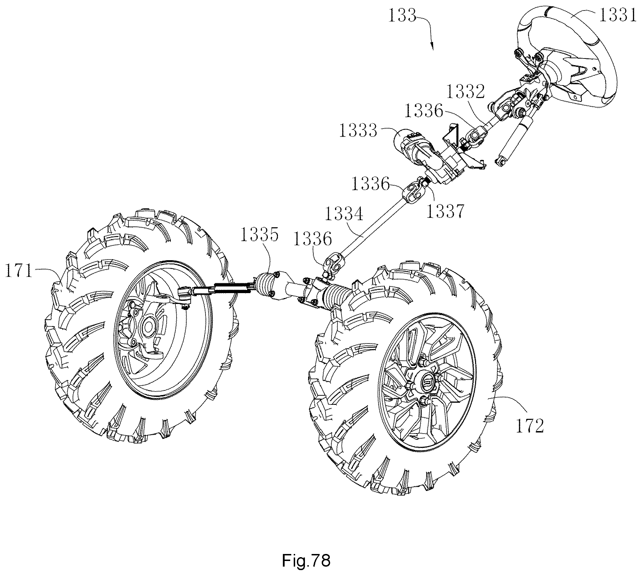

FIG. 78 is a schematic view of steering mechanism according to a preferred embodiment of the disclosure.

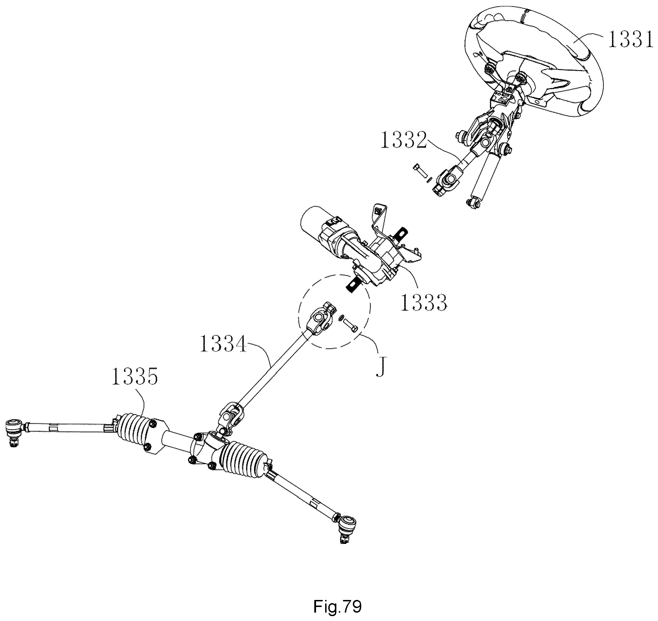

FIG. 79 is an exploded view of the steering mechanism.

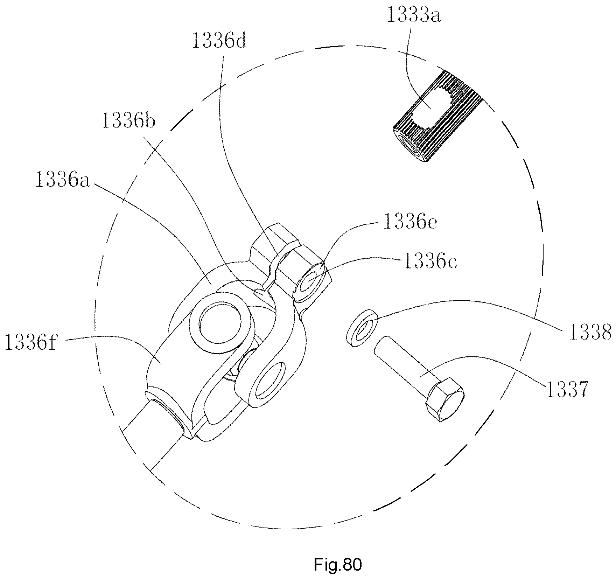

FIG. 80 is an enlarged view of part J in FIG. 79.

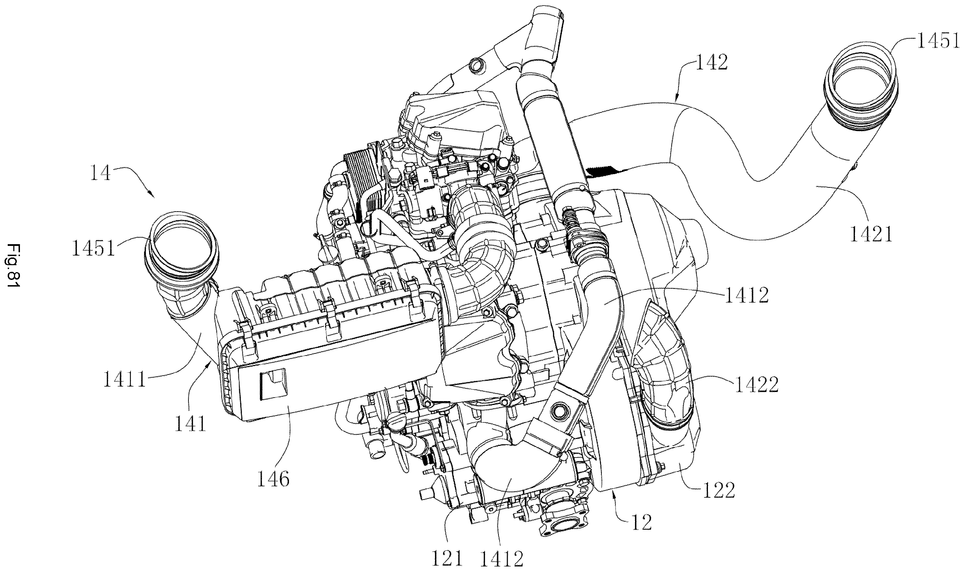

FIG. 81 is top view of the prime mover assembly according to a preferred embodiment of the disclosure.

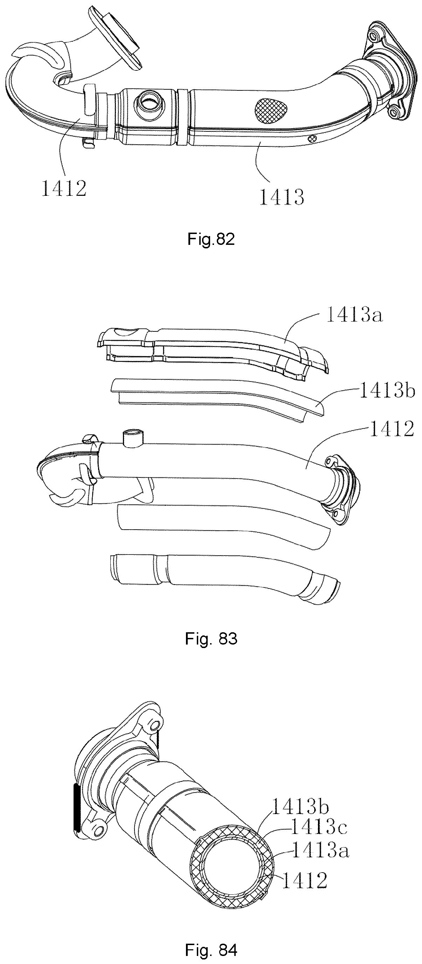

FIG. 82 is a schematic view of a first exhaust manifold of the prime mover assembly.
FIG. 83 is an exploded view of the first exhaust manifold.
FIG. 84 is a cross-sectional view of the first exhaust manifold.

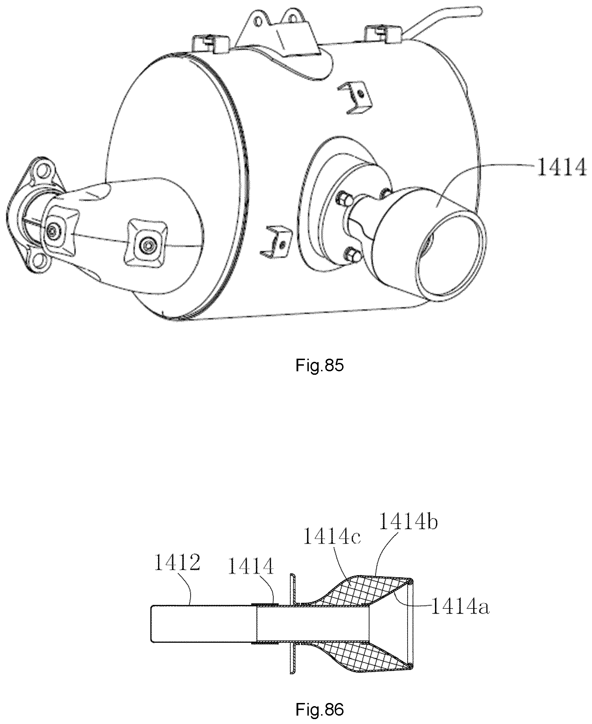

FIG. 85 is a schematic view of a tail pipe of the prime mover assembly.
FIG. 86 is a cross-sectional view of the tail pipe of the prime mover assembly.

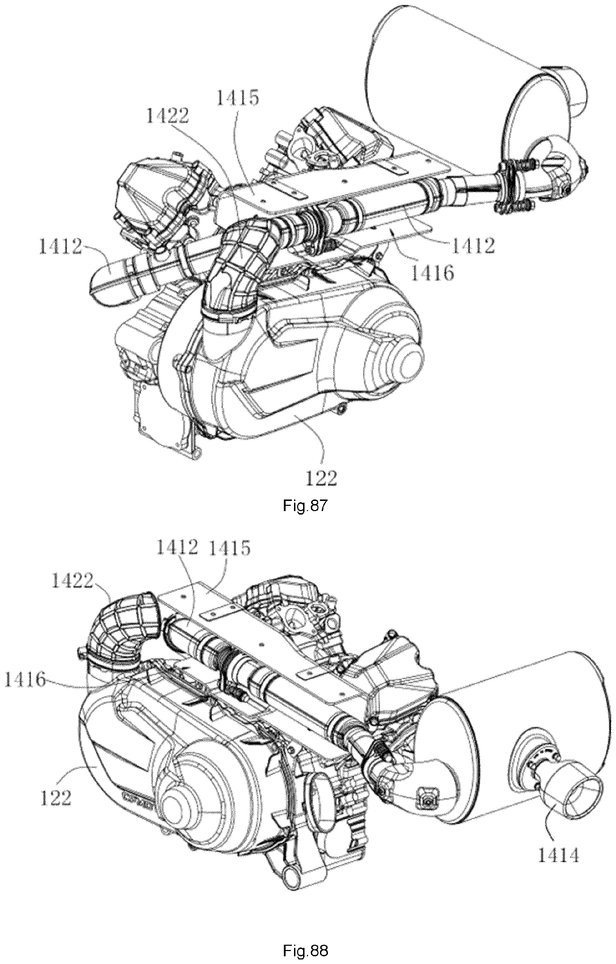

FIG. 87 is a schematic view showing the positions of the second exhaust manifold and the first exhaust manifold according to a preferred embodiment of the disclosure.
FIG. 88 is another schematic view showing the positions of the second exhaust manifold and the first exhaust manifold according to a preferred embodiment of the disclosure.

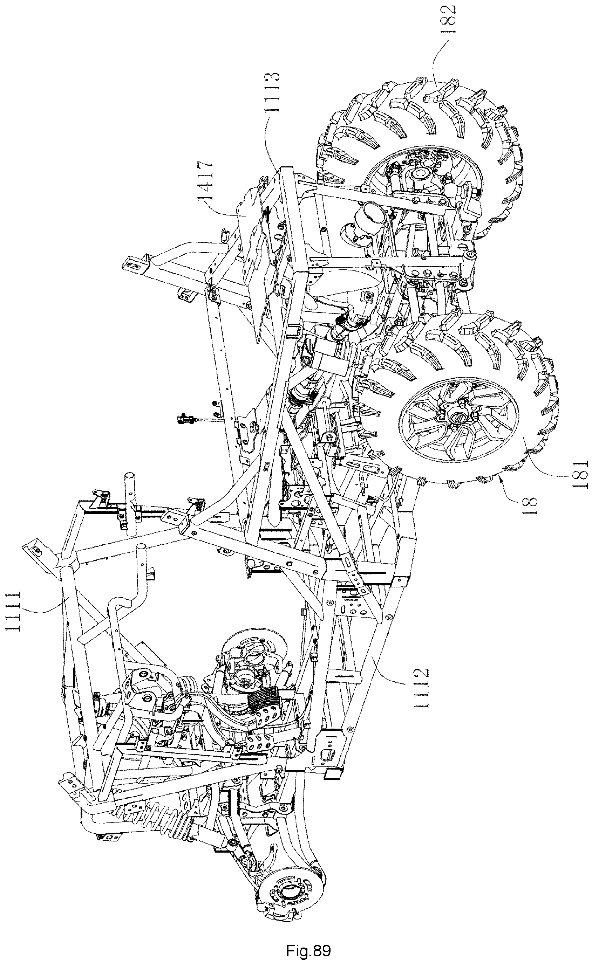

FIG. 89 is a schematic view of the structure of a insulation plate according to a preferred embodiment of the disclosure.

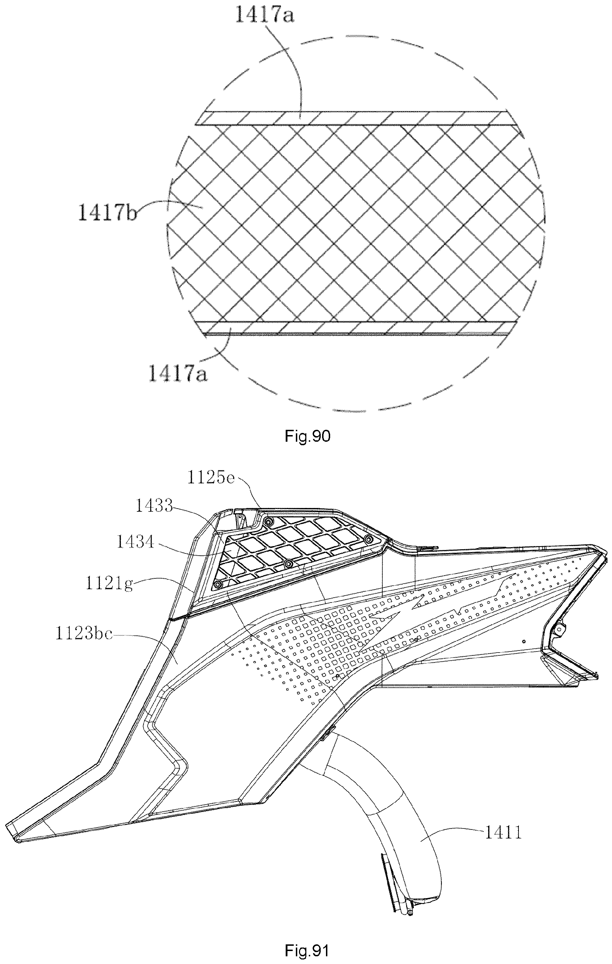

FIG. 90 is a local cross-sectional view of the insulation plate.
FIG. 91 is a schematic view of structure of the vehicle cover according to a preferred embodiment of the disclosure.

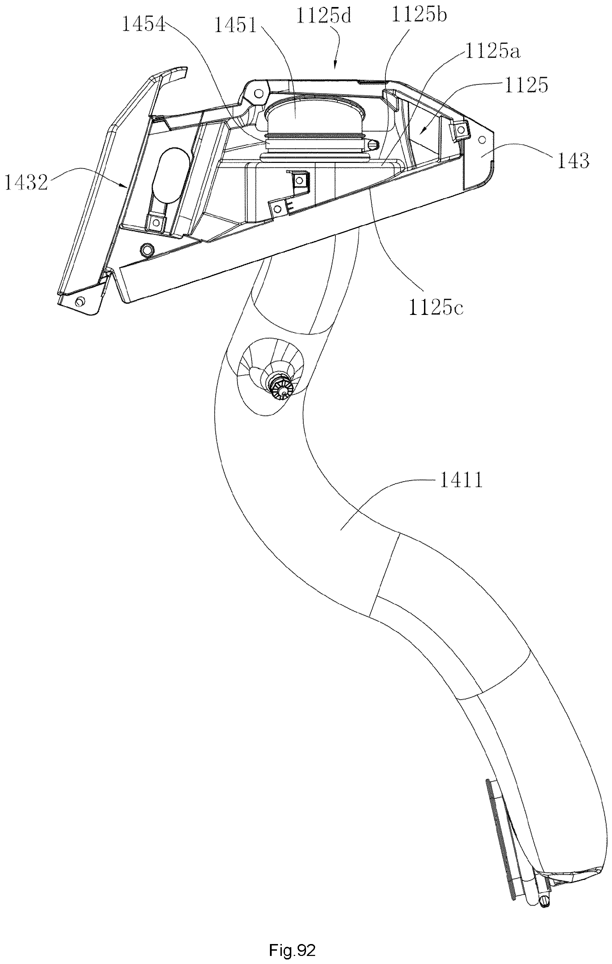

FIG. 92 is a schematic view showing connection between a intake seat and the first intake manifold.

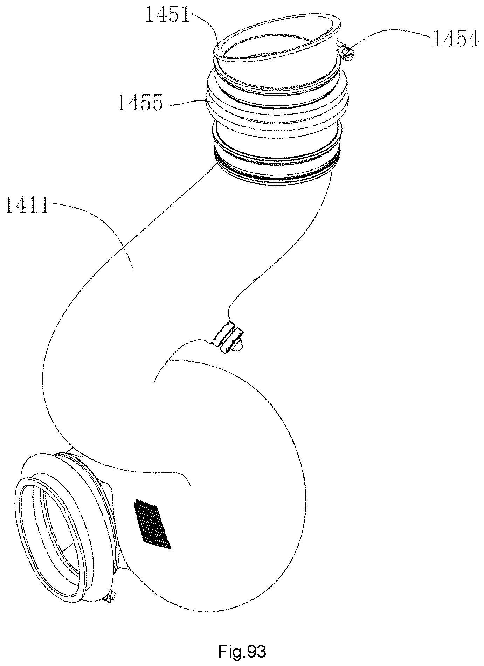

FIG. 93 is a schematic view of the first intake manifold.

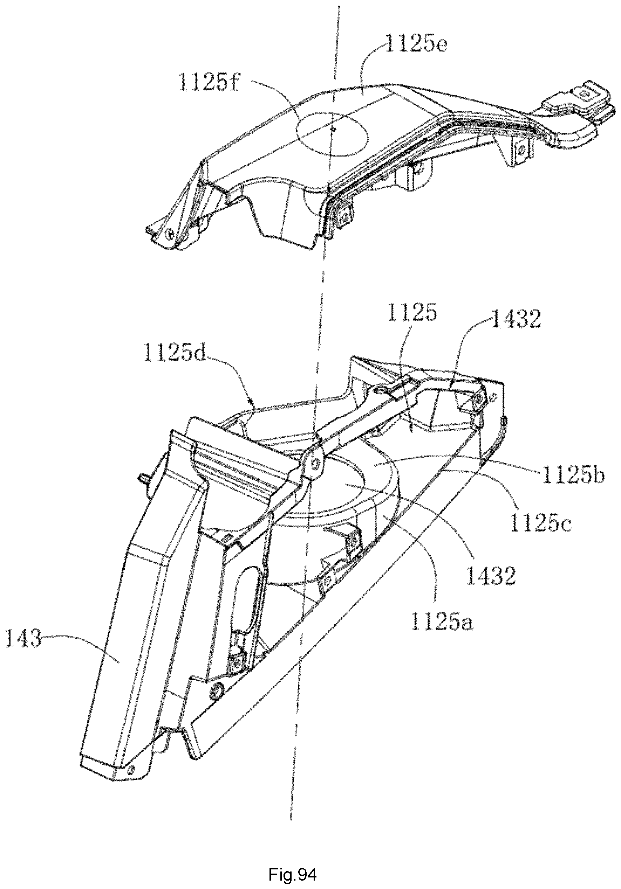

FIG. 94 is an exploded view of the intake seat.

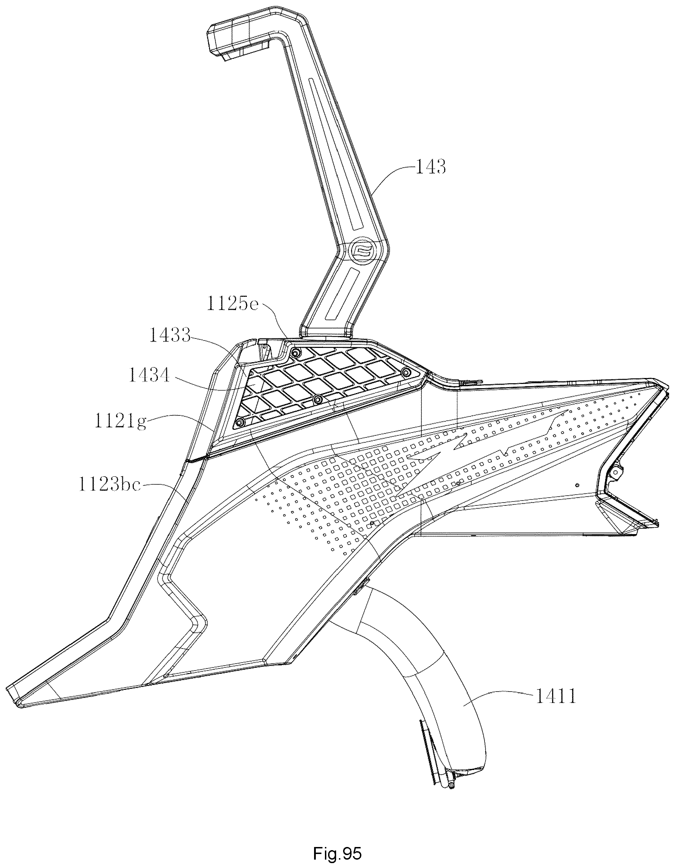

FIG. 95 is a schematic view of an elevated intake manifold connected to the vehicle cover according to a preferred embodiment of the disclosure.

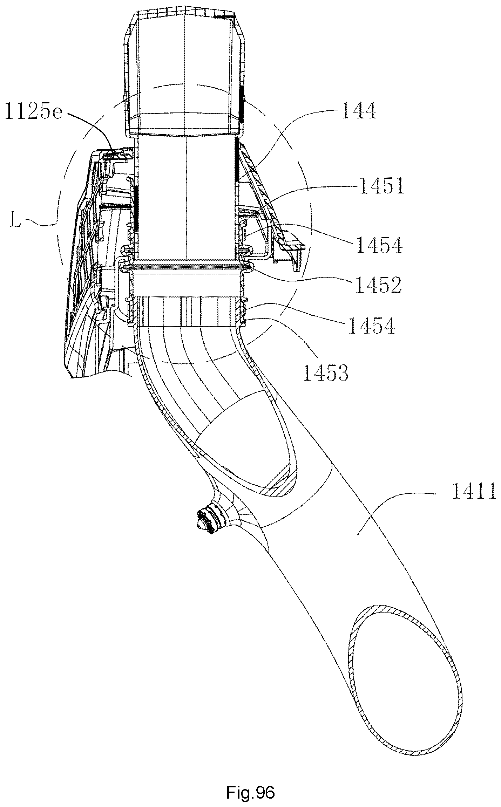

FIG. 96 is a cross-sectional view showing connection between a intake seat and the elevated intake manifold

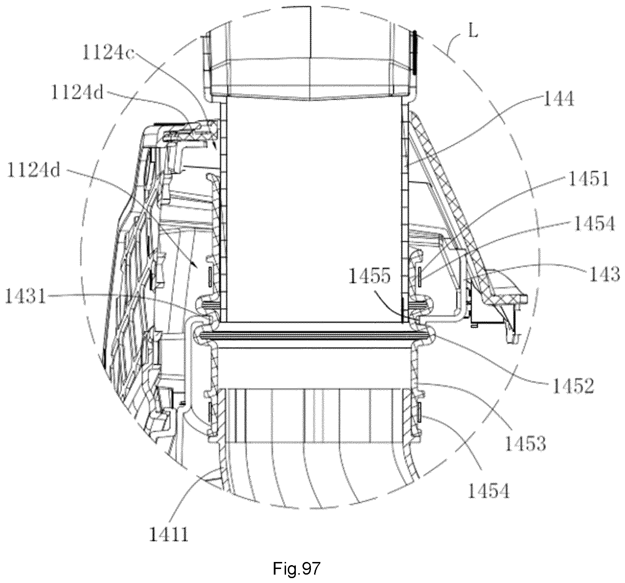

FIG. 97 is an enlarged view of part L in FIG. 96.

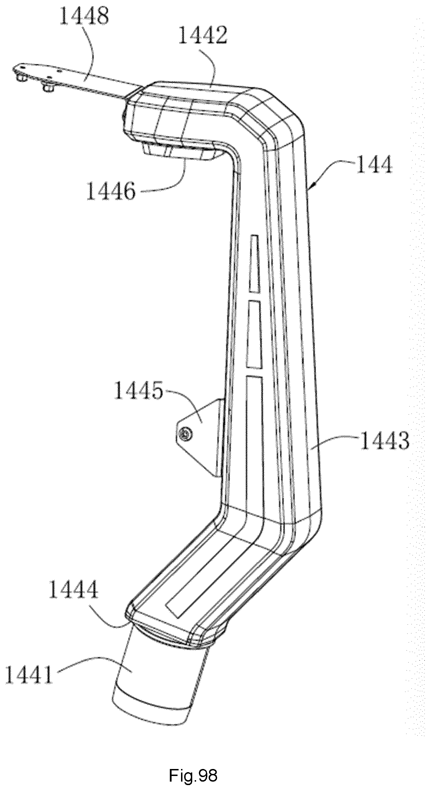

FIG. 98 is a perspective view of the elevated intake manifold.

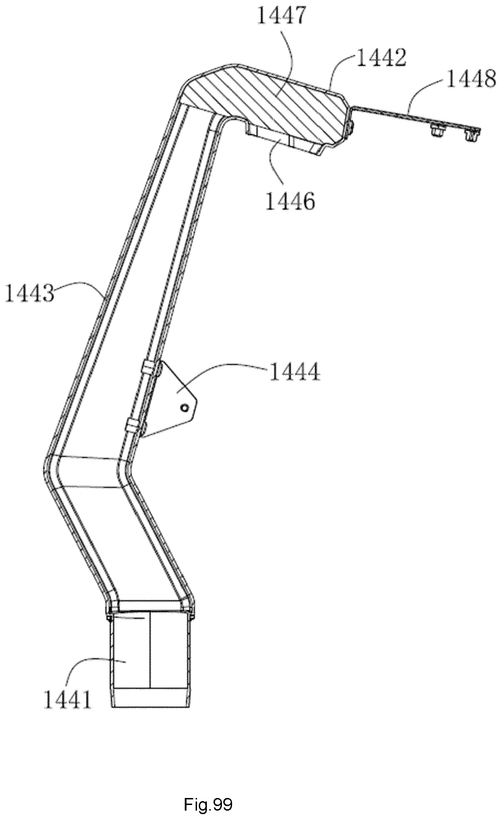

FIG. 99 is a cross-sectional view of the elevated intake manifold.

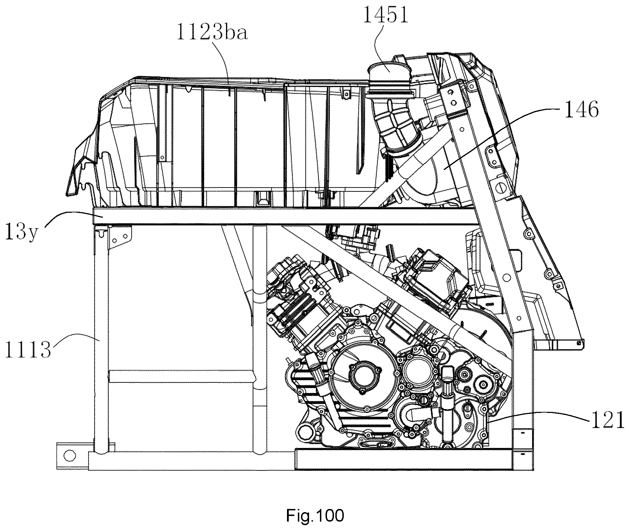

FIG. 100 is a side view showing an air filter mounted on the frame according to a preferred embodiment of the disclosure.

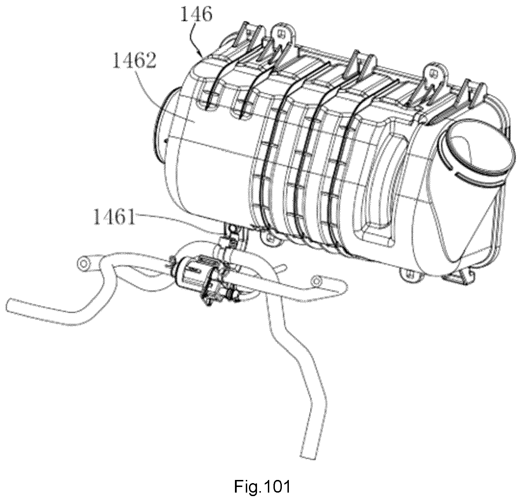

FIG. 101 is a schematic view of the air filter.

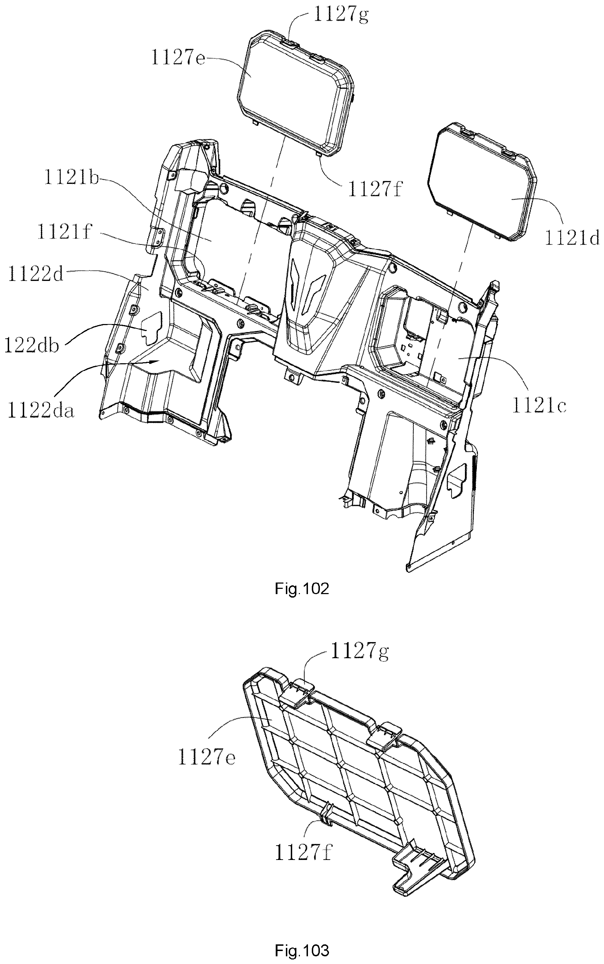

FIG. 102 is an exploded view of a rear baffle according to a preferred embodiment of the disclosure.
FIG. 103 is a schematic view of the structure of a second cover plate according to a preferred embodiment of the disclosure.

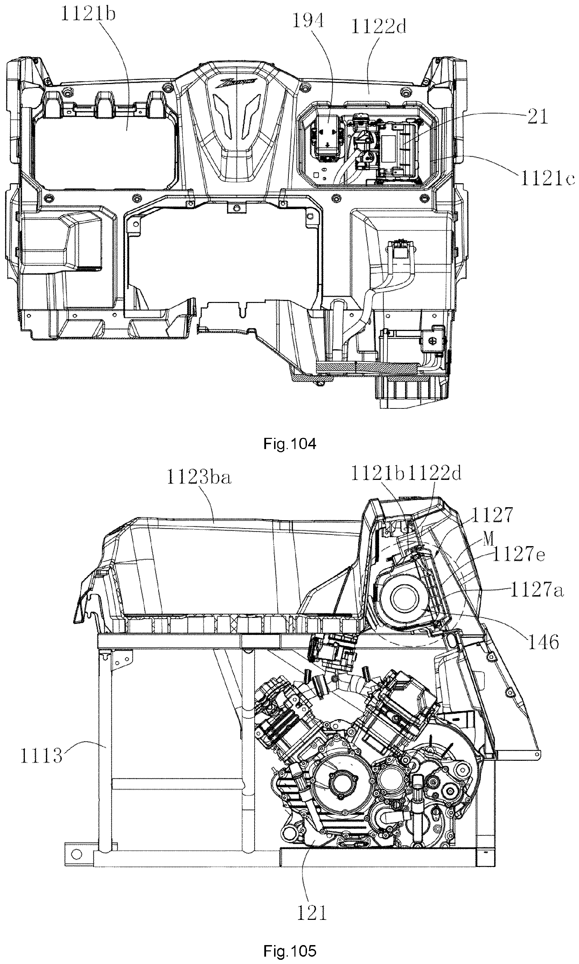

FIG. 104 is a schematic view showing the relative position relationship between the rear baffle and the electrical control unit.
FIG. 105 is an exploded view of a part of FIG. 100.

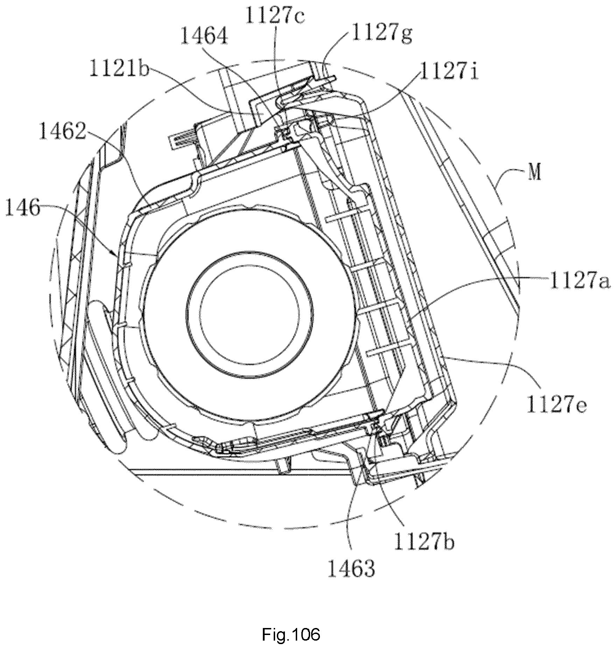

FIG. 106 is an enlarged view of part M in FIG. 105.

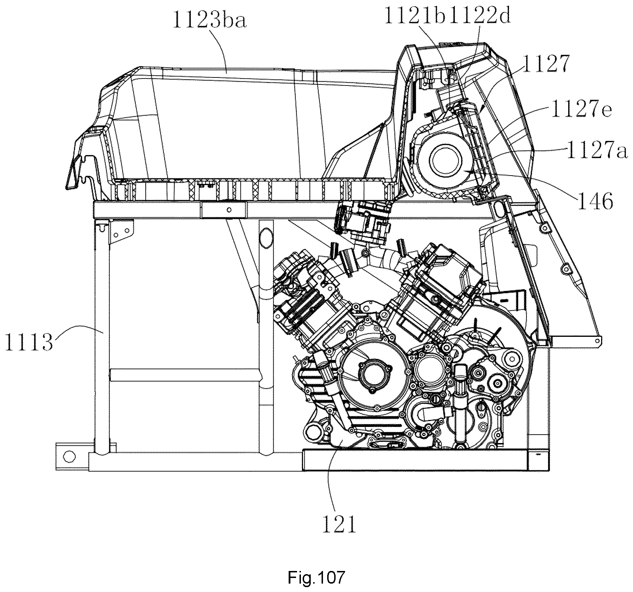

FIG. 107 is an exploded view of another part of FIG. 100.

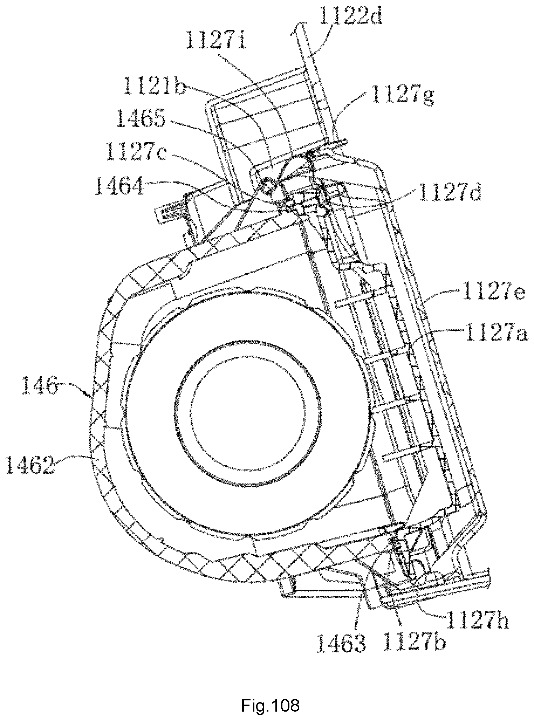

FIG. 108 is an local enlarged view of the air filter of FIG. 107.

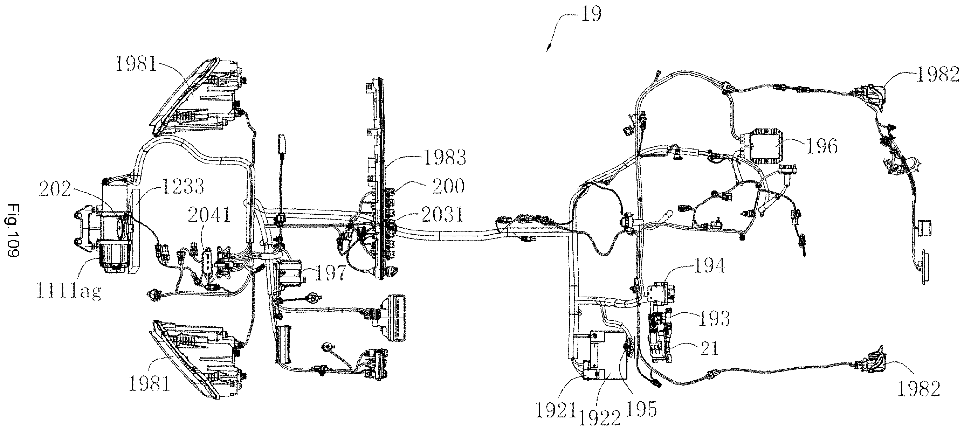

FIG. 109 is schematic view showing an overall arrangement of electrical assembly.

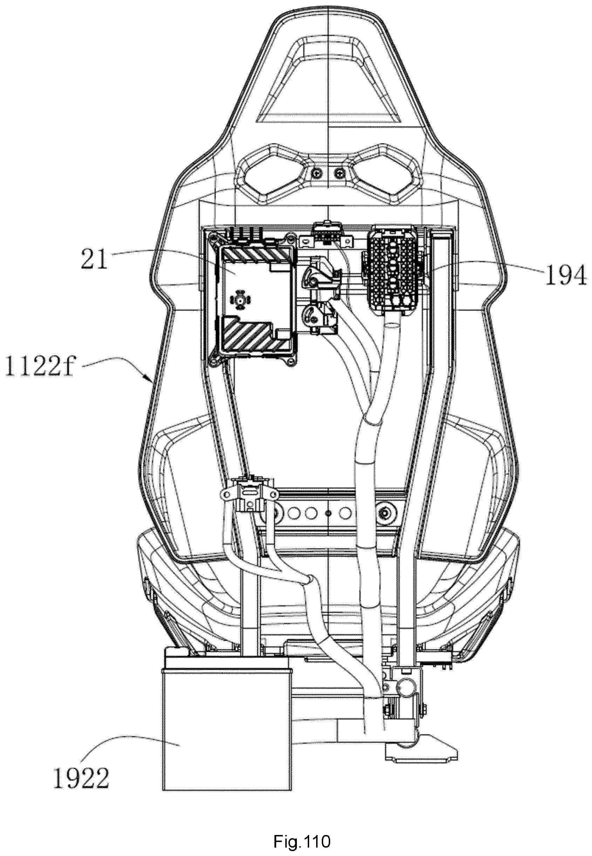

FIG. 110 is a schematic view showing the relative position relationship between the electrical control unit and the seats.

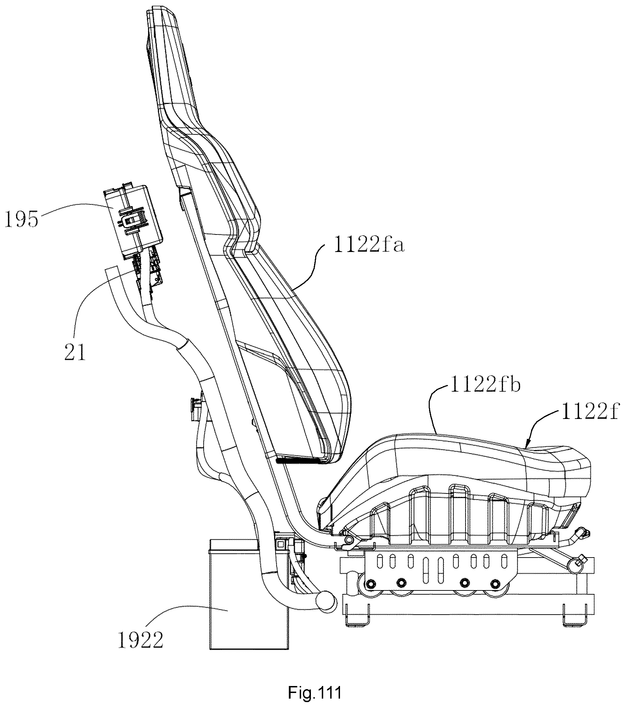

FIG. 111 is another schematic view showing the relative position relationship between the electrical control unit and the seats.

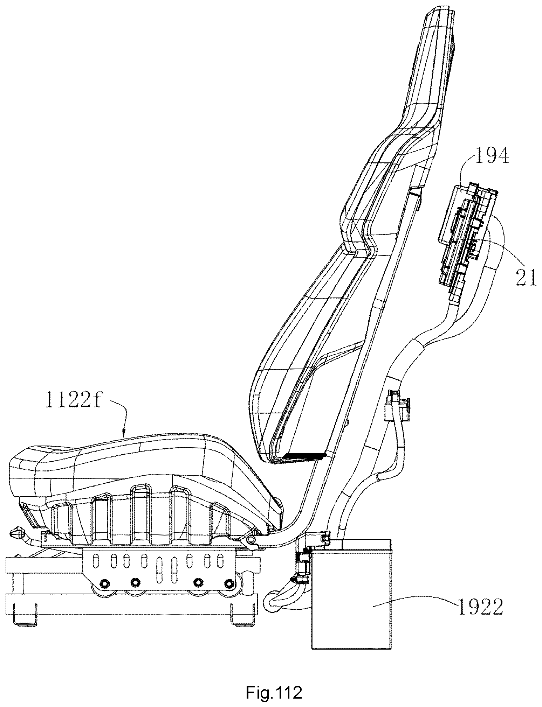

FIG. 112 is a yet schematic view showing the relative position relationship between the electrical control unit and the seats.

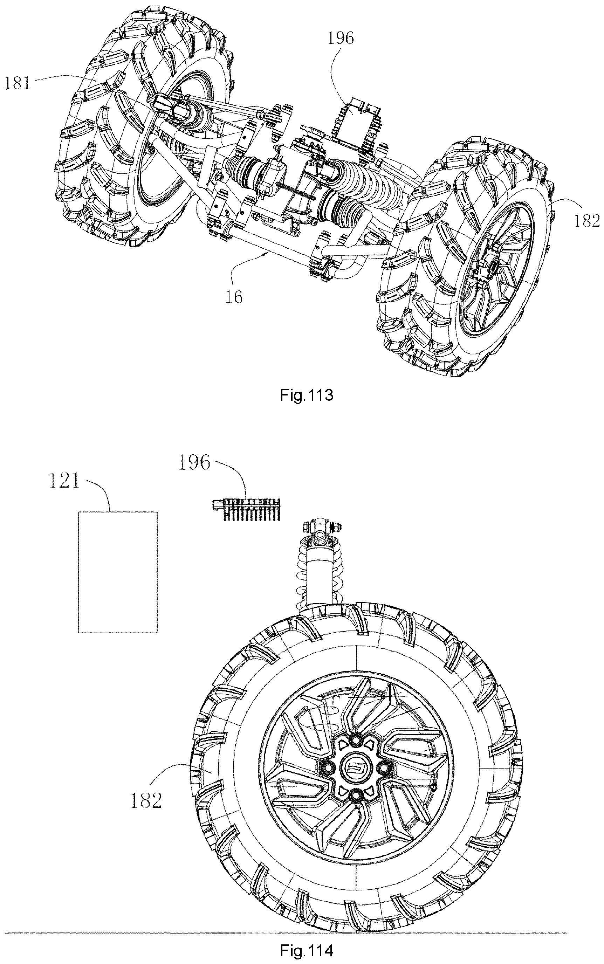

FIG. 113 is a schematic view showing the relative position relationship between a variable voltage rectifier and rear wheels.
FIG. 114 is a schematic view showing the relative position relationship between the variable voltage rectifier and engine.

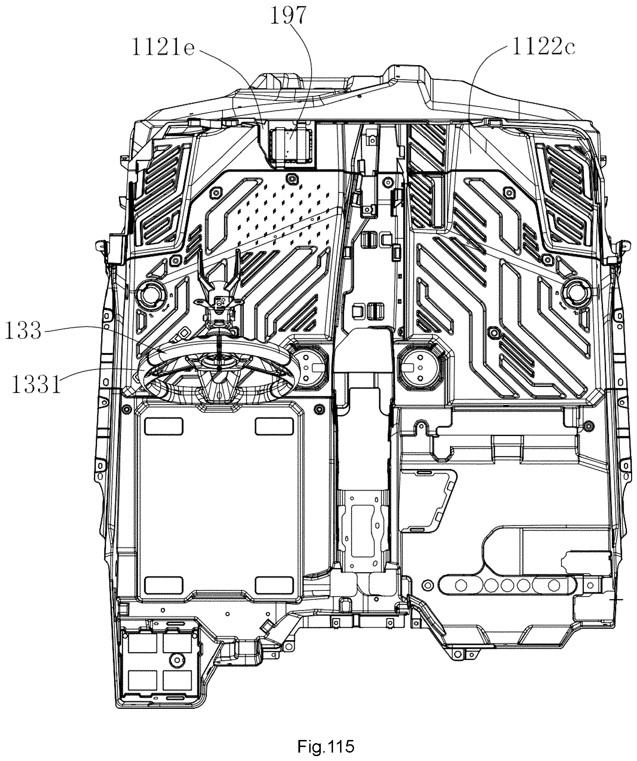

FIG. 115 is a schematic view showing a vehicle-mounted T-BOX arranged on the bottom plate.

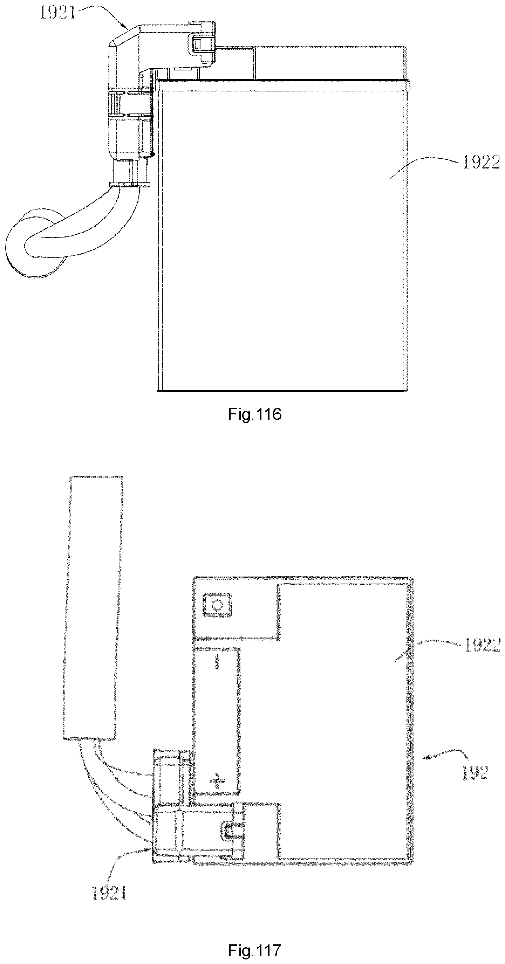

FIG. 116 is a view of battery pack according to a preferred embodiment of the disclosure.
FIG. 117 is another view of the battery pack.

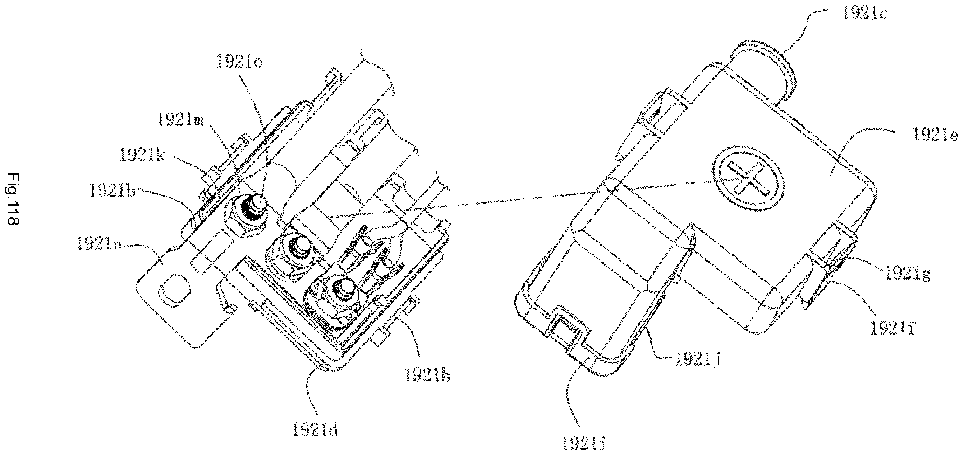

FIG. 118 is an exploded view of a battery pack distribution box.

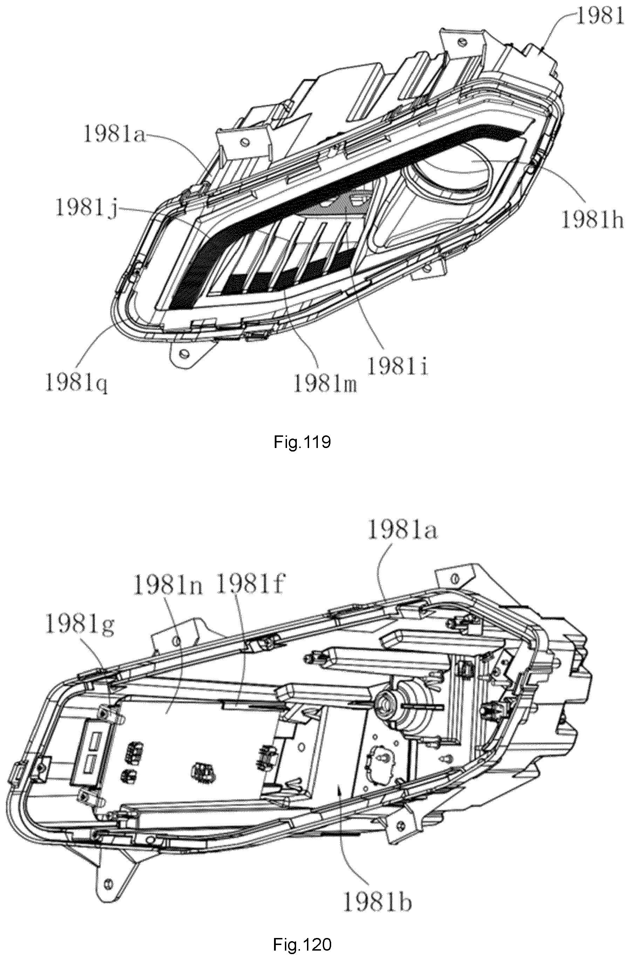

FIG. 119 is a schematic view of a headlight according to a preferred embodiment of the disclosure.
FIG. 120 is a schematic view of a headlight with the light shade removed according to a preferred embodiment of the disclosure.

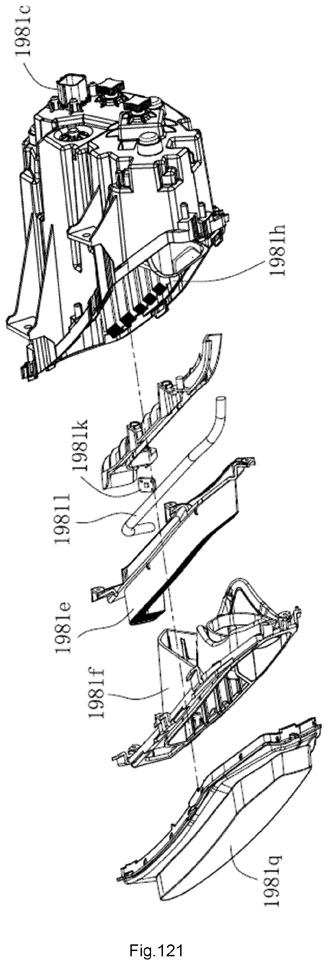

FIG. 121 is an exploded view of the headlight.

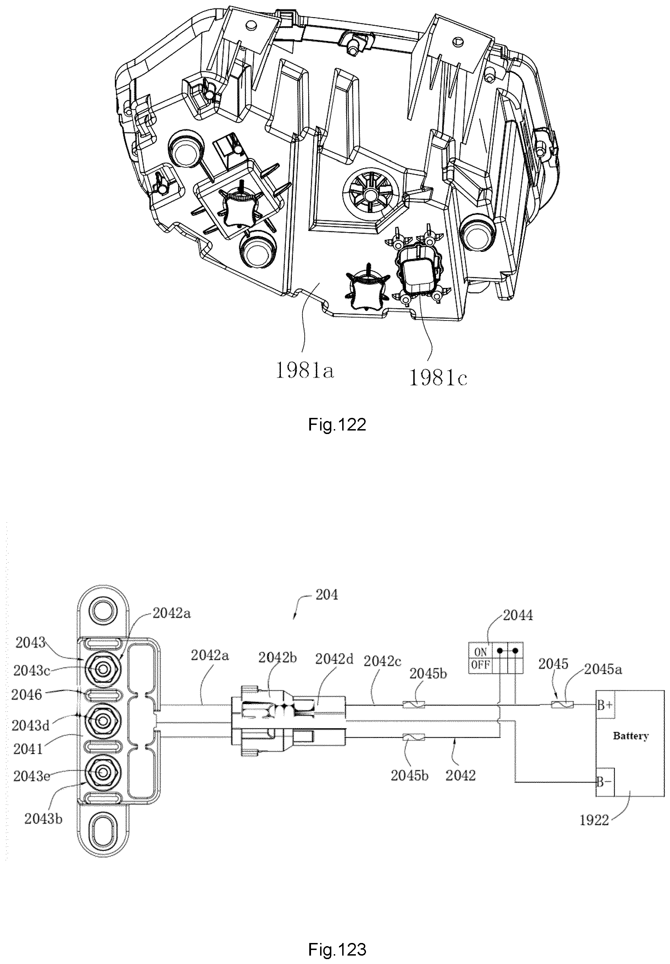

FIG. 122 is another schematic view of the headlight.
FIG. 123 is a schematic view of the electrical terminal assembly.

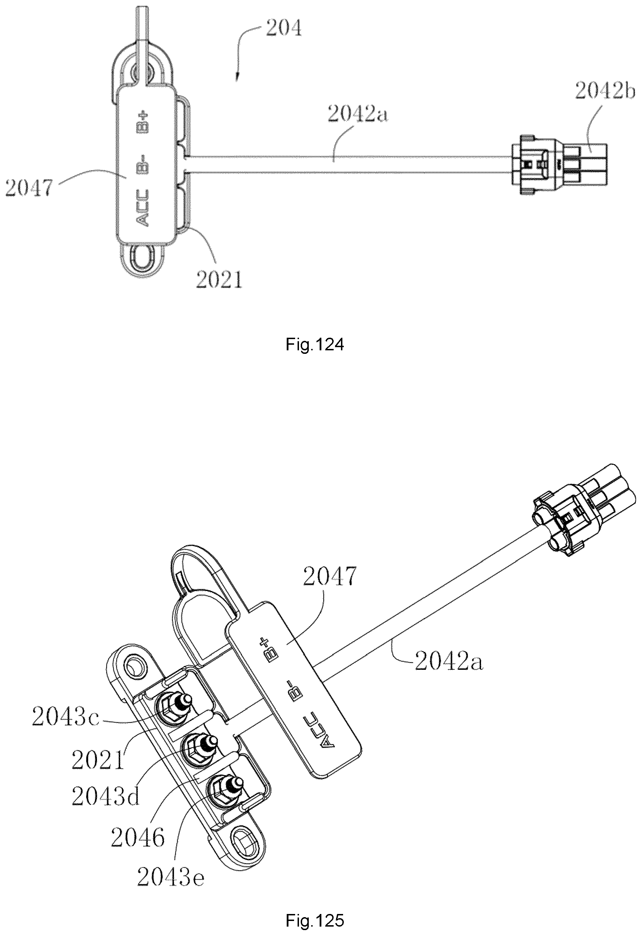

FIG. 124 is a top-view view of the electrical terminal assembly.
FIG. 125 is an exploded view of the electrical terminal assembly.

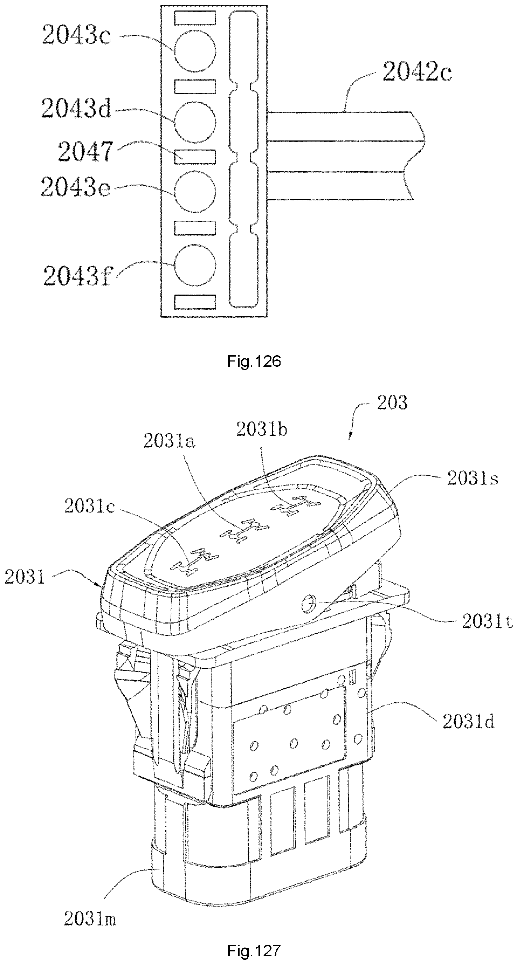

FIG. 126 is a schematic view of an electrical terminal assembly according to other embodiments of the invention.
FIG. 127 is a schematic view of the improved mode switch.

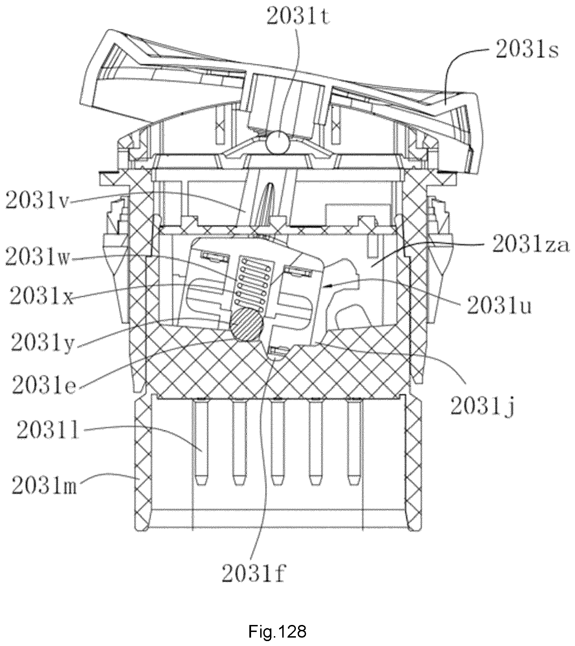

FIG. 128 is a cross-sectional view of the mode switch.

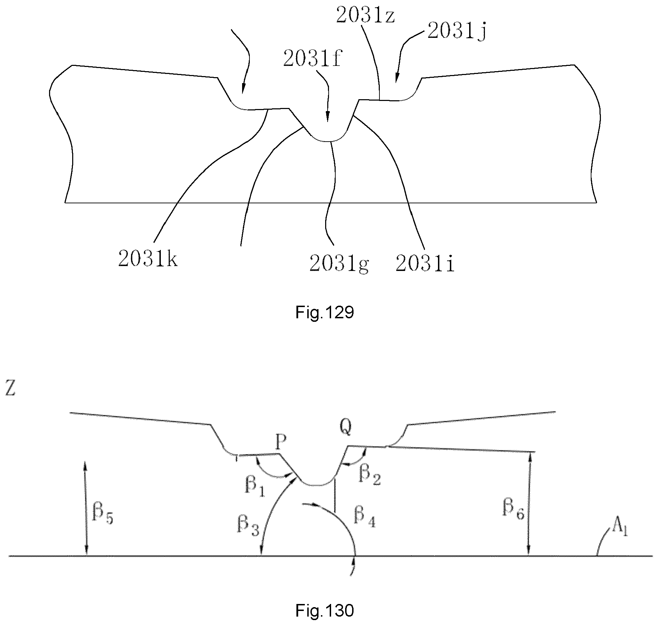

FIG. 129 is a partial enlarged view of the gear position arrangement of the mode switch.
FIG. 130 is a schematic view of the angular relationship between each gear slot.

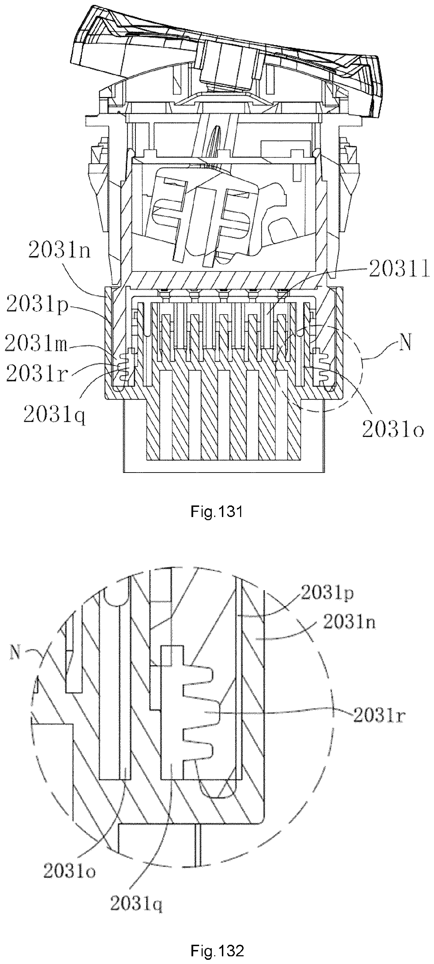

FIG. 131 is a schematic view of the connection between the mode switch and the butt connection socket.
FIG. 132 is an enlarged view of part N in FIG. 131.

### DETAILED DESCRIPTION

For better understanding of the above objects, features and advantages of the present disclosure, the embodiments of the present disclosure will be described in detail below with reference to the accompanying drawings. In the following description, numerous details are set forth in order to for better understanding of the present disclosure. However, the present disclosure is implemented in many other ways different from those described herein, and those skilled in the art can make similar improvements without departing from the teachings of the present disclosure. Therefore, the present invention is not limited by specifics of the embodiments disclosed below.

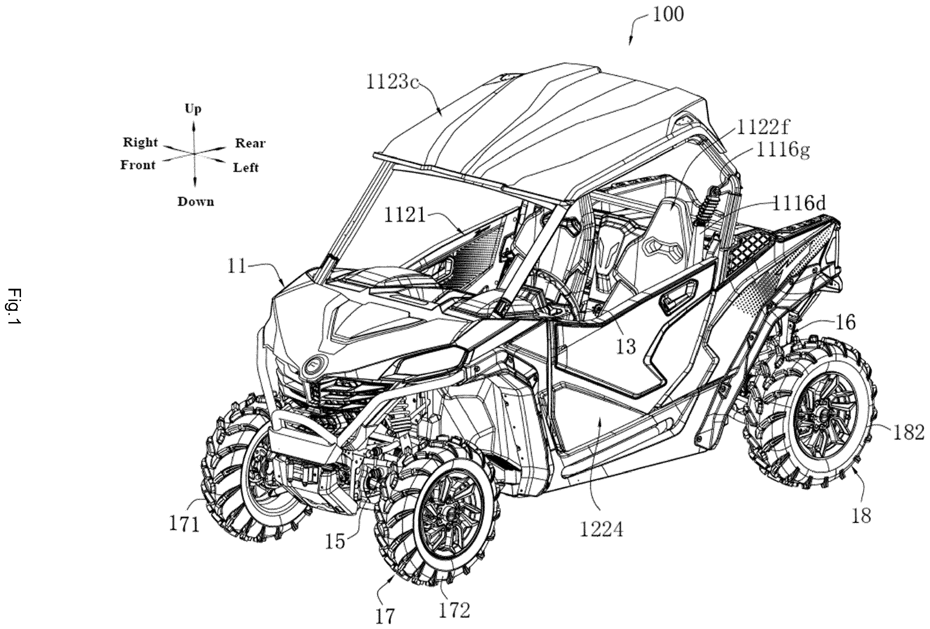

FIG. 1 shows a side-by-side utility vehicle 100, which is used for travel on a wide variety of unpaved surfaces including beaches, hillsides and deserts. The general orientations of front, rear, up (upper), down (lower), left and right for the side-by-side utility vehicle 100 are defined in FIG. 1.

In FIGS. 1 and 81, the side-by-side utility vehicle 100 includes a frame 10, a vehicle cover 11, a prime mover assembly 12, a manipulation system 13, an intake and exhaust system 14, a front suspension assembly 15, a rear suspension assembly 16, front wheels 17, rear wheels 18, an electrical system 19 and an electronic control unit (ECU) 21. The frame 10 is used for carrying and connecting various components on the side-by-side utility vehicle 100 and bearing various loads from inside and outside the vehicle. The manipulation system 13 is mounted on the frame 10 and is used for manipulating the steering, braking and driving speed of the side-by-side utility vehicle 10. The front suspension assembly 15 is disposed toward the front of the side-by-side utility vehicle 100 and is mounted on the frame 10. The front suspension assembly 15 is connected to the front wheels 17 so as to deliver forces from the front wheels 17 to the frame 10. The front suspension assembly 15 is capable of buffering impact forces from uneven surfaces over which the vehicle 100 travels to the frame 10 and other components, so as to reduce vibration, thereby ensuring that the side-by-side utility vehicle 100 is able to run smoothly and stably. The rear suspension assembly 16 is disposed toward the rear of the side-by-side utility vehicle 100, and is mounted on the frame 10. The rear suspension assembly 16 is connected to the rear wheels 18 so as to deliver forces from the rear wheels 18 to the frame 10. The front suspension assembly 16 is capable of buffering impact forces from uneven surfaces over which the vehicle 100 travels to the frame 10 and other components, so as to reduce vibration, thereby ensuring that the side-by-side utility vehicle 100 is able to run smoothly and stably. The electrical system 19 is directly or indirectly mounted on the frame 10, and are at least partially connected (electrically/signally) to the electrical control unit 21 to enable control over the basic electrical functions of the side-by-side utility vehicle 100. The electrical control unit (referred to as ECU hereinafter) 21 is also referred to as "travelling computer", which is supported by the frame 10 and is used to monitor various input data (such as braking data, gear shifting data, etc.) and various states of vehicle operation (such as acceleration, skidding, fuel consumption, etc.); calculate the information transmitted by various sensors according to a pre-designed program; send various parameters (after processing) to various relevant actuators, such as electrical system 19; and perform various predetermined control functions.

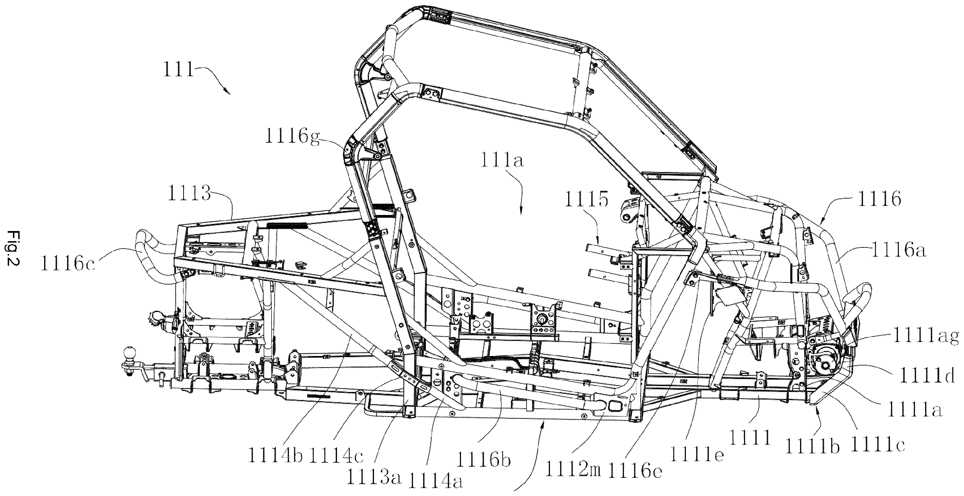

As shown in FIG. 2, the frame 10 is a frame structure to carry various loads inside and outside the side-by-side utility vehicle 100. The front suspension assembly 15 and the rear suspension assembly 16 are respectively mounted on the front and rear ends of the frame 10. It should be noted that the layout of the front suspension assembly 15 and the rear suspension assembly 16 on the frame 10 is correspondingly arranged as required. The vehicle cover 11 is mounted on the frame 10 and covers at least part of the frame 10, so as to protect various parts and components on the vehicle 100 and improve the aesthetics of the vehicle 100. The vehicle cover 11 defines a cockpit for the driver and passengers, as well as to carry cargo.

As shown in FIG. 2, the frame 10 includes a front frame portion 1111, a middle frame portion 1112, a rear frame portion 1113, an armrest assembly 1115, and a protection assembly 1116. The front frame portion 1111 carries components such as the front suspension assembly 15, headlights, water tanks, and the like. The rear frame portion 1113 carries components such as the rear suspension assembly 16, taillights and other components. The middle frame portion 1112 is connected between the front frame portion 111 and the rear frame portion 113, and is also used for carrying loads. The front frame portion 1111, the middle frame portion 1112 and the rear frame portion 1113 is surrounded to form an accommodating space 111a. The vehicle cover 11 covers the vehicle frame 10 and defines a cabin 1121. Cabin 1121 serves as a cockpit for drivers and/or passenger compartment for passengers. The cabin 1121 is partially embedded in the accommodating space 111a, so that the cabin 1121 can obtain a larger space for use when the height of the side-by-side utility vehicle 100 conforms to the standard. The armrest assembly 1115 is located in the cabin 1121 and mounted on the frame 10 or the vehicle cover 11 for the driver and passengers to hold on. The protection system 1116 is connected to the frame 10 and distributed around the vehicle cover 11 to protect the vehicle cover 11, driver as well as passengers.

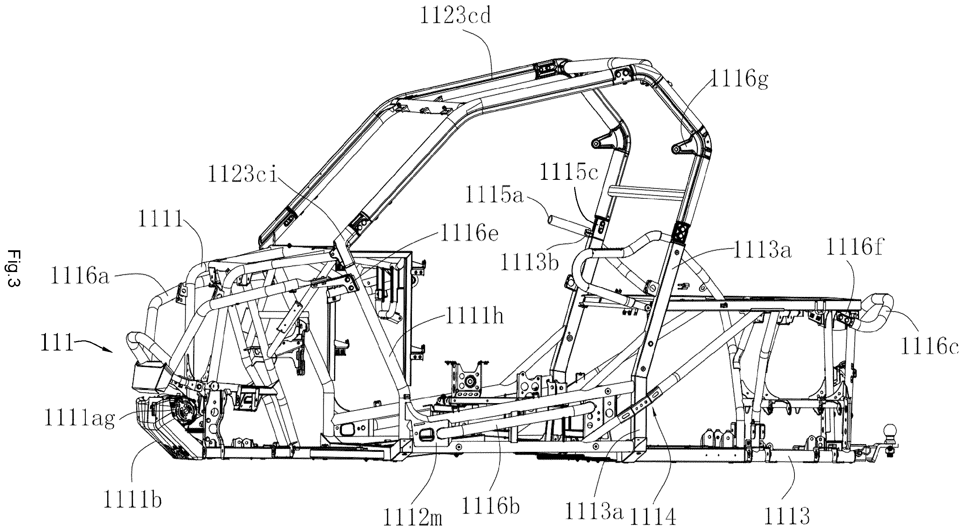

As shown in FIGS. 2 and 3, the front frame 1111 is equipped with a winch mounting seat 1111a, a winch guard 1111b and a pedal mounting seat 1111e. The winch mounting seat 1111a is used to mount a winch 1111ag, which is a self-protection and traction device of side-by-side utility vehicle 100. One side of the winch mounting seat 1111a is mounted on the front frame 1111 by bolts, welding, or the like. One end of the winch guard 1111b is mounted at the bottom of the front frame 1111, with the other end substantially extending upward and being blocked in front of the winch 1111ag. In this way, a shelter is formed in front of the winch 1111ag to avoid the impact of gravel on the winch 1111ag. At the same time, one end of the winch guard 1111b away from the connection between the front frame portion 1111 and the winch guard 1111b is connected to the winch mounting seat 1111a. In this way, the winch mounting seat 1111a is effectively supported by the winch guard plate 1111b, so that when the winch mounting seat 1111a is deformed under stress, the force is distributed by the winch guard 1111b and transmitted to the front frame portion 111, so as to effectively improve the structural strength of the winch mounting seat 1111a. The winch guard 1111b is a metal plate, a plastic plate or a plate made of other materials.

In one embodiment, the winch guard 1111b is a steel plate, and the winch guard 1111b is processed by stamping and other integrated molding methods to improve the overall structure of the winch guard 1111b and reduce the processing cost. The winch guard 1111b is connected to the front frame portion 1111 by bolts. The winch guard 1111b and the winch mounting seat 1111a is also connected by bolts, for easy to disassemble and replace. The winch guard plate 1111b includes a first guard plate 1111c and a second guard plate 1111d. One end of the first guard plate 1111c is connected to the front frame portion 1111, with the other end extending upward and inclining toward the front direction of the front frame portion 1111 relative to a vertical direction. The second guard plate 1111d is arranged at the one end far from the connection between the first guard plate 1111c and the front frame portion 1111. The first guard plate 111c and the second guard plate 1111d defines a protection space, and the winch 1111ag is at least arranged in the protection space.

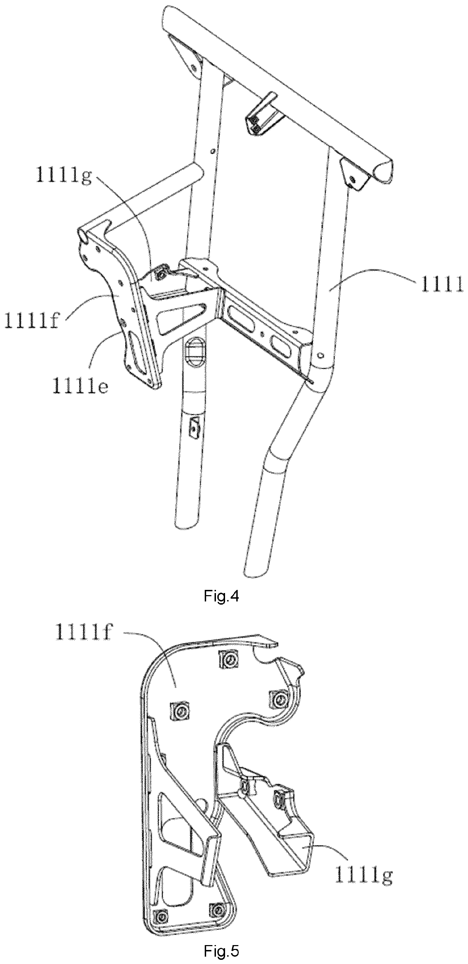

As shown in FIGS. 4 and 5, the pedal mounting seat 1111e is a split structure, which is positioned at the side of the front frame portion 1111 adjacent to the cabin 1121 to mount the accelerator pedal, brake pedal 1321 and other components. The pedal mounting seat 1111e includes a support 1111f and a mounting bracket 1111g. One end of the support 1111f is mounted on the front frame portion 1111, with the other end extending toward the interior of the cabin 1121 or extending toward the rear frame portion 1113. The mounting bracket 1111g is mounted on the support plate 1111f and is used to carry accelerator pedal, brake pedal 1321 and other components. It should be noted that the pedal mounting seat 1111e is composed of a plurality of components, which facilitates the connection between the pedal mounting seat 1111e and the front frame portion 1111, improves structural strength, facilitates processing and improves utilization rate of materials.

In one embodiment, both the support plate 1111f and the mounting bracket 1111g are stamping parts. In other words, the processing of the support plate 1111f and the mounting bracket 1111g are formed by stamping. Compared with stamping of large parts, the forming length of materials is shortened, the die cost and stamping times are reduced, which is conducive to the control of the overall cost. At the same time, the number of support plates 1111f is two, and the two support plates 1111f are spaced on the front frame portion 1111. The mounting bracket 1111g is supported by two support plates 1111f to improve the reliability of the connection between the support plates 1111f and the mounting bracket 1111g. Here, the support plates 1111f and the mounting bracket 1111g is connected by welding, bolts, etc.

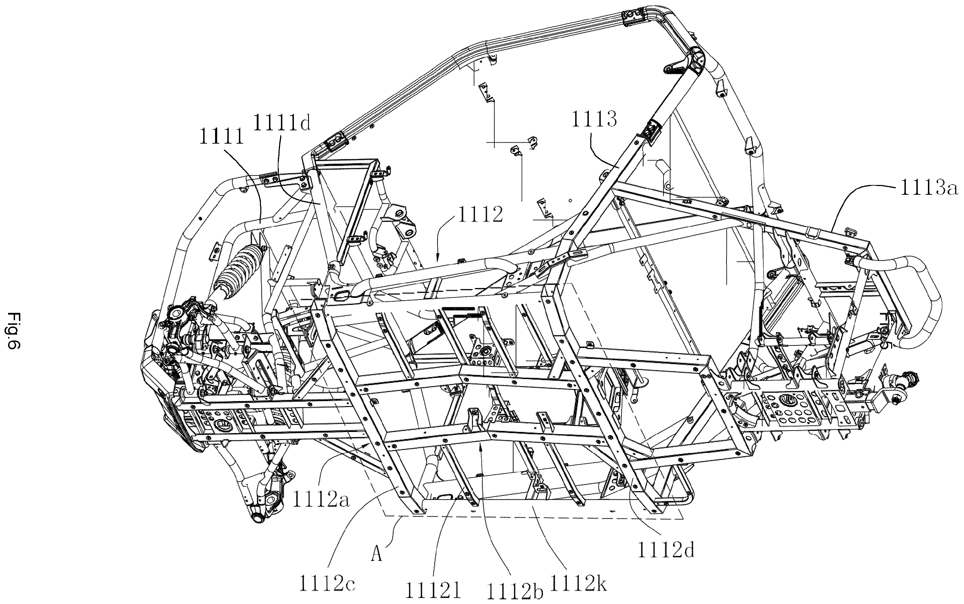

As shown in FIGS. 6 to 8, the middle frame portion 1112 bears the most loads. The middle frame portion 1112 may include a first type of beams 1112a and a second type of beams 1112b. The first type of beams 1112a and the second type of beams 1112b is interconnected to substantially form a load bearing structure. In one embodiment, the number of the first type of beams 1112a is greater than one, and a plurality of the first type of beams 1112a is spaced apart and substantially located on the same plane. The number of the second type of beams 1112b may also be greater than one, and a plurality of the second type of beams 1112b is arranged between the plurality of the first type of beams 1112a at intervals. It should be noted that the number of the first type of beams 1112a is two, three, four, or the like. Similarly, the number of the second type of beams 1112b is two, three, four, or the like. It should be noted that the number of the first type of beams 1112a and the number of the second type of beams 1112b is varied depend on the circumstance.

In this embodiment, the first type of beams 1112a includes a first cross beam 1112c and a second cross beam 1112d, and the first cross beam 1112c and the second cross beam 1112d is substantially located in the same plane S. The second type of beams1112b include a first longitudinal beam 1112e and a second longitudinal beam 1112h. The first longitudinal beam 1112e is provided near the front end, and the second longitudinal beam 1112h is provided near the rear end along a front-rear direction of the side-by-side utility vehicle 100. The first longitudinal beam 1112e includes a first rod 1112f and a second rod 1112g. One end of the first rod 1112f is connected to the first cross beam 1112c, and the other end of the first rod 1112f extends toward the second cross beam 1112d. The angle between the first rod 1112f and the plane S is A1, and A1 is in the range from 5° to 15°. One end of the second rod 1112g is connected to the second cross beam 1112d, and the other end of the second rod 1112g extends towards the first cross beam 1112c and is connected to the first rod 1112f. The angle between the second rod 1112g and the plane S is A2, and A2 is in the range from 5° to 15°, so that the bottom of the middle frame portion 112 is raised upwardly away from the driving ground. The distance of the side-by-side utility vehicle 100 from the ground is increased, so that the trafficability of the side-by-side utility vehicle 100 is effectively improved.

In one embodiment, the angle A1 is larger than the included angle A2, making the side-by-side utility vehicle 100 better pass through the uneven road. The first type of beams 1112a and the second type of beams 1112b is made of steel pipes, which are easily available from market and are easy to be processed. The first rods 1112f is welded to the first cross beam 1112c, and the second rods 1112g is welded to the second cross beam 1112d. The first rods 1112f is welded to the second rods 1112g. The first rods 1112f of the second type of beams 1112b is parallel to each other, and the second rods 1112g of the second type of beams 1112b is arranged parallel to each other. The second longitudinal beam1112h includes a third rod 1112i and a fourth rod 1112j. The third rod 1112i is parallel to the first rod 1112f, one end of the third rod 1112i is connected to the first cross beam 1112c, and the other end of the third rod 1112i extends toward the second cross beam 1112d. The fourth rod 1112j is parallel to the second rod 1112g, one end of the fourth rod 1112j is connected to the second cross beam 1112d, and the other end of the fourth rod 1112j extends toward the first cross beam 1112c and is connected to the third rod 1112i.

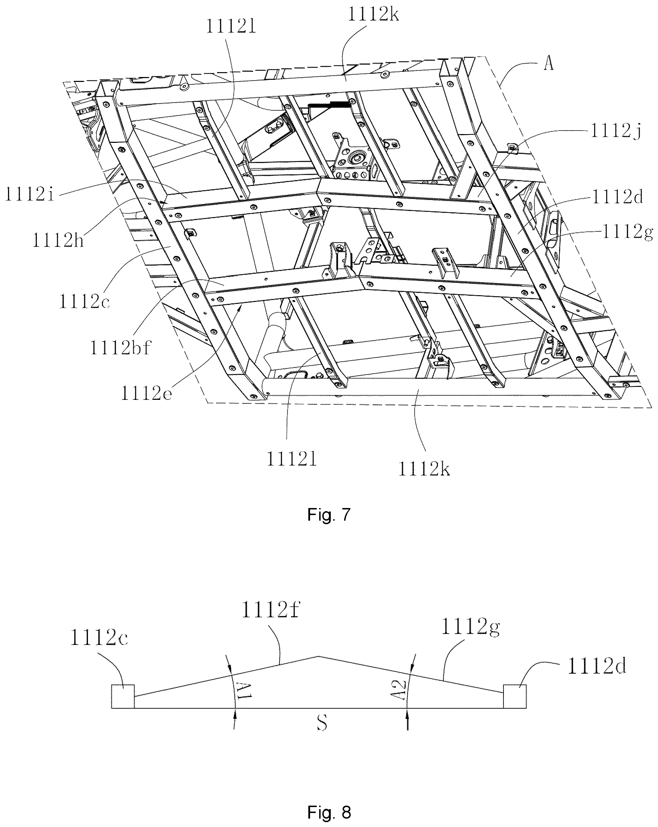

As shown in FIG. 7, the middle frame portion 1112 may further include at least two longitudinal reinforcement pipes 1112k and a plurality of cross reinforcement pipes 1112l. In one embodiment, the middle frame portion 1112 includes two longitudinal reinforcement pipes 1112k. The two longitudinal reinforcement pipes 1112k is spaced apart. The second type of beams 1112b is mounted between the two longitudinal reinforcement pipes 1112k. One end of each longitudinal reinforcement pipe 1112k is fixed on the first cross beam 1112c, and the other end is fixed on the second cross beam 1112d. Each cross reinforcement pipe 1112l is connected between one of the longitudinal beams 1112b and the corresponding longitudinal reinforcement pipes 1112k. One end of each cross reinforcement pipes 1112l is connected to the corresponding longitudinal beam, and the other end is connected to the corresponding longitudinal reinforcement pipe 1112k, so that the longitudinal reinforcement pipes 1112k, the cross reinforcement pipe 1112l, the cross beams 1112a and the longitudinal beams 1112b together form a mesh-like structure, which effectively improves the structural strength and bearing capacity of the entire middle frame portion 1112.

As shown in FIG. 6, the front frame portion 1111 further includes two first pillars 1111h, and the rear frame portion 1113 further includes two second pillars 1113a. The first pillar 1111h and the second pillar 1113a are commonly referred to as A-pillar and B-pillar, respectively. The first pillar 1111h and the second pillar 1113a are used for bearing, supporting the vehicle, and protecting drivers. One end of each first pillar 1111h is connected to the first cross beam 1112c, and the other end of the first pillar 1111h extends upward. One end of the second pillar 1113a is connected to the second cross beam 1112d, and the other end of the second pillar 1113a extends upward.

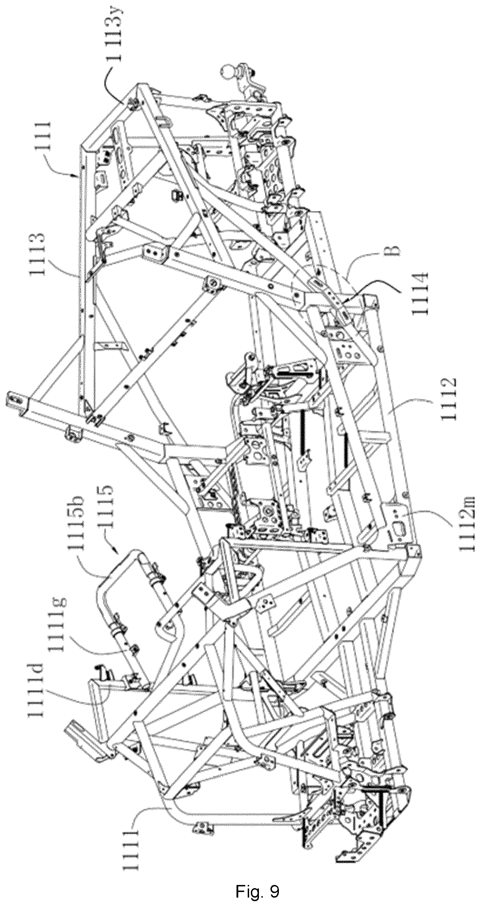

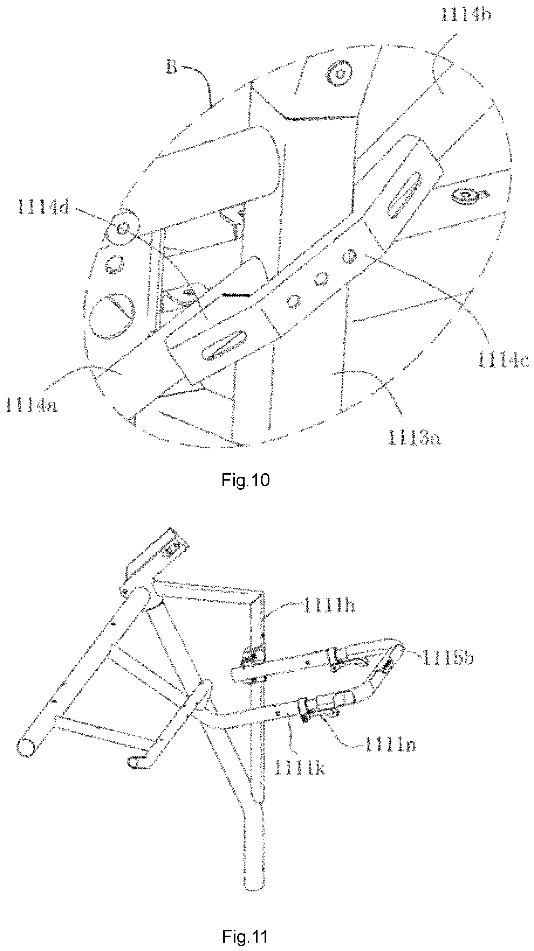

As shown in FIGS. 9 and 10, in one embodiment, a reinforcement structure 1114 is arranged between the rear frame portion 1113 and the middle frame portion 1112 to improve the connection strength between the rear frame portion 1113 and the middle frame portion 1112. The reinforcement structure 1114 includes a first reinforcement rod 1114a, a second reinforcement rod 1114b and a reinforcement plate 1114c. One end of the first reinforcement rod 1114a is connected to one of the longitudinal reinforcement pipes 1112k on the middle frame portion 1112, and the other end is connected to one of the second pillars 1113a. The rear frame portion 1113 may further include a support bracket 1113y, one end of the second reinforcement rod 1114b is connected to the support bracket 1113y, and the other end is connected to one of the second pillars 1113a. One end of the reinforcement plate 1114c is connected to the first reinforcement 1114a, and the other end of the reinforcement plate 1114c extends toward the rear end of the side-by-side utility vehicle 100 and extends beyond the second pillars 1113a, and is connected to the second reinforcement rod 1114b. Therefore, a force applied to the second pillars1113a by the first reinforcement rod 1114a and the second reinforcement rod 1114b is distributed by the reinforcement plate 1114c, avoiding processes such as drilling holes in the two second pillars 1113a, thereby reducing the possibility of local deformation of the second pillars 1113a. It should be noted that although only the connection between the reinforcement rods and the second pillars 1113a is described herein, such structure may also be used to connect to other pillars, cross beams or longitudinal beams.

The first reinforcement rod 1114a is welded to one of the second pillars 1113a. The second reinforcement rod 1114b is welded to one of the second pillars 1113a. The reinforcement plate 1114c is integrally formed by stamping. The reinforcement plate 1114c is weld to the first reinforcement rod 1114a and the second reinforcement rod 1114b, respectively. Two ends of the reinforcement plate 1114c is respectively provided with reinforcement pieces 1114d. Each reinforcement piece 1114d abuts against the corresponding reinforcement rod respectively, so as to increase the contact area between the reinforcement plate 1114c and the first reinforcement rod 1114a and the second reinforcement rod 1114b, thereby improving the connection strength between the reinforcement plate 1114c and the first reinforcement rod 1114a and the second reinforcement rod 1114b.

As shown in FIGS. 2 and 11, the armrest assembly 1115 at least includes a first armrest 1115a located inside the cabin 1121 and a second armrest 1115b. The first armrest 1115a is arranged adjacent to the rear frame portion 1113, and the second pillar 1113a is provided with a tab 1113b. One end of the first armrest 1115a is sleeved on the tab 1113b, and is locked by bolts, screws, pin shafts, etc. The other end of the first armrest 1115a is suspended in the cabin 1121 for passengers to hold. In this way, the installation space is reduced, the structure is simple, and the installation is convenient; which avoids punching or grooving the second pillar 1113a. In an embodiment, the second pillar 1113a is provided with a ROPS seat 1115c, and the tab 1113b is arranged on the ROPS seat 1115c.

The second armrest 1115b is located in the cabin 1121 and near the front end of the side-by-side utility vehicle 100. The front frame portion 1111 further includes a first coupling seat 1111i, a L-tube 1111j and an armrest mounting tube 1111k. The first coupling 1111i is mounted on the first pillar 1111h. The second armrest seat 1111j is mounted on the first coupling seat 1111i. One end of the armrest mounting tube 1111k is mounted on the second armrest seat 1111j, and the other end of the armrest mounting tube 1111k is suspended relative to the first pillar 1111h for mounting the second armrest 1115b.

As shown in FIG. 11, the armrest mounting tube 1111k is sleeved with a locking member 1111n. The second armrest 1115b is capable of stretching relative to the armrest mounting tube 1111k to adjust the length of the second armrest 1115b in a front-rear direction of the side-by-side utility vehicle 100, so that the second armrest 1115b can adapt to different persons. The locking member 1111n is capable of locking the adjusted second armrest 1115b on the armrest mounting tube 1111k or releasing the locking of the second armrest 1115b, so that the second armrest 1115b is capable of stretching relative to the armrest mounting tube 1111k.

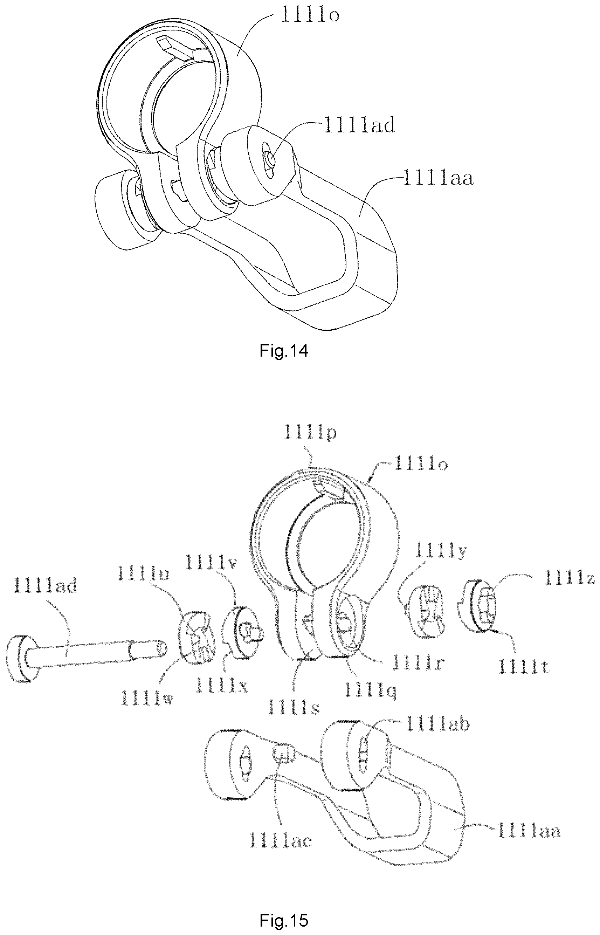

As shown in FIGS. 14 to 17, the locking member 1111n includes a locking sleeve 1111o, locking ramp wheels 1111t, an operating lever 1111aa and a tension pin 1111ad. The side wall of the armrest mounting tube 1111k defines a locking groove 1111l. The locking sleeve 1111o includes a sleeve 1111p and two fourth connecting portions 1111q. The sleeve 1111p is sleeved on the armrest mounting tube 1111k, and is positioned at one end of the armrest mounting tube 1111k and defines a locking groove 1111l. The two fourth connecting portions 1111q are arranged at two ends of the sleeve 1111p and defines a locking notch 1111s which is internally communicated with the sleeve 1111p. The locking ramp wheel 1111t is mounted on the fourth connecting portion 1111q, and is capable of squeezing the fourth connecting portion 1111q under the action of an external force to change the size of a locking notch 1111s and squeeze the armrest mounting tube 1111k, and tighten the locking groove 1111l. In this way, the second armrest 1115b is clamped and mounted by the armrest mounting tube 1111k.

As shown in FIG. 15, the locking member 1111n includes two locking ramp wheels 1111t respectively mounted on the fourth connecting portion 1111q. Both ends of the operating lever 1111aa are respectively connected to each locking ramp wheel 1111t. One end of the tension pin 1111ad is successively penetrated with the operating lever 1111aa and the two locking ramp wheels 1111t, and is used as a rotating shaft. The locking ramp wheel 1111t includes a first half wheel 1111u and a second half wheel 1111v. The first half wheel 1111u is mounted on the fourth connecting portion1 111q, and the first half wheel 1111u defines a first ramp 1111w. The second half wheel 1111v is mounted on the operating lever 1111aa, and the second half wheel 1111v defines a second ramp 1111x. The first ramp 1111w and the second ramp 1111x cooperate with each other to make the first half wheel 1111u and the second half wheel 1111v adjacent to or away from each other. When it is necessary to lock the second armrest 1115b, rotate the operating lever 1111aa so that the first ramp 1111w and the second ramp 1111x are mutually extruded and away from each other. At this time, the first half wheel 1111u and the second half wheel 1111v extrude each other and defines a gap. Therefore, the two fourth connecting portions 1111q are adjacent to each other under the effect of the extrusion, so that the locking notch 1111s is tightened. In this way, under the extrusion of the two fourth connecting portions 1111q, the locking groove 1111l on the armrest mounting tube 1111k starts to shrink, so as to hold the armrest mounting tube 1111k tightly, thereby realizing the locking of the second armrest 1115b. When it is necessary to unlock, turn the operating lever 1111aa in the opposite direction, the first ramp 1111w and the second ramp 1111x are adjacent to each other and fit together, so that the first half wheel 1111u and the second half wheel 1111v fit together, so that the two connecting portions lose the squeezing force and reset, that is, the locking groove on the armrest mounting tube 1111k also loses the force, so as to release the locking sleeve 1111o from locking the second armrest 1115b. In this way, the second armrest 1115b can be operated to stretch relative to the armrest mounting tube to realize the continuous adjustment of the second armrest 1115b. It should be noted that the number of the locking ramp wheel 1111t may also be one. In this case, one of the fourth connecting portions 1111q is fixedly arranged, and the other fourth connecting portion1111q is equipped with the locking ramp wheel 1111t, so that the fourth connecting portion 1111q having the locking ramp wheel 1111t is driven adjacent to the corresponding fourth connecting portion1111q under the locking ramp wheel 1111t. Therefore, the locking and unlocking actions can also be realized.

In one embodiment, the number of first ramp 1111w is more than one, and the first ramps 1111w are arranged along the circumference of the first half wheel 1111u. The number of the second ramp 1111x is multiple, and each second ramp 1111x cooperate with one of the first ramps 1111w. The side surface of the first half wheel 1111u far from the first ramp 1111w is provided with a first tab 1111x, the fourth connecting portion 1111q defines a first fitting hole 1111r, and the first tab 1111x is inserted into the first fitting hole 1111r to limit the rotation of the first half wheel 1111u relative to the fourth connecting portion 1111q. The side surface of the second half wheel 1111v far from the second ramp 1111x is provided with a second tab 1111z, the operating lever 1111aa defines a second fitting hole 1111ab, and the second tab 1111z is inserted into the second fitting hole 1111ab to limit the rotation of the second half wheel 1111v relative to the operating lever 1111aa.

As shown in FIG. 15, the operating lever 1111aa is also provided with a stop bump 1111ac. The stop bump 1111ac is positioned on the inner side of the operating lever 1111aa and is capable of pressing against the locking sleeve 1111o at a predetermined position to avoid excessive rotation of the operating lever 1111aa relative to the locking sleeve 1111o. A plastic liner 1111ae is arranged in the end of the armrest mounting tube 1111k provided with a locking groove 1111l. One end of the second armrest 1115b is inserted into the plastic liner 1111ae. The second armrest 1115b is in frictional contact with the plastic liner 1111ae when adjusting the position of the second armrest 1115b. In this way, the rigid contact between the second armrest 1115b and the armrest mounting tube 1111k is avoided, thereby reducing the wear and noise, and improving the smoothness of adjustment. In one embodiment, as shown in FIG. 10, the outer wall of the plastic liner 1111ae is provided with a first spring clip 1111af. The armrest mounting tube 1111k defines a liner location hole 1111m, and the first spring clip 1111af is capable of being clamped into the liner location hole 1111m.

As shown in FIGS. 2 and 3, the protection system 1116 includes a front bumper 1116a, a side bumper 1116b, a rear bumper 1116c, a safety belt 1116d, a first connecting bracket 1116e, a second connecting member 1116f, and a safety belt connector 1116g. The front bumper 1116a is positioned at the front end of the side-by-side utility vehicle100 and is circumferentially distributed around the front frame 1111. The front bumper 1116a is connected to the first pillar 1111h by the first connecting bracket 1116e, that is, one end of the first connecting bracket 1116e is connected to the front bumper 1116a, with the other end connected to the first pillar 1111h. In this way, since the setting position of the first connecting bracket 1116e is more flexible, it can meet the requirements of the installation of the front bumper 1116a in multiple positions and angles, and the connection is more convenient. The first connecting bracket 1116e is connected to the front bumper 1116a and the front frame 1111 by welding or bolts. In one embodiment, the first connecting bracket 1116e is connected to the front bumper 1116a and the front frame 1111 by bolts.

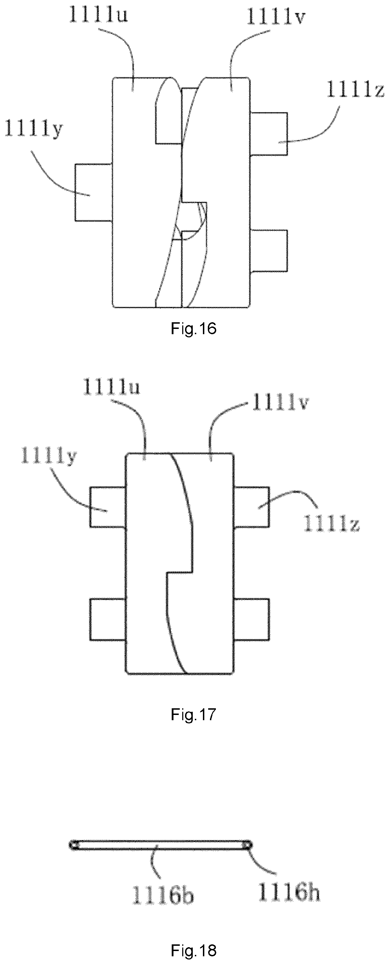

As shown in FIG. 18, the end faces of side bumper 1116b are both defines bumper mounting holes 1116h, and the middle frame portion 1112 is provided with first connection plates 1112c corresponding to both ends of side bumper 1116b. The two ends of the side bumper 1116b pass through the vehicle cover 11 from the outside to the inside, extend to the first connection plate 1112c, and are mounted on the corresponding first connection plate 1112c to realize the mounting of the side bumper 1116b. The side bumper 1116b is fixed on the first connection plate 1112c by screws/bolts. The first connection plate 1112c is a sheet metal part and formed by stamping to improve the overall structural strength of the first connection plate 1112c.

As shown in FIG. 2, the rear bumper 1116c is located at the rear end of side-by-side utility vehicle 100 and surrounds the rear frame. The rear bumper 1116c is connected to the rear frame 1113 by the second connecting member 1116f. In other words, one end of the second connecting member 1116f is connected to the rear frame 1113, and the other end is connected to the rear bumper 1116c. In this way, when the side-by-side utility vehicle100 collides with the second connecting member 1116f, the second connecting member 1116f will deform and absorb energy to protect the rear frame 1113. The second connecting member 1116f is connected to the rear bumper 1116c and the rear frame 1113 by welding or bolts. The safety belt 1116d is located inside the cabin 1121 to protect personals. The safety belt 1116d is mounted on the safety belt connector 1116g integrally manufactured with the first pillar 1111h or the second pillar 1113a to improve the structural strength of the safety belt 1116g.

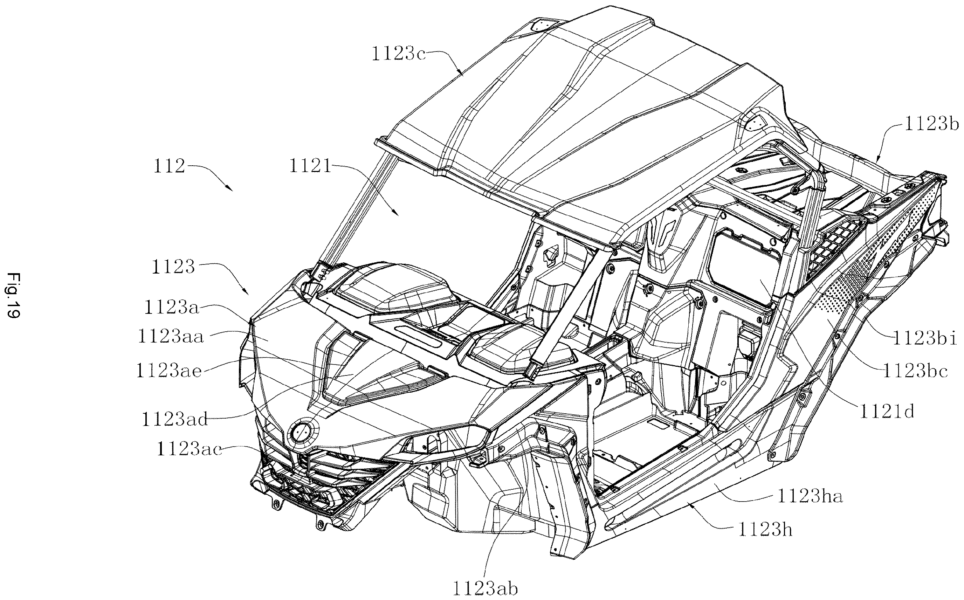

As shown in FIGS. 19 to 21, the vehicle cover 11 includes an interior trim package 1122, an exterior trim package 1123 and a vehicle door 1124. The interior trim packages 1122 is arranged on the frame 10, and a cabin 1121 is defined by the frame 10 and the interior trim packages 1122. That is to say, the interior trim packages 1122 is disposed around the cabin 1121. One side of the cabin 1121 defines at least one first opening 1121a, and drivers and passengers may enter and exit the cabin 1121 through the first opening 1121a. The exterior trim packages 1123 is located at the front end, the rear end, and the side edges of the frame 10 to shield and protect the front suspension assembly 15, the rear suspension assembly 16, various electrical devices, and the like. The vehicle door 1124 covers the first opening 1121a and is rotatably connected to the frame 10 or the vehicle cover 11 to open or close the first opening 1121a. It should be noted that the vehicle door 1124 is an aftermarket accessory, which can be optionally mounted according to the user's needs, that is to say, the first opening 1121a may not be mounted with the vehicle door 1124. At this time, the armrest assembly 1115 is mounted at the first opening 1121a to ensure the safety of drivers and passengers.

The interior trim package 1122 includes a front baffle 1122a, a dashboard panel 1122b, a bottom plate 1122c, a rear baffle 1122d and one or a plurality of seat 1122f. The front baffle 1122a is disposed adjacent to the front end of the side-by-side utility vehicle 100 to separate the various components at the front end of the side-by-side utility vehicle 100 from the cabin 1121, and to block stones, sediment, and water. The dashboard panel 1122b is mounted on one end away from the ground of the front baffle 1122a, and is used to carry various instrument devices, such as a display screen, a dashboard, and the like on the vehicle. The bottom plate 1122c is mounted at the bottom of the accommodating space 111a, and is used as a plate to carry various components such as seats 1122f, and as a position where the feet of the drivers or passengers are placed in. The rear baffle 1122d is disposed adjacent to the rear end of the side-by-side utility vehicle 100 and separates the various components at the rear end of the side-by-side utility vehicle 100 from the cabin 1121. The rear baffle 1122d and the bottom plate 1122a is spaced apart, and the footrests 1122c is located between the front baffle 1122a and the rear baffle 1122d. Therefore, the cabin 1121 described above is defined by the front baffle 1122a, the footrests 1122c and the rear baffle 1122d.

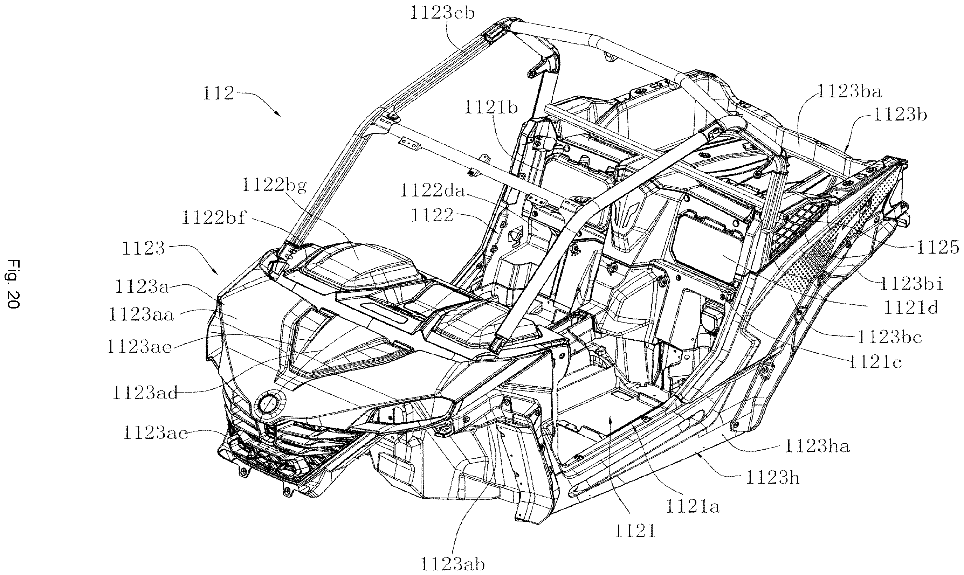

As shown in FIG. 20 and FIG. 102, the rear baffle 1122d also defines a yielding recess 1122da, and the side wall of the yielding recess 1122da defines a fifth mounting hole 1122db. The retractor for rolling the safety belt 1116d is mounted in the fifth mounting hole 1122db. In this disclosure, the present of the yielding recess 1122da provides space for the retractor. At the same time, the fifth mounting hole 1122db is generally post-processed after the production of the rear baffle 1122d is completed. The yielding recess 1122da also defines an operating space for external equipment to process the fifth mounting hole 1122db and to dismantle other components. The seats 1122f for passengers or drivers is removably mounted on the bottom plate 1122c. In one embodiment, the side-by-side utility vehicle 100 includes two seats 1122f arranged side by side, with one for driver and the other for passenger.

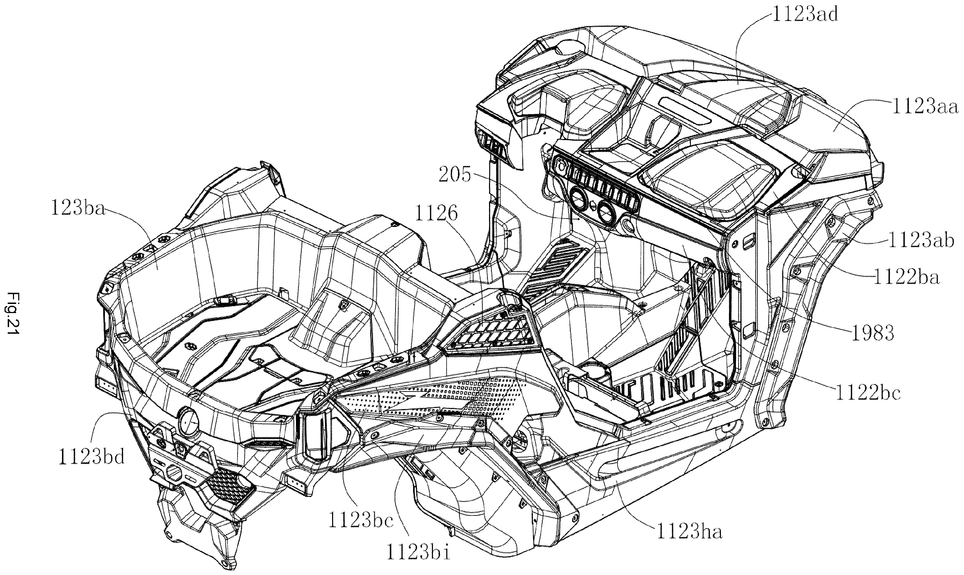

As shown in FIG. 21, the dashboard panel 1122b includes an upper dashboard panel 1122ba arranged horizontally and a lower dashboard panel 1122bc arranged vertically, which are connected to each other. That is to say, the dashboard panel 1122b is a split structure, so the space occupied by the overall processing of the dashboard panel 1122b can be reduced, and the molding cost can be reduced.

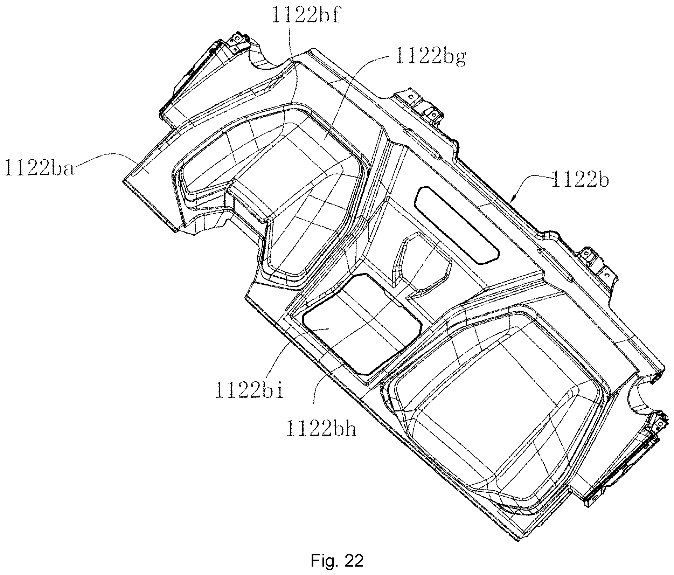

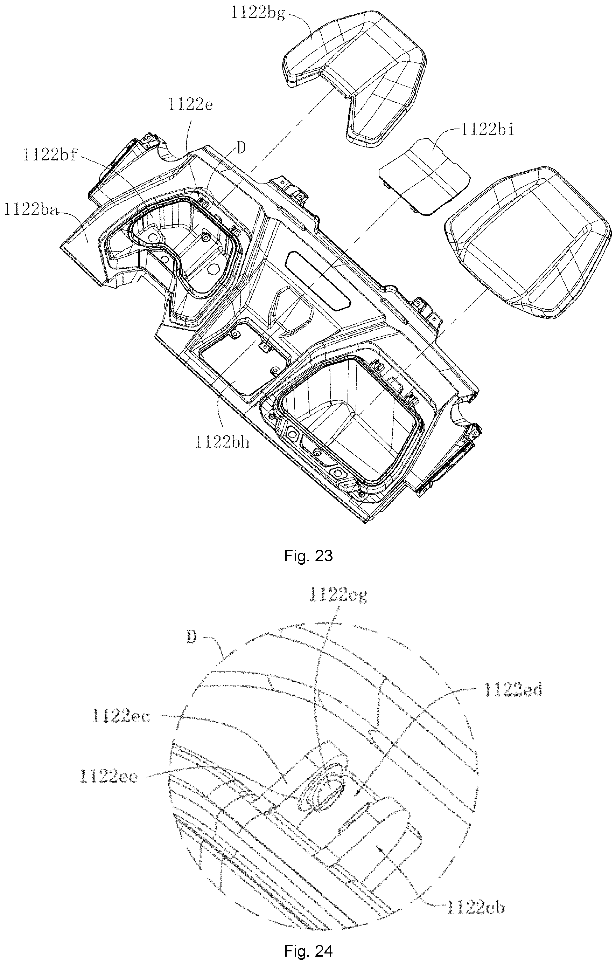

As shown in FIG. 22 and FIG. 23, the surface of the upper dashboard panel 1122ba defines a first concave groove 1122bf, and the first groove 1122bf contains an operating element. In this embodiment, the operating elements are electrical connectors, winch controllers and other devices. In addition, based on the position of the upper dashboard panel 1122ba, it is possible to make the position of the electrical connector base and winch controller in the cabin 1121 closer to the driver or passenger for easy use. The upper dashboard panel 1122ba is also provided with a first cover plate 1122bg, which is covered on the first groove 1122bf. Thus, the electric connector, winch controller and other devices are located in a relatively closed space to achieve water and ash retaining. The first cover plate 1122bg is connected to the upper dashboard panel 1122ba by the quick disassembly structure 1122e, and the first cover plate 1122bg is capable of rotating relative to the upper dashboard panel 1122ba. In this way, it is not only convenient to install, but also can quickly open/close the first cover plate 1122bg to realize the operation related to the internal operating elements of the first groove 1122bf.

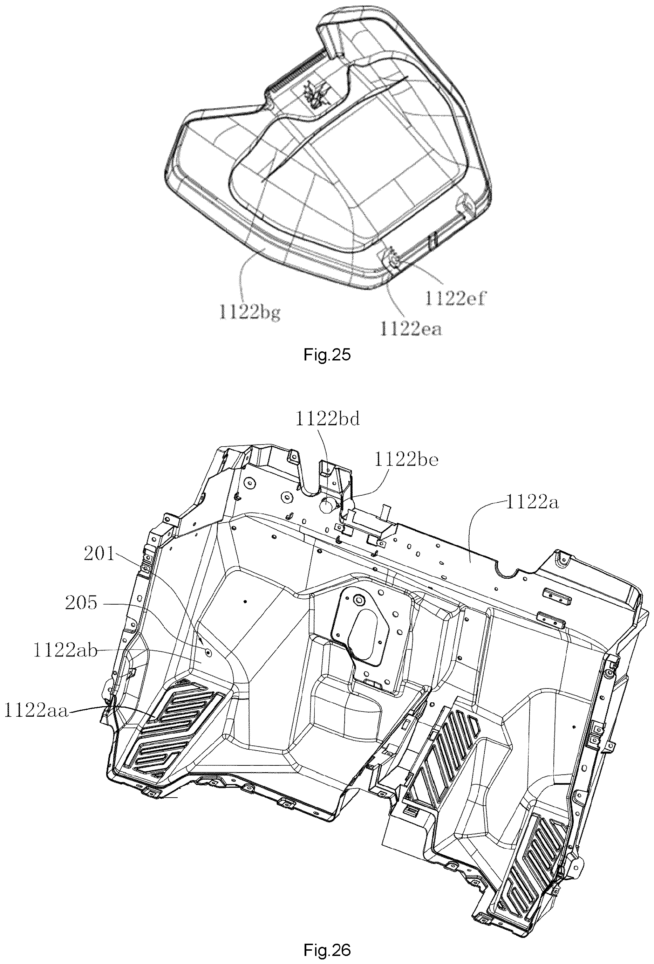

As shown in FIGS. 24 and 25, the quick disassembly structure 1122e includes a first insertion portion 1122ea and at least one first connection device 1122eb. Each first connection device 1122eb includes two connection arms 1122ec, and a first slot 1122ed between the two connection arms 1122ec for the first insertion portion 1122ea to insert in. In addition, each connection arm 1122ec is provided with a first coupling portion 1122ee on the side facing the corresponding other connection arm 1122ec. The first insertion portion 1122ea is provided with a coupling slot 1122ef. When the first insertion portion 1122ea is inserted into the first slot 1122ed, the connection arm 1122ec is capable of deforming under the extrusion of first insertion portion 1122ea, so that the first coupling portion 1122ee can be clamped into the coupling slot 1122ef, realizing the rapid installation between the first cover plate 1122bg and the upper dashboard panel 1122ba, as well as the rotary connection between them.

In one embodiment, the connection arm 1122ec is arranged on the upper dashboard panel 1122ba and is integrally manufactured with the upper dashboard panel 1122ba, so as to facilitate the overall processing of the upper dashboard panel 1122ba. At the same time, the structural strength of the connection arm 1122ec is also improved. The first insertion portion 1122ea is arranged and on the first cover plate 1122bg and is integrally manufactured with the first cover plate 1122bg to facilitate the overall processing of the first cover plate 1122bg. It should be noted that the position of the connection arm 1122ec and the position of the first insertion portion 1122ea can be interchanged, which can also realize the quick disconnect connection between the first cover plate 1122bg and the upper dashboard panel 1122ba.

Along the insertion direction of the first insertion portion 1122ea, the first coupling portion 1122ee is provided with a first guiding surface 1122eg for guiding the movement of the first insertion portion 1122ea, so that the first insertion portion 1122ea can be quickly and accurately inserted into the first slot 1122ed. In this embodiment, the first guiding surface 1122eg is a slop, and the slop surfaces on the two opposite first coupling portion 1122ee form a bell mouth shape, and the first insertion portion 1122ea is inserted into the first slot 1122ed under the guidance of the bell mouth. The number of connection device 1122eb is two, and the two connection devices 1122eb are spaced on the dashboard panel 1122ba. Correspondingly, the number of the first insertion portion 1122ea is two, and the two first insertion portion 1122ea are respectively inserted into the first slot 1122ed one by one. In this way, the reliability of the connection between the first cover plate 1122bg and the upper dashboard panel 1122ba can be improved. It should be noted that the above only describes the quick plug connection between the first cover plate 1122bg and the first dashboard panel 1122b at the upper dashboard panel 1122ba. The above quick plug structure 1122e can also be applied to other features of the vehicle cover 11, and will not be illustrated here.

As shown in FIG. 23, a variety of electrical components need to be overhauled irregularly are generally mounted at the dashboard panel 1122b. When overhauling the existing electrical components, it is necessary to remove the entire front baffle 1122a and/or dashboard panel 1122b to visualize the electrical components and carry out corresponding maintenance. The removal of front baffle 1122a and/or dashboard panel 1122b as a whole is not only cumbersome and inconvenient, but also inconvenient for subsequent installation. Therefore, in this disclosure, the dashboard panel 1122b and/or the front baffle 1122a defines a dashboard access port 1122bh. The electrical components are located at the dashboard access 1122bh, that is, the electrical components can be observed or repaired through the dashboard access port 1122bh. It should be noted that, the dashboard access port 1122bh can be covered with the second cover 1122bi. The second cover plate 1122bi is removably connected to the dashboard panel 1122b or the front baffle 1122a. Here, the removable connection between the second cover plate 1122bi and the dashboard panel 1122b or front baffle 1122a is realized by threaded connection, clamping connection, or the like. When it is necessary to repair the electrical components, the second cover plate 1122bi can be removed to repair the electrical components through the dashboard access port 1122bh, which is not only convenient but also simple. At the same time, in order to be intuitive and visual, the second cover plate 1122bi may also be equipped with a transparent window through which the state of electrical components at the dashboard access port 1122bh can be observed at any time.

As shown in FIG. 26, in an embodiment, a buzzer 1122bd is also mounted on the front baffle 1122a or dashboard panel 1122b, and the buzzer 1122bd is used to remind the vehicle information, such as untied safety belt, insufficient oil pressure, etc. Specifically, the front baffle 1122a or the dashboard panel 1122b is provided with a mounting pillar 1122be, and the buzzer 1122bd is mounted on the mounting pillar 1122be. It should be noted that the buzzer 1122bd is generated by vibration, and under the condition of shaking, it is easy to cause the buzzer 1122bd to fail to sound normally. Therefore, the disclosure improves the reliability and stability of the installation of the buzzer 1122bd by adding a mounting pillar 1122be and installing the buzzer 1122bd on the mounting pillar 1122be, so as to effectively ensure the normal operation of the buzzer 1122bd. It should be noted that the buzzer 1122bd is only an example, and it is also a device that emits sound by vibration and has alarm function.

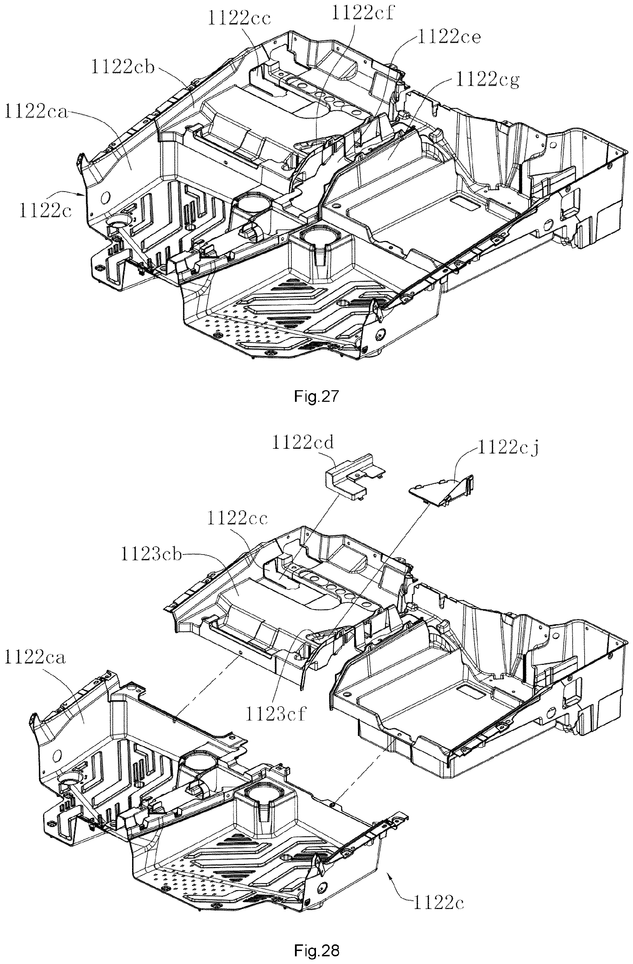

As shown in FIG. 27, the length of the bottom plate 1122c along a front-rear direction of the side-by-side utility vehicle 100 limits the length of the cabin 1121. The existing bottom plate for arranging one or more rows of seats are independent and integrally manufactured members. It requires separate mold processing. In this way, the mold is not only large but also high in cost. In this embodiment, the bottom plates 1122c are a split-type, and a plurality of bottom plates 1122c are spliced with each other to reduce the mold volume. In addition, a plurality of bottom plates 1122c can be freely combined to meet the requirements of side-by-side utility vehicle 100 with a plurality of rows of seats, thereby realizing cost savings.

As shown in FIG. 28, the bottom plate 1122c includes at least a first portion 1122ca and a second portion 1122cb. The first portion 1122ca and the second portion 1122cb are mounted on the frame 10 along a front-rear direction of the side-by-side utility vehicle 100. When the side-by-side utility vehicle 100 equipped with a plurality of rows of seats 1122f needs to install the bottom plate, just fit the first portion 1122ca and the second portion 1122cb at the front and rear ends of the cabin 1121. For this small area between the first portion 1122ca and the second portion 1122cb, just need a small mold separately. In this way, a bottom plate mold that is suitable for the plurality of rows of seats 1122f is not needed, which effectively saves the cost of production and processing, and improves the universality of the bottom plate 1122c.

The bottom plate 1122c defines a bumper access port 1122cc. The position of the bumper access port 1122cc is aligned with the connection position of the side bumper 1116b and the first connection plate 1112c. In other words, the installation and removal of side bumper 1116b can be carried out through bumper access port 1122cc. In this way, the connection between the side bumper 1116b and the frame 10 can be hidden, and the maintenance and installation of the side bumper 1116b no longer require the removal of the entire bottom plate 1122c and other components, which makes maintenance easier, installation more convenient, and improves the aesthetics of the vehicle 100.

The upper cover of the bumper access port 1122cc is provided with a third cover plate 1122cd removably connected to the bottom plate 1122c. In this embodiment, the third cover plate 1122cd is connected to the bottom plate 1122c by screws, clips, or the like. In this way, it is convenient to open/close the side bumper 1116b bumper access port 1122cc, and improve the installation and maintenance convenience of side bumper 1116b. In one embodiment, the bottom plate 1122c includes side surfaces and a bottom surface, and the bumper access port 1122cc extends from the bottom surface to the side surface. In this way, the usable area of the bumper access 1122cc can be increased to provide enough operating space for maintenance personnel.

As shown in FIGS 19 to 21, the exterior trim package 1123 includes a front trim 1123a, a rear trim 1123b and a middle trim 1123h. The front trim 1123a covers the outer surface of the front frame portion 1111. The middle trim 1123h covers the outer surface of the middle frame portion 1112, and the rear trim 1123b covers the outer surface of the rear frame portion 1113. In this way, the aesthetics and safety of side-by-side utility vehicle100 can be improved. The front trim 1123a at least includes a front panel 1123aa, a front fender 1123ab and an intake grille 1123ac. The front panel 1123aa covers the upper surface of the front frame portion 1111 to covers the components mounted on the front frame portion 1111. The front panel 1123aa is removably connected to the front frame portion 1111, so as to facilitate the disassembly of the front panel 1123aa, which is convenient to repair the components at the front frame portion 1111. In this embodiment, the front trim 1123a includes two front fenders 1123ab, corresponding to the two front wheels. Each front fender is located on each side of front frame portion 1111 to cover the side of front frame portion 1111 and the corresponding front wheel. The middle trim 1123h includes middle side plates 1123ha covering the sides of the middle frame portion 1112, and two ends of the side bumper 1116b are respectively penetrated with the corresponding middle side plate 1123ha to connect to the corresponding first connection plate 1112c.

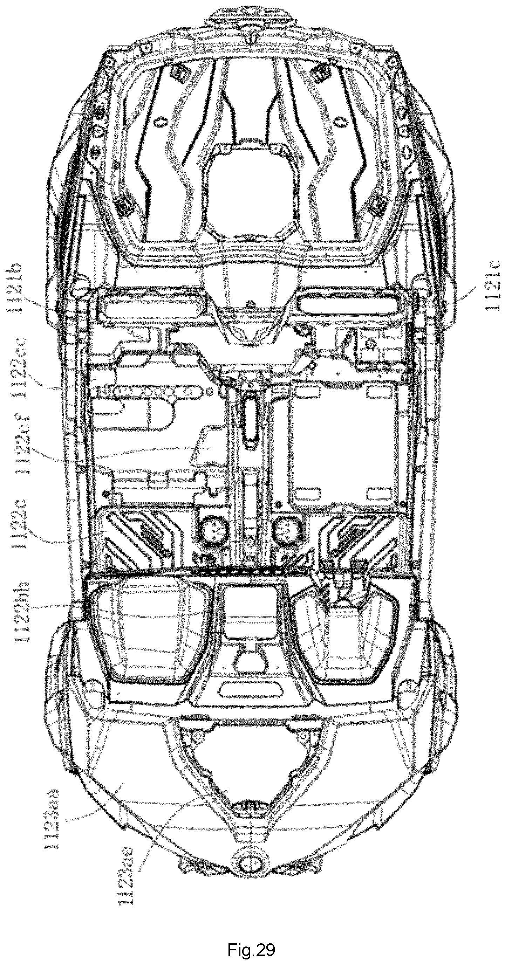

As shown in FIG. 29, the front panel 1123aa defines a front access port 1123ae for inspecting and repairing the components mounted on the front frame portion 1111, such as radiator and other components. The front cover 1123ad for covering the front access port 1123ae is mounted on the front panel 1123aa, so that the front access port 1123ae can be blocked when maintenance is not required. The front cover plate 1123ad and the front panel 1123aa is connected by snap connection, threaded connection and other removable methods, which is convenient to open/close the front access port 1123ae. It should be noted that the connection method between the front cover 1123ad and the front panel 1123aa is selected according to the actual needs, as long as the front cover 1123ad can be easily disassembled for maintenance.

Please combine with FIG. 20, the intake grille 1123ac is covered at the front end of the front frame portion 1111 for protection of the front end of side-by-side utility vehicle100. The intake grille 1123ac is removably connected to the front panel 1123aa and/or the front frame portion 1111. Along a left-right direction (width direction) of the side-by-side utility vehicle100, the ratio of the width of the intake grille 1123ac to the width of the side-by-side utility vehicle100 is in the range between 0.4 and 0.8. In this way, the intake grille 1123ac has a large intake area, which is convenient for the full heat exchange of the radiator. Moreover, after the intake grille 1123ac is disassembled, the overhaul of all components at the front end of side-by-side utility vehicle100 can be realized due to the large intake area, making the maintenance more convenient.

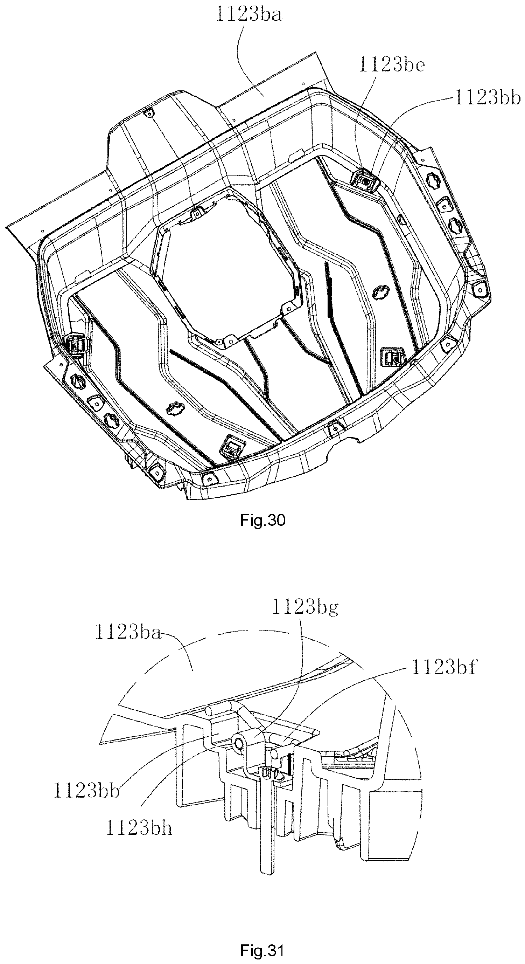

As shown in FIGS. 21 and 30, the rear trim 1123b includes a rear trunk 1123ba, two rear side plates 1123bc and a tail-light panel 1123bd. The rear trunk 1123ba is used to carry goods and is mounted above the rear frame portion 1113. The rear trim 1123b includes two rear side plates 1123bc respectively arranged on both sides of the rear 1123ba and is used as rear fenders to prevent mud and sand splashed by the rear wheels. It should be noted that in one embodiment, the rear trim 1123b further includes rear fenders 1123bi covering the rear wheels 181 vertically to prevent water, mud, sand splashed by the rear wheels 181. At this time, the rear side plate 1123bc is used as a cover. The rear side plate 1123bc is removably connected to the rear frame portion 1113. Thus, the components at the rear frame portion can be repaired by removing the rear side plate 1123bc, to improve the convenience of maintenance. The tail-light panel 1123bd for mounting tail-lights of side-by-side utility vehicle100 is positioned at the rear of the rear trunk 1123ba.

As shown in FIG. 30, D-ring anchors 1123be are provided in the rear trunk 1123ba, and the D-ring anchors 1123be is used to cooperate with external ropes and other components to achieve the fixation of goods in the rear trunk 1123ba. In one embodiment, the inner wall of the rear trunk 1123ba defines a first receiving groove 1123bb, and the D-ring anchors1123be is housed in the first receiving groove 1123bb and is capable of moving relative to the rear trunk 1123ba. When the D-ring anchors 1123be is used, rotate the D-ring anchors 1123be so that the D-ring anchors 1123be protrudes from the inner wall of the rear trunk 1123ba and is used for cooperating with external ropes, steel wires and others. When the D-ring anchors 1123be is not needed, the D-ring anchors 1123be can be completely contained in the first receiving groove 1123bb, and does not protrude from the inner wall of the rear trunk 1123ba, so as to hide the D-ring anchors1123be and avoid the existence of the D-ring anchors 1123be affecting or interfering with the placement of the rear trunk 1123ba.

As shown in FIG. 31, the D-ring anchors 1123be include a D-ring 1123bf and an anchor seat 1123bg. The first receiving groove 1123bb is located at the bottom of the rear trunk 1123ba. The anchor seat 1123bg is fixed on the rear frame portion 1113. The D-ring 1123bf is rotatably mounted on the anchor seat 1123bg. The D-ring 1123bf has a first state that is received into the first receiving groove 1123bb and a second state that protrudes out of the first receiving groove 1123bb. In other words, the D-ring 1123bf is rotated relative to the anchor seat 1123bg to protrude out of or receive in the first receiving groove 1123bb. In this way, when it is not necessary to use the D-ring 1123bf, the D-ring 1123bf is housed in the first groove 1123bb, so as to avoid interference with the goods.

Furthermore, the D-ring 1123bf is a metal part to improve the structural strength of the D-ring 1123bf. The anchor seat 1123bg defines a shaft hole 1123bh, and the D-ring 1123bf is at least partially mounted in the shaft hole 1123bh, and is capable of moving in the shaft hole 1123bh to protrude from or receive in the first receiving groove 1123bb by rotating relative to the Anchor seat 1123bg. The anchor seat 1123bg is a plastic part fixed on the rear frame 1113 or the rear trunk 1123ba by bolts or riveting. It should be noted that the use of plastic parts can reduce the impact sound between the D-ring 1123bf and the Anchor seat 1123bg, and effectively eliminate the abnormal sound.

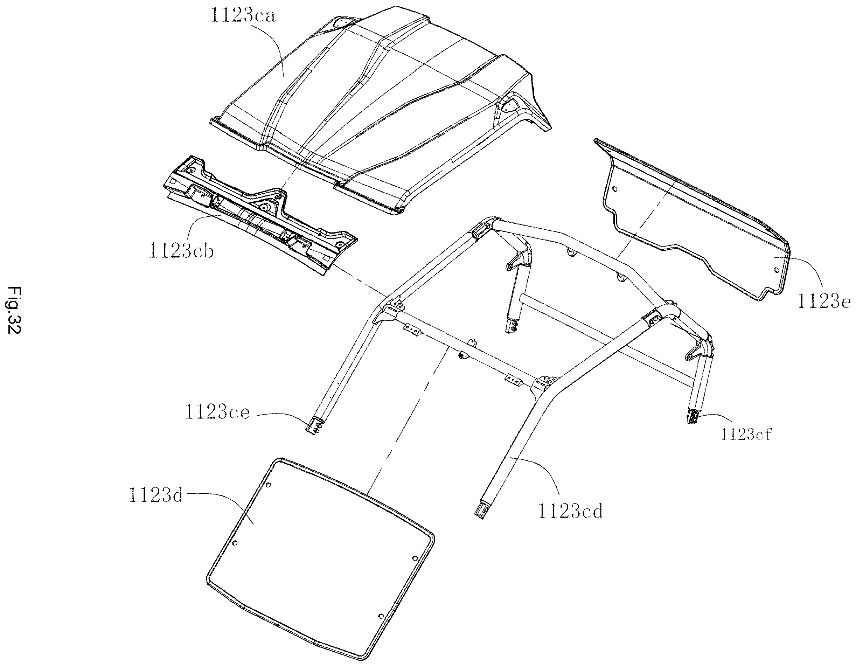

As shown in FIG. 19 and FIG. 32, the exterior trim package piece 1123 further includes a ROPS assembly 1123c, a front windshield 1123d, a rear windshield 1123e, and a rear-view mirror 1123f. The ROPS assembly 1123c covers above the middle frame portion 1112. The ROPS assembly 1123c and the middle frame portion 1112 limits the height of the cabin 1121 in a vertical direction. The ROPS assembly 1123c is mounted on the first pillar 1111h and the second pillar 1113a. The front windshield 1123d is clamped between the front frame portion 1111 and the ROPS assembly 1123c, and is sealed with the first pillar 1111h and the ROPS assembly 1123c. The rear windshield 1123e is clamped between the ROPS assembly 1123c and the rear frame portion 1113, and is sealed with the second pillar 1113aand the ROPS assembly 1123c. In this way, the ROPS assembly 1123c, the front frame portion 1111, the rear frame portion 1113, the front windshield 1123d and the rear windshield 1123e define a closed cabin 1121. The rear-view mirror 1123f is mounted on the first pillar 1111h or the ROPS assembly 1123c for the driver or passenger to observe the situation behind the side-by-side utility vehicle 100.

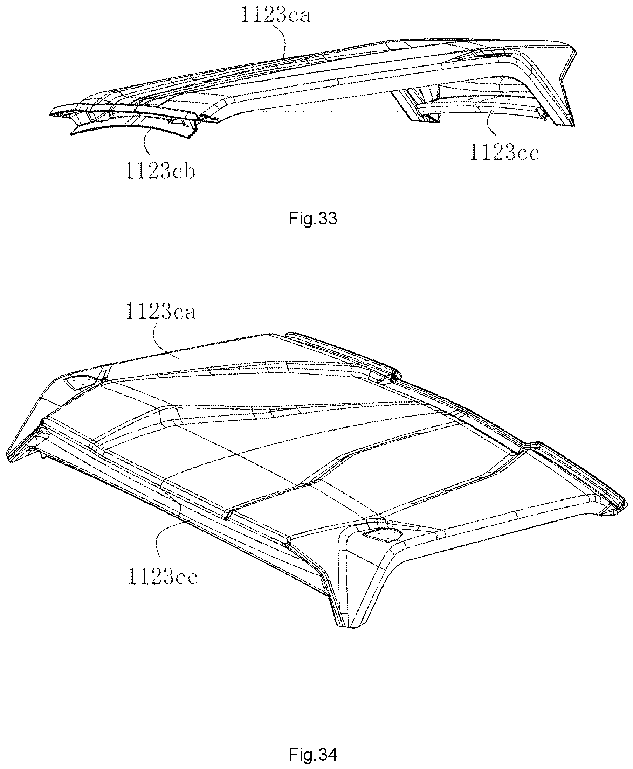

As shown in FIGS. 32 to 34, the ROPS assembly 1123c includes a ceiling 1123ca, a main ROPS tube 1123cd, and a plurality of first connection member 1123ci. The ceiling 1123ca covers the main ROPS tube 1123cd. The front end of the main ROPS tube 1123cd is provided with a first connection portion 1123ce. The rear end of the main ROPS tube 1123cd is provided with a second connection portion 1123cf. The first connection portion 1123ce is connected to the first pillar 1111h by first connection member 1123ci, and the second connection portion 1123cf is connected to the second pillar 1113a by the first connection member 1123ci. The front end of the ceiling 1123ca is provided with a third connection plate 1123cb extending along the width direction of the side-by-side utility vehicle 100. The rear end of the ceiling 1123ca is provided with a fourth connection plate 1123cc extending along the width direction of side-by-side utility vehicle 100. One end of the front windshield 1123d abuts against the surface of the third connection plate 1123cb and is hermetically sealed with the third connection plate 1123cb. One end of the rear windshield 1123e abuts against the surface of the fourth connection plate 1123cc and is hermetically sealed with the fourth connection plate 1123cc, thereby realizing the sealing between the front windshield 1123d and the rear windshield 1123e and the ceiling 1123ca respectively.

In one embodiment, the third connection plate 1123cb and the fourth connection plate 1123cc are arc-shaped. In this way, the connection surfaces between the front windshield 1123d, the rear windshield 1123e and the ceiling 1123ca are arc-shaped. The front and rear windshield 1123e are plane, which improves the sealing performance between the front windshield 1123d, the rear windshield 1123e and the ceiling 1123ca respectively, increases the rigidity of the windward surface, and eliminates warping and slapping noise through the coordination of the curved surface and the plane.

Along a vertical direction, the third connection plate 1123cb bends upward, showing an arch bridge shape. The third connection plate 1123cb and the ceiling 1123ca are integrally manufactured. Similarly, along a vertical direction, the fourth connection plate 1123cc also bends upward, showing an arch bridge shape. The fourth connection plate 1123cc and the ceiling 1123ca are integrally manufactured, so as to facilitate the processing and manufacturing of the whole ceiling 1123ca. It should be noted that in other embodiments, the third connection plate 1123cb and the fourth connection plate 1123cc may also be a split structure with the ceiling 1123ca.

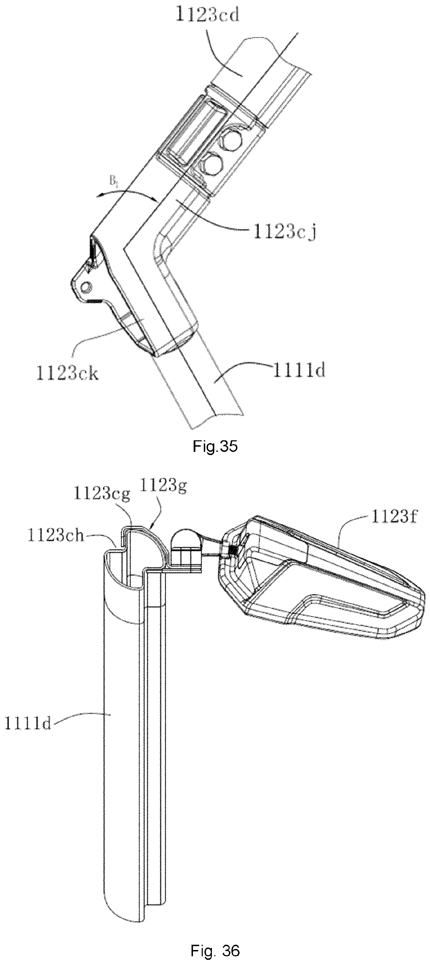

As shown in FIG. 3 and FIG. 35, the first connection member 1123ci is a casting and is hollow. In this way, the first connection member 1123ci has sufficient structural strength. The connection member 1123ci includes a first tube portion 1123cj and a second tube portion 1123ck connected to each other. The shape of one end of the first tube portion 1123cj matches with the shape of the first connection portion 1123ce or the second connection portion 1123cf, so that the first connection portion 1123ce or the second connection portion 1123cf can be inserted into the interior of the first connection member 1123ci. The end of the first tube portion 1123cj is connected to the first connection portion 1123ce or the second connection portion 1123cf by bolts or by welding. One end of the second tube portion 1123ck is connected to the end of the first tube portion 1123cj away from the main ROPS tube 1123cd, and the first tube portion and the second tube portion 1123ck collectively defines an angle. The other end of the second tube portion 1123ck is connected to the first pillar 1111h by welding or by bolts. In this way, structural strength of ceiling 1123ca is enhanced and the overall stability of the frame 10 is increased. In one embodiment, the axis of the first tube portion 1123cj and the axis of the second tube portion 1123ck collectively defines an angle B1 in the range between 60 ° and 80 °. In this way, the first tube portion 1123cj is connected to the first pillar 1111h without occupying the space of the front frame portion 1111, which makes enough space for the installation of other components (such as headlights) for easy installation, adjustment and maintenance.

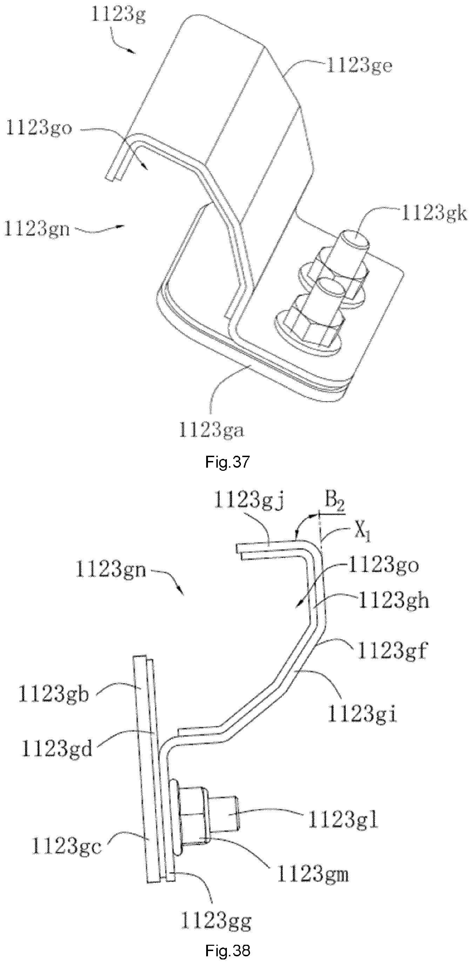

As shown in FIGS. 36 to 38, the main ROPS tube 1123cd or the first pillar 1111h is provided with a rear-view mirror support 1123g, and the rear-view mirror 1123f is mounted on the rear-view mirror support 1123g. That is to say, an installation position of rear-view mirror 1123f is provided separately to avoid opening an assembly hole on the main ROPS tube 1123cd or the first pillar 1111h and damaging the integrity of the main ROPS tube 1123cd or the first pillar 1111h. In an embodiment, the rear-view mirror support 1123g includes a third connection member 1123ge, a fourth connection member 1123gb and a first locking member 1123gk. The main ROPS tube 1123cd or the first pillar 1111h is provided with a mounting portion 1123cg. One end of the third connection member 1123ge is attached to one side of the mounting portion 1123cg, and the other end of the third connection member 1123ge is suspended relative to the main ROPS tube 1123cd or the first pillar 1111h. One end of the fourth connection member 1123gb is attached to the other side of the mounting portion 1123cg, and the third connection member 1123ge and the fourth connection member collectively defines a clamping space 1123go. The clamping space 1123go defines a second opening 1123gn. The width of the second opening 1123gn is smaller than that of the mounting portion 1123cg, preventing the mounting portion 1123cg from leaving the clamping space 1123go. One end of the fourth connection member 1123gb away from the mounting portion 1123cg and one end of the third connection member 1123ge away from the mounting portion 1123cg are connected by a first fastener 1123gk. In this way, the fourth connection member 1123gb and the third connection member 1123ge form a support for installing the rear-view mirror 1123f. The rear-view mirror 1123f is correspondingly mounted on the support, and the installation point of the rear-view mirror 1123f is the same as the installation point of the first fastener 1123gk. In this way, the first fastener1123gk realizes the locking of the rear-view mirror 1123f while locking the third connection member 1123ge and the fourth connection member 1123gb. In this way, the third connection member and the fourth connection member not only save the processing procedure, but also simplify the installation.

The third connection member 1123ge is formed by stamping, casting and other processes, and comprises a first adhesive plate 1123gb and a first suspension plate 1123gc. The first adhesive plate 1123gb is affixed to one side of the mounting portion 1123cg. The first suspension plate 1123gc is connected to the first adhesive plate 1123gb, and is suspended relative to the main ROPS tube 1123cd or the first pillar 1111h. The fourth connection member 1123gb is formed by stamping, casting and other processes, which includes a second adhesive plate 1123gf and a second suspension plate 1123gg. The second adhesive plate 1123gf is affixed to the other side of the mounting portion 1123cg. The second adhesive plate 1123gf and the first adhesive plate 1123gb collectively defines a clamping space 1123go. The second suspension plate 1123gg is connected to the second adhesive plate 1123gf, and is suspended relative to the main ROPS tube 1123cd or the first pillar 1111h.

In some embodiments, a first anti-skid pad 1123gd is arranged on the joint surface of the first adhesive plate 1123gb and the mounting portion 1123cg. The first anti-skid pad 1123gd is used to prevent slipping between the first adhesive plate 1123gb and the mounting portion 1123cg. Similarly, a second anti-skid pad 1123gh is arranged on the joint surface of the second adhesive plate 1123gf and the mounting portion 1123cg. The second anti-skid pad 1123gh is used to prevent slipping between the second adhesive plate 1123gf and the mounting portion 1123cg. The first suspension plate 1123gc and the second suspension plate 1123gg abut against each other and fit together. In order to improve the tightness of the connection between the first suspension plate 1123gc and the second suspension plate 1123gg, the first anti-skid pad 1123gd can also be extended to the first suspension plate 1123gc.

The main ROPS tube 1123cd or the first pillar 1111h defines a plurality of clamping grooves 1123ch and mounting portions 1123cg are formed between two adjacent clamping grooves 1123ch. The second adhesive plate 1123gf includes a first curved section 1123gi and a first bending section 1123gj. The first curved section 1123gi fits with the outer surface of the mounting portions 1123cg. The first bending section 1123gj is arranged at one end of the first curved section 1123gi and is capable of stretching into the clamping grooves 1123ch. The first curved section 1123gi defines a tangent line X1 at a point connecting the first curved section 1123gi and the first bending section 1123gj. The bending section 1123gj and the tangent line X1 defines an angle B2in the range between 30° and 90°. In this way, the first bending section 1123gj is hooked in the concave groove 1123ch to improve the reliability of the connection between the rear-view mirror support 1123g and the main ROPS tube 1123cd or the first pillar 1111h.

In some embodiments, the first fastener 1123gk includes a locking rod 1123gl and a locking nut 1123gm. One end of the locking rod 1123gl is mounted on the second suspension plate 1123gg. The other end of the locking rod 1123gl is capable of penetrating the first suspension plate 1123gc and the rear-view mirror 1123f. The locking nut 1123gm is threaded with the locking rod 1123gl to lock the second suspension plate 1123gg and the first suspension plate 1123gc. In other embodiments, one end of the first fastener 1123gk passes through the first suspension plate 1123gc and the second suspension plate 1123gg, and is locked by the lock nut 1123gm, thus realizing the connection between the first suspension plate 1123gc and the second suspension plate 1123gg. It should be noted that in other embodiments, the first fastener 1123gk may also be a buckle, a riveting member or the like structure.

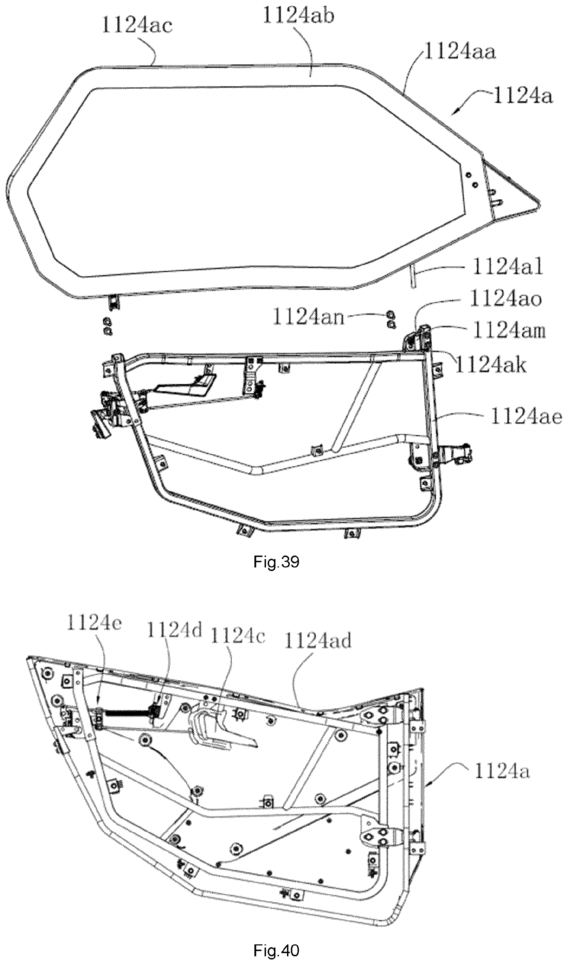

As shown in FIGS. 39 to 44, the vehicle door 1124 includes a door body device 1124a, a door latch device 1124b, an inner handle 1124c, an outer handle 1124d, and a linkage 1124e. One side of the door body device 1124a is rotationally connected to the frame 10 or the vehicle cover 11, and is used to block or seal the first opening 1121a. The door latch device 1124b includes a catch 1124ba and a catch hook 1124bb. The catch 1124ba is mounted on the frame 10. The catch hook 1124bb is mounted on the side where the door body device 1124a is far away from the rotary connection between the door body device 1124a and the frame 10. The catch hook 1124bb cooperates with the catch 1124ba to realize the locking between the door body device 1124a and the frame 10 while the door body device 1124a blocks the first opening 1121a. The outer handle 1124d is arranged on the outer side of the door body device 1124a for passengers or drivers to unlock the vehicle door 1124 from the outside. The inner handle 1124c is arranged on the inner side of the door body device 1124a for passengers or drivers to unlock the door 1124 from the inside (inside the cabin 1121). The linkage 1124e is mounted in the door body device 1124a. One end of the linkage 1124e is connected to the catch hook 1124bb, and the other end of the linkage 1124e is connected to the inner handle 1124c and the outer handle 1124d. When the vehicle door 1124 is unlocked from the outside, pull the outer handle 1124d by hand, and the outer handle 1124d drives the catch hook 1124bb to move and open the vehicle door 1124 by the linkage 1124e, so as to unlock the door body device 1124a. At this time, pull the vehicle door 1124 and make a catch 1124ba separate from the catch hook 1124bbto open the door 1124 externally. When the vehicle door 1124 is unlocked from the interior of the cabin 1121, pull the inner handle 1124cby hand, and the inner handle 1124c drives the catch hook 1124bb to move and open the vehicle door 1124 by the linkage 1124e, so as to unlock the door body device 1124a. At this time, push the vehicle door 1124 and make a catch 1124ba separate from the catch hook 1124bb to open the door 1124 internally. When it is necessary to lock the vehicle door 1124, push/pull the vehicle door 1124 and make the catch hook 1124bb to snap on the catch 1124ba.

As shown in FIG. 39, the door body device 1124a includes an upper door body 1124aa, a lower door body 1124ad, and a second connection device 1124ak. The lower door body 1124ad is rotatably connected to the frame 10 or the vehicle cover 11. The second connection device 1124ak is removably connected between the upper door body 1124aa and the lower door body 1124ad to realize the removable connection between the upper door body 1124aa and the lower door body 1124ad. Thus, if necessary, the upper door body 1124aa can be removed.

In one embodiment, the second connection device 1124ak includes a connecting pin 1124al, a clamping plate 1124am, and a second connection member 1124an. The lower door body 1124ad includes a first skeleton 1124ae and an interior door trim panel 1124af. The a first skeleton 1124ae is arranged in the interior door trim panel 1124af. The connecting pin 1124al is arranged on the upper door body 1124aa, and the clamping plate 1124am defines a clamping hole 1124acd. The connecting pin 1124al is capable of inserting into the clamping hole 1124acd. One end of the clamping plate 1124am is mounted on the first skeleton 1124ae. The other end of the clamping plate 1124am is suspended relative to the first skeleton 1124ae. The second connection member 1124an is removably connected to the interior door trim panel 1124af, and the other end of the clamping plate 1124am is capable of compressing the connecting pin 1124al under the action of the second connection member 1124an, so as to realize the removable connection between the lower door body 1124ad and the upper door body 1124aa. The second connection member 1124an is connected the interior door trim panel 1124af by bolts, screws, or other screw elements. It should be noted that, in other embodiments, the second connection member 1124an may also be other components. When it is necessary to disassemble the upper door 1124aa, unscrew the bolts to release the clamping force of the clamping plate 1124am on the connecting pin 1124al, and pull the connecting pin 1124al out of the clamping hole, which is not only convenient for connection but also simple for disassembly and assembly.

As shown in FIG. 39, the upper door 1124aa includes a second skeleton 1124ab and a flexible package 1124aab. The flexible package 1124ac wraps the second skeleton 1124ab and is removably connected to the second skeleton 1124ab. The flexible packages is cloth, leather, plastic, etc. In this way, the production cost of the upper door body 1124aa is effectively reduced. At the same time, if necessary, the flexible package can also be removed to leave the first skeleton 1124ae on the lower door body 1124ad. In this way, the design is more flexible, and the applicability of the vehicle door 1124 is improved to meet the various needs of customers.

As shown in FIG. 44, the lower door body 1124ad is provided with a second coupling portion 1124ah. The frame 10 or the vehicle cover 11 is provided with a second coupling seat 1117. The second coupling portion 1124ah is provided with a coupling hole 1124ai. The second coupling seat 1117 is provided with a hinge pin 1117a inserted into the coupling hole 1124ai, and the end of the hinge pin 1117a far away from the second coupling seat 1117 is clamped by a first gasket 1124aj to prevent the second coupling seat 1117 from separating from the second coupling portion 1124ah in a vertical direction. In this way, the first gasket 1124aj is used to limit the position. When disassembling, it is only necessary to remove the limit of the first gasket 1124aj to realize the disassembly and assembly of the lower door body 1124ad, which greatly reduces the difficulty of disassembly and assembly of the lower door 1124ad, and improves the convenience of maintenance of the door body device 1124a. In one embodiment, the first gasket 1124aj has a bayonet, and the first gasket 1124aj is clamped on the hinge pin 1117a through the bayonet. In this way, the quick disassembly and assembly between the first gasket 1124aj and the hinge pin 1117a can be realized, and the convenience of use can be improved. The first gasket 1124aj is a C-shaped gasket.

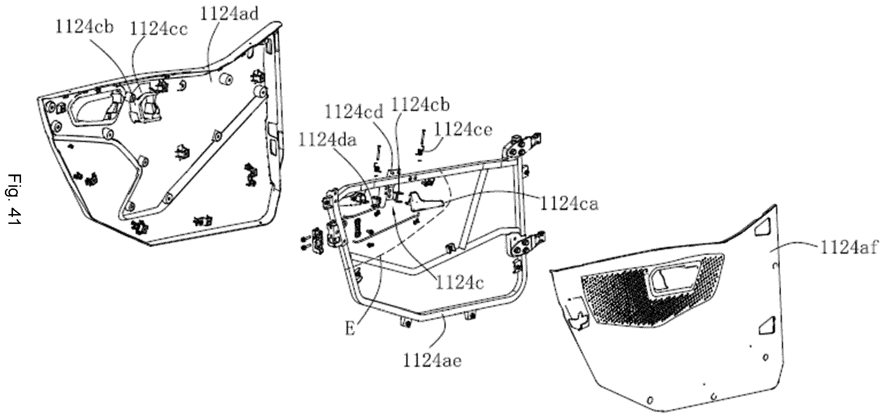

As shown in FIG. 40 and FIG. 41, the door latch device 1124b also includes a door latch base 1124bc, a door latch frame 1124bd and adjusting bolts 1124be. The door latch frame 1124bd is fixed on the frame 10, and is provided with a first adjusting hole 1124bg and second adjusting holes 1124bh. The catch 1124ba is arranged on the lock base 1124bc. The extension direction of the first adjusting hole 1124bg crosses the extension direction of the second adjusting hole 1124bh. The adjusting bolts 1124be pass through the first adjusting hole 1124bg and the second adjusting holes 1124bh, and locks the door latch base 1124bc and the lock frame 1124bd with nuts. When the position of the catch 1124ba need to be adjusted, loosen the nut/adjusting bolts 1124be, and then move the door latch base 1124bc along the extension direction of the first adjusting hole 1124bg and/or move the door latch base1124bc along the extension direction of the second adjusting hole 1124bh. After the position of the catch 1124ba is adjusted, tighten the nut to lock the door latch base 1124bc. In this way, the adjustment of two degrees of freedom in different directions of the catch 1124ba can be realized, which can not only compensate for the error between the catch 1124ba and the catch hook 1124bb in the production and assembly process, but also adjust the seam of the vehicle door 1124. In one embodiment, the door latch device 1124b further includes a pressing piece 1124bf sleeved on the adjusting bolt 1124be and located between the door latch frame 1124bd and the nut to improve the locking force of the nut and prevent the nut from loosening in the process of vibration.

As shown in FIG. 42, the linkage 1124e includes a first link 1124ea, a second link 1124eb, a third link 1124ec and a linkage 1124ed. The linkage piece 1124ed is rotatably mounted on the frame 10, and the two ends of the linkage piece 1124ed are provided with a first linkage hole 1124ee and a second linkage hole 1124ef extending along a front-rear direction of the frame 10. The first link 1124ea is connected between the outer handle 1124d and the catch hook 1124bb. One end of the second link 1124eb is connected to the inner handle 1124c, and the other end of the second link 1124eb is movably arranged in the second linkage hole 1124ef and is capable of abutting against the end of the second linkage hole 1124ef facing toward the catch 1124ba. One end of the third link 1124ec is fixedly connected to the first link 1124ea, and the other end of the third link 1124ec is movably arranged in the first linkage hole 1124ee and is capable of abutting against the end of the first linkage hole 1124ee facing toward the inner handle 1124c or the outer handle 1124d. When the outer handle 1124d is pulled, the outer handle 1124d pushes the catch hook 1124bb to move by the first link 1124ea to unlock the catch hook 1124bb. At this time, the third link 1124ec runs in the first linkage hole 1124ee without linkage with linkage piece 1124ed, that is, the pull of the outer handle 1124d will not linkage the inner handle 1124c. When pulling the inner handle 1124c, the inner handle 1124c pushes the linkage piece 1124ed through the second link 1124eb, and the linkage piece 1124ed rotates relative to the frame 10 and drives the third link 1124ec to move, so that the first link 1124ea drives the catch hook 1124bb to unlock.

Please continue to refer to FIG. 42. the outer handle 1124d is also be provided with a third linkage hole 1124da. The extension direction of the third linkage hole 1124da is consistent with the extension direction of the first linkage hole 1124ee. The end of the first link 1124ea away from the catch hook 1124bb is removably arranged in the third linkage moving hole 1124da and is capable of abutting against the end of the third linkage hole 1124da away from the catch 1124ba. When the outer handle 1124d is pulled, the first link 1124ea is abutted against one end of the third connecting hole 1124da, so that the outer handle 1124d is capable of pushing the catch hook 1124bb to move by the first link 1124ea, so as to unlock the catch hook 1124bb. At this time, the third link 1124ec runs in the first linkage hole 1124ee without linkage with linkage piece 1124ed, that is, the pull of the outer handle 1124d will not linkage the inner handle 1124c. When pulling the inner handle 1124c, one end of the second link 1124eb is abutted against one end of the second linkage hole 1124ef, and the inner handle 1124c pushes the linkage piece 1124ed through the second link 1124eb. One end of the third link 1124ec is abutted against the first linkage hole 1124ee, the linkage piece 1124ed rotates relative to the frame 10 and drives the third link 1124ec to move, so that the first link 1124ea drives the catch hook 1124bb to unlock. At this time, the first link 1124ea, which is far away from the catch hook 1124bb, runs in the third linkage hole 1124da without linkage with the outer handle 1124d. In other words, in this embodiment, the inner handle 1124c and the outer handle 1124d both move independently without affecting each other.

The inner handle 1124c includes an inner handle 1124ca, a handle base 1124cb, a first coupling plate 1124cd, and a first torsion spring 1124ce. The handle base 1124cb and the lower door body 1124ad are integrally manufactured. so as to avoid the separate production of a set of mold for processing the handle seat 1124cb, and save the mold opening cost. The handle base 1124cb and the lower door body 1124ad collectively defines an accommodating cavity 1124cc. One end of the first coupling plate 1124cd is fixed on the lower door body 1124ad, and the other end of the first coupling plate 1124cd stretches into the accommodating cavity 1124cc. The inner handle 1124ca and the first coupling plate 1124cd are rotationally connected by a rotating shaft. The first torsional spring 1124ce is sleeved on the rotating shaft, and is fixed between the inner handle 1124ca and the first coupling plate 1124cd. When the inner handle 1124ca is pulled, the inner handle 1124ca rotates relative to the first coupling plate 1124cd, so as to push the first link 1124ea to move by the third link 1124ec, drive the catch hook 1124bb to unlock, release and reset the inner handle 1124ca under the action of the first torsion spring 1124ce.

As shown in FIG. 45, FIG. 52, FIG. 55 and FIG. 81, the side-by-side utility vehicle 100 further includes a prime mover assembly 12 mounted on the frame 10 for provide power for the movement of the side-by-side utility vehicle 100. The prime mover assembly 12 includes an engine 121, transmission 122, cooling device 123 and fuel supply system 124. The engine 121 is mounted on the rear frame portion 1113 for outputting power. The transmission 122 is mounted on one side of engine 121 to change the speed and torque of engine 121. The cooling device 123 is connected to the engine 121 to cool the engine 121. The fuel supply system 124 is mounted on the rear frame portion 1113 and connected to the engine 121 to provide fuel for the engine 121.

Refer to FIG. 45, the rear frame portion 1113 is provided with a first support bracket 1113c, a second support bracket 1113j, a third support bracket 1113k and a buffer assembly 1113p. The first support bracket 1113c is used to support and install the engine 121 so that the engine 121 is suspended from the rear frame portion 1113. The second support bracket 1113j and the first support bracket 1113c are spaced and located at the same end of the engine 121 to support and install the engine 121, so that the engine 121 is suspended from the rear frame portion 1113. The third support bracket 1113k is located at the other end of the engine 121. The buffer assembly 1113p is arranged on the third support bracket 1113k to support and install the engine 121 so that the engine 121 is suspended from the rear frame portion 1113. The first support bracket 1113c, the second support bracket 1113j and the third support bracket 1113k are arranged in a triangle, which forms a three-point support to realize the stable installation of the engine 121.

The first support bracket 1113c and the second support bracket 1113j are distributed on two sides of one end of the engine 121. The structure of the first support bracket 1113c is the same in principle as the structure of the second support bracket 1113j. Taking the first support bracket 1113c as an example, describe the structure, the connection with the rear frame portion 1113 and the engine 121. The connection between the first support bracket 1113c and the engine 121, and the connection between the third support bracket 1113k and the engine 121 are not in the same horizontal plane.

As shown in FIG. 47, the first support bracket 1113c includes a first support base 1113d, a first bolt 1113e, a first shaft sleeve 1113f, and two first elastic sleeves 1113g. The engine 121 defines a first support hole 1211. The first support base 1113d is fixed on the rear frame portion 1113. The first shaft sleeve 1113f is embedded in the first support hole 1211. The two first elastic sleeves 1113g are respectively arranged at two ends of the first support hole 1211, and one end of the first elastic sleeve 1113g is embedded in the first support hole 1211, and the other end of the first elastic sleeve 1113g is located between the engine 121 and the first support base 1113d, so as to serve as a buffer component, buffer the swing of the engine 121, and improve the stability of the installation of the engine 121.

The first elastic sleeve 1113g comprises an extension section 1113h and an elastic section 1113i. The extension section 1113h extends into the first support hole 1211 and abuts against the first shaft sleeve 1113f. The elastic section 1113i is located outside the first support hole 1211, and the diameter of the elastic section 1113i is larger than the diameter of the extension section 1113h and defines a shoulder. Along the axis direction of the first shaft sleeve 1113f, the thickness of the first support base 1113d is defined as h1, and the thickness of the elastic section 1113i is defined as h2, wherein the ratio of h2 to h1 is greater than or equal to 2. In other words, the thickness of the elastic section 1113i is at least twice the thickness of the first support base 1113d. In this way, sufficient buffer support can be provided between the first support 1113d and the engine 121 to avoid hard contact between the engine 121 and the first support base 1113d.

As shown in FIG. 48 and FIG. 49, the third support bracket 1113k includes a third support base 1113l, a second coupling plate 1113m, a first support plate 1113n and a second connection plate 1113o. The third support base 1113l is fixed on the rear frame portion 1113. The buffer assembly 1113p is mounted at the end of the third support base 1113l far from the rear frame portion 1113. The second coupling plate 1113m is fixed to the engine 121 by bolts, one side of the first support plate 1113n is fixed to the second coupling plate 1113m, and the other side of the first support plate 1113n is fixed to the buffer assembly 1113p. Thus, the connection between the engine 121 and the buffer assembly 1113p is realized through the connection of the second coupling plate 1113m and the first support plate 1113n. One end of the second connection plate 1113o is fixed on the second coupling plate 1113m, and the other end of the second connection plate 1113o is fixed on the engine 121. Therefore, the second connection plate 1113o is used to limit the rotation of the engine 121 and overturn, effectively improving the installation stability of the engine 121.

The buffer assembly 1113p includes a limit plate 1113q, a first fixation plate 1113u, and a buffer 1113v. The limit plate 1113q defines a limit space 1113r. The buffer 1113v is mounted on the third support base 1113l and at least partially located in the limit space 1113r. The first fixation plate 1113u is mounted at the end of the buffer 1113v far from the third support base1113l. In addition, a portion of the first fixation plate 1113u is located in the limit space 1113r to fit with the limit plate 1113q in a vertical direction and a left-right direction. In this way, while increasing the rigidity of the buffer 1113v, the position of the buffer 1113v can be limited so that the buffer 1113v can absorb the vibration of the engine 121. The swinging of the engine 121 is restrained to prevent collision and overturning. The buffer 1113v is a rubber part or a silicone part.

As shown in FIG. 49, in one embodiment, the limit plate 1113q includes a bottom limit plate 1113s and two side limit plates 1113t. The bottom limit plate 1113s is fixed on the third support base 1113l. Two limit plates 1113t are spaced on the bottom limit plate 1113s, and define a limit space 1113r. The buffer 1113v includes a buffer section 1113w and a first limit section 1113x. The buffer section 1113w is mounted on the bottom limit plate 1113s. The first limit portion 1113x defines a limit slot 1113aa, and a portion of the first fixation plate 1113u is embedded in the limit slot 1113aa. That is to say, when the first fixation plate 1113u is matched with the limit plate 1113q, the first limit portion 1113x is in direct contact with the first fixation plate 1113u. In this way, rigid contact between the first fixation plate 1113u and the limit plate 1113q can be avoided. In one embodiment, the first limit portion 1113x is in a U-shaped, and the first fixation plate 1113u is Ω-shaped.

As shown in FIGS. 50 and 51, the output shaft of engine 121 is sleeved with a gear 1212. A speed sensor 1213 is arranged adjacent to the output shaft of the engine 121. During the rotation of the output shaft, the speed sensor 1213 cooperates with the gear 1212 and detects the rotation turns of the gear 1212 to calculate the speed of the side-by-side utility vehicle 100. In one embodiment, the vehicle speed sensor 1213 is mounted on the rear frame portion 1113 or the main body of the engine 121. The gear 1212 includes at least three teeth 1214. It should be noted that the gear 1212 may include four teeth 1214, five teeth 1214, or more teeth 1214.

In this embodiment, as shown in FIG. 51, the gear 1212 includes a first tooth 1214a, a second tooth 1214b, and a third tooth 1214c. The distance between the first tooth 1214a and the second tooth 1214b is defined as L1, the distance between the second tooth 1214b and the third tooth 1214c is defined as L2, and the distance between the first tooth 1214a and the third tooth1214c is defined as L3. L1 is equal to L2 and not equal to L3; Alternatively, L1 is equal to L3 and not equal to L2. In this way, the signal trigger period acquired by speed sensor 1213 is an irregular period, and the real speed of side-by-side utility vehicle 100 is calculated based on this irregular period. In this way, when the engine 121 is idling, the irregular period is taken as the real speed calculation period of side-by-side utility vehicle 100, which can avoid the situation that the engine 121 shakes and triggers the speed sensor 1213 by mistake, thus avoiding the phenomenon of the dashboard speed jump, and effectively improving the accuracy and reliability of the speed display.

As shown in FIG. 52, the cooling device 123 includes a cooling inlet pipe 1231, a cooling outlet pipe 1232, a cooling medium storage box 1233, and a radiator 1234. Correspondingly, the engine 121 defines a cooling inlet (not shown) in fluid communication with the cooling inlet pipe 1231 and a cooling outlet (not shown) in fluid communication with the cooling outlet pipe 1232. The cooling medium storage box 1233 is mounted in the middle of the front frame portion 1111 to accommodate coolant and provide coolant for the delivery of the cooling outlet pipe 1232. The cooling of the engine 121 is water cooling or refrigerant cooling. Correspondingly, the cooling medium storage box 1233 1233 is a water tank or a refrigerant tank. After heat exchange with radiator 1234, the coolant enters into engine 121 through cooling inlet pipe 1231 and cooling inlet to cool engine 121. Then, the coolant exchanged with the engine 121 enters the cooling outlet pipe 1232 and is transported to the radiator 1234 through the cooling outlet pipe 1232, wherein the coolant exchanges heat with the radiator 1234. The coolant after heat exchange enters the cooling inlet pipe 1231 again, then the cooling of engine 121 is achieved. It should be noted that, the cooling device 123 further includes other components such as sensors, thermostats and actuators that work together to achieve heat dissipation/cooling of the engine 121. The cooling principle of the cooling device 123 is not detailed here.

In one embodiment, the radiator 1234 is located on the front frame portion 1111, and the cooling inlet pipe 1231 and the cooling outlet pipe 1232 extend in a front-rear direction of the side-by-side utility vehicle 100. The cooling inlet pipe 1231 and the cooling outlet pipe 1232 is selected from any one of the aluminum pipe, steel pipe or rubber pipe. Moreover, the cooling inlet pipe 1231 and the cooling outlet pipe 1232 is split structures to facilitate the processing and manufacturing. It should be noted that, in other embodiments, the cooling inlet pipe 1231 and the cooling outlet pipe 1232 is integrally manufactured.

Continuing with refer to FIG. 52, the cooling inlet pipe 1231 includes the first pipe 1231a, the second pipe 1231d and a first fastener 1231e, and the cooling outlet pipe 1232 includes a third pipe 1232a, a fourth pipe 1232d and a second fastener 1232e. The first pipe 1231a is fluid communication with the cooling inlet, and the second pipe 1231d extends from the front end to the rear end of the side-by-side utility vehicle 100. One end of the second pipe 1231d is in fluid communication with the first pipe 1231a, and the other end of the second pipe 1231d is fluid communication with the radiator 1234. The first fastener 1231e is sleeved at the connection between the second pipe 1231d and the first pipe 1231a to firmly connect the first pipe 1231a and the second pipe 1231d. The third pipe 1232a is in fluid communication with the cooling inlet, and the fourth pipe 1232d extends from the front end to the rear end of the side-by-side utility vehicle 100. One end of the fourth pipe 1232d is in fluid communication with the third pipe 1232a, and the other end of the fourth pipe 1232d is in fluid communication with the radiator 1234. The second fastener 1232e is sleeved at the connection between the third pipe 1232a and the fourth pipe 1232d to firmly connect the third pipe 1232a and the fourth pipe 1232d.

In one embodiment, the first pipe 1231a is a rubber pipe, and the second pipe 1231d is an aluminum pipe. The second pipe 1231d extends into the first pipe 1231a, and the rubber pipe is sealed with the aluminum pipe to avoid coolant leakage. Similarly, the third pipe 1232a is a rubber pipe, and the fourth pipe 1232d is an aluminum pipe. The fourth pipe 1232d extends into the third pipe 1232a, and the rubber tube is sealed with the aluminum tube. At the same time, the second pipe 1231d includes at least two interconnected sections, and the axes of the two sections do not coincide. In this way, the second pipe 1231d itself can be limited to each other, thus avoiding the twisting of the second pipe 1231d, thus ensuring a sufficient safety distance between the second pipe 1231d and the fourth pipe 1232d, i.e. avoiding contact and wear between the two pipes. Similarly, the fourth pipe 1232d at least includes two interconnected sections, and the axes of the two sections do not coincide. In this way, the fourth pipe 1231d itself can be limited to each other, thus avoiding the twisting of the fourth pipe 1231d, thus ensuring a sufficient safety distance between the second pipe 1231d and the fourth pipe 1232d, i.e. avoiding contact and wear between the two pipes. In the embodiment, the fourth pipe 1232d is an elbow pipe and the second pipe 1231d is a straight pipe. In this way, the shape of the two pipes makes a clear difference in order to facilitate material management. At the same time, the design of the elbow pipe can also give way to other components on the frame 10 to make the frame 10 more compact as a whole.

As shown in FIGS. 53 and 54, in one embodiment, in order to avoid interference in installation between the first fastener 1231e and the second fastener 1232e, the first fastener 1231e and the second fastener 1232e are oriented to a predetermined position, thereby avoiding interference problems in installation between the first fastener 1231e and the second fastener 1232e. In order to enable a quick connection between the first pipe 1231a and the second pipe 1231d, and between the third pipe 1232a and the fourth pipe 1232d, both the first fastener 1231e and the second fastener 1232e are clamp structures.

It should be noted that the clamp structure will have corresponding projections, and if the projections of the two clamps are arranged face-to-face, this will not only cause the distance between the adjacent cooling inlet pipes 1231 and the cooling outlet pipes 1232 to take up a large space, but also cause installation interference problems. A first mark 1231b is provided on the first pipe 1231a. When the corresponding clamps clamp the first pipe 1231a and the second pipe 1231d, the protruding portion 1231f of the clamp corresponds to the first mark 1231b. It should be noted that the first mark 1231b may also be provided on the second pipe 1231d. A second mark 1232b is provided on the third pipe 1232a. When the corresponding clamps clamp the third pipe 1232a and the fourth pipe 1232d, the protruding portion 1231f of the clamp corresponds to the second mark 1232b. It should be noted that a second mark 1232b may also be provided on the fourth pipe 1231b. The positive projection of the first mark 1231b on the outer surface of the third pipe 1232a or the fourth pipe 1232d does not coincide with the position of the second mark 1232b on the outer surface of the third pipe 1232a or the fourth pipe 1232d. In this way, the staggered arrangement of the protruding portion 1231f of the two clamps can not only avoid installation interference, but also make the cooling inlet pipe 1231 and the cooling outlet pipe 1232 closer to each other to save space.

The first pipe 1231a is provided with a third mark 1231c, and the third mark 1231c and the first mark 1231b are located on different pipes. For example, if the first mark 1231b is provided on the first pipe 1231a, then the third mark 1231c is provided on the second pipe 1231d and vice versa. At the same time, the first mark 1231b corresponds to the third mark 1231c. It should be noted that by setting the third mark 1231c, not only can different marks be used to identify which pipe is connected to the engine 121, but also which pipe is the cooling inlet or outlet pipe, thus improving the installation effect. Furthermore, the first mark 1231b corresponds to the third mark 1231c, which enables the relative position between the first pipe 1231a and the second pipe 1231d to be determined, i.e. the assembly angle between the first pipe 1231a and the second pipe 1231d can be quickly determined to improve the assembly efficiency. A third mark 1231c may also be provided on the second pipe 1231d. Similarly, a fourth mark 1232c may also be provided on the third pipe 1232a, and the fourth mark 1232c may correspond to and cooperate with the second mark 1232b. It should be noted that the fourth pipe 1232d may also be provided with the fourth mark 1232c.

The first mark 1231b, the second mark 1232b, the third mark 1231c and the fourth mark 1232c may selected from the group consisting of color mark, groove mark, bulge mark, and combinations thereof as needed. In this embodiment, the first mark 1231b, the second mark 1232b, the third mark 1231c and the fourth mark 1232c is all color-marked. The first mark 1231b and the third mark 1231c are different colors, and the second mark 1232b and the fourth mark 1232c are different colors.

As shown in FIG. 52, the cooling device 123 also includes a plurality of clips 1234. Each clip 1234 includes a third opening 1234a and is connected to both the cooling inlet pipe 1231 and the cooling outlet pipe 1232 at the same time, with clips 1234 arranged at intervals. The third opening 1234a of each clip 1234 is oriented differently, thus limiting the cooling inlet pipe 1231 and the cooling outlet pipe 1232 in different directions to prevent rotation of the cooling inlet pipe 1231 and the cooling outlet pipe 1232, thereby avoiding interference and friction between cooling inlet pipe 1231, cooling outlet pipe 1232 and surrounding components. In addition, as the cooling inlet pipe 1231 and cooling outlet pipe 1232 need to extend from the front end to the rear end, the second pipe 1231d and fourth pipe 1232d will be relatively longer. Therefore, a plurality of clips 1234 are generally clamped at intervals on the second pipe 1231d and the fourth pipe 1232d. At least one of the clips 1234 has a third opening 1234a facing downwards and at least one of the clips 1234 has a third opening 1234a facing upwards. Alternatively, one of the clips 1234 has a opening facing the left of the side-by-side utility vehicle 100 and the other has an opening 1234 facing the right of the side-by-side utility vehicle 100.

As shown in FIGS. 55 to 62, the fuel supply system 124 includes a fuel tank 1241, an oil inlet pipe 1242, a floater 1243, and a carbon canister 1244. The fuel tank 1241 is mounted on the frame 10 to store the fuel for combustion of the engine 121. One end of the oil inlet pipe 1242 is mounted on the fuel tank 1241 and is connected internally to the fuel tank 1241. The other end of the oil inlet pipe 1242 is secured to the frame 10 and/or vehicle cover 11 and is used as a fuel filler for easy fuel filling. The floater 1243 is located in the fuel tank 1241 for detecting the amount of fuel in the fuel tank 1241. The carbon canister 1244 is used to absorb or store volatile fuel vapor from fuel tank 1241, and when the side-by-side utility vehicle 100 starts, the absorbed fuel vapor is re-entered into the intake manifold of engine 121 and burned to achieve fuel economy and environmental protection. The carbon canister 1244 is located above fuel tank 1241 along a vertical direction. In this way, not only can the oil in the fuel tank 1241 be avoided to flow back into the carbon canister 1244, but also the carbon canister 1244 has a relatively high position to avoid the water entering the carbon canister 1244 and avoid affecting the normal operation of the engine 121. In one embodiment, the carbon canister 1244 is mounted on the rear frame portion 1113 and is located on the inner side of the rear side plate 1123bc. In this way, the carbon canister 1244 can have a relatively clean working environment and prolong the service life of the carbon canister 1244. At the same time, the repair and replacement of carbon canister 1244 can also be realized by removing the rear side plate 1123bc.

Referring to FIGS. 55 to 57, the connection between the fuel tank 1241 and frame 10 uses at least three connection points not on the same horizontal plane. In this way, the positioning of the fuel tank 1241 can be achieved in many ways, making the installation of the tank 1241 stable and secure. In one embodiment, the fuel tank 1241 is connected to the frame 10 by three connection points. The front end of the fuel tank 1241 defines two orientation holes 1241a, with each orientation hole 1241a being connected to the frame 10 by bolts, screws, or the like. The side faces of the rear end of the fuel tank 1241 are provided with an attachment bracket 1241b, one end of the attachment bracket 1241b is welded or threaded to the frame 10, and the other end is connected to the fuel tank 1241 by screw or other components as one connection point. In this way, the fuel tank 1241 is secured by a three-point positioning method combined with the two orientation holes 1241a, so as to avoid the fuel tank 1241 shaking. The orientation holes 1241a are waist-shaped, and the connection point between fuel tank 1241 and frame 10 can be changed in the lumbar hole so that the position between tank 1241 and frame 10 can be relatively adjusted to compensate for the installation error between tank 1241 and frame 10. It should be noted that the connection between the attachment bracket 1241b and the fuel tank 1241 can also be adjustable to allow for multi-directional tank 1241 adjustment to meet more accurate installation. In other embodiments, the connection points between the fuel tank 1241 and the frame 10 may also be four, five or more.

As shown in FIG. 57, the surface of the fuel tank 1241 is also provided with a pressure rod 1241c, which is positioned vertically above the fuel tank 1241 and is fixed on the rear frame portion 1113 and against the fuel tank 1241 to press the fuel tank 1241 tight on the rear frame portion 1113. In this way, the fuel tank 1241 is further limited from different locations in combination with three-point positioning to improve the reliability and stability of the fuel tank 1241 installation and to avoid tank 1241 shaking.

As shown in FIG. 58, the fuel tank 1241 includes a first tank portion 1241d and a second tank portion 1241i collectively defining a L-shaped tank. In other words, the fuel tank 1241 is L-shaped. This increases the volume of the fuel tank 1241 while also making full use of the vertical and horizontal space of the frame 10, effectively saving the space in the interior of the frame 10 and making the structure more compact. The second tank portion 1241i is located above the first tank portion 1241d along a vertical direction of the side-by-side utility vehicle 100. One end of the oil inlet pipe 1242 is connected to the second tank portion 1241i. The engine 121 is connected to the first tank portion1241d so that the lower position of the fuel tank 1241 is connected to the engine 121 for fuel supply. The two orientation holes 1241a are located on the first tank portion 1241d. The attachment bracket 1241b is welded to either the first tank portion 1241d or the second tank portion 1241i. At least part of the first tank portion 1241d is below the seat 1122f along a vertical direction, and the second tank portion is behind the seat 1122f along a front-rear direction of the side-by-side utility vehicle 100. In this way, the fuel tank 1241 matches the shape of the seat, making full use of the area under and behind the seat 1122f to make this area more compact, which effectively increases the volume of the fuel tank 1241.

As shown in FIG. 59, the bottom of the first tank portion 1241d is provided with one or more ribs 1241f. The rib 1241f separates the bottom of the first tank portion 1241 from the first area 1241g and the second area 1241h at least partially connected to each other. The engine 121 is connected to the tank portion 1241 internally in either the first area 1241g or the second area 1241h. It should be noted that the rib 1241f blocks the fuel at the bottom of the first tank portion 1241d, effectively ensuring that there will always be fuel in the area where the engine 121 draws fuel during cornering, downhill, bump and other conditions, thus continuously supplying the engine 121 and improving the stability of the power output for the engine 121. At the same time, the rib 1241f effectively improves the structural strength of the fuel tank 1241.

As shown in FIGS. 60 and 61, the oil inlet pipe 1242 includes at least a first line 1242a and a second line 1242b, with at least part of the first line 1242a outside the fuel tank 1241 serving as a fuel filling orifice. The second line 1242b is connected to the first line 1242a and is at least partially located inside the fuel tank 1241. The end of the second line 1242b far from the first line 1242a serve as a fuel outlet away from the floater 1243. In this way, when filling with fuel, the fuel support can avoid impacting the floater 1243, further avoid damaging the fuel dashboard and affecting the authenticity of the quantitative indication.

In some embodiments, the second line 1242b is an elbow and the bending direction of the elbow deviates from the floater 1243 to keep the fuel outlet of the elbow away from the floater 1243 or offset with the floater 1243. The second line 1242b is a curved pipe, L-shaped pipe or special-shaped pipe. The first line 1242a and the second line 1242b are interconnected. The first line 1242a is welded to the fuel tank 1241 so that the oil inlet pipe 1242 is integrally secured to the fuel tank 1241.

The first line 1242a and second line 1242b are connected by interference fit. A first location structure 1245 is provided between the second line 1242b and the first line 1242a. When the first line 1242a and the second line 1242b are connected, the second line 1242b and the first line 1242a are positioned through the first location structure 1245 to ensure the reliability of the connection between the first line 1242a and the second line 1242b. The first location structure 1245 includes a first hole 1245a and a first convex 1245b. The end face of one end of the second line 1242b away from the interior of the fuel tank 1241 defines the first hole 1245a. Accordingly, the first convex 1245b is located on the end face of the end that the first line 1242a and the second line 1242b are connected. The first convex 1245b is capable of inserting into the first hole 1245a to achieve the location of the first line 1242a and the second line 1242b. It should be noted that in this embodiment, the positions between the first hole 1245a and the first convex part 1245b is interchanged, which also enables location of the first line 1242a and the second line 1242b.

As shown in FIG. 61, a second location structure 1246 is provided between the first line 1242a and the fuel tank 1241, and a predetermined positioning between the first line 1242a and the fuel tank 1241 is achieved by the second location structure 1246. In one embodiment, the second location structure 1246 includes a second hole 1246a and a second convex 1246b. The fuel tank 1241 defines the second hole 1246a, and the second convex 1246b is located on the end of the first line 1242a adjacent to the second line 1242b. When the first line 1242a is connected to the fuel tank 1241, the second convex 1246b is capable of inserting into the second hole 1246a to achieve location between the first line 1242a and the fuel tank 1241. At the same time, after location, the welding connection between the first line 1242a and the tank 1241 enables the installation of the oil inset pipe 1242 and the fuel tank 1241. It should be noted that, in this embodiment, the positions between the second hole 1246a and the second convex 1246b is interchanged, which also enables location of the first line 1242a and the fuel tank 1241. One end of the first line 1242a is provided with a shoulder 1242c, the first convex 1245b is located on the surface of the shoulder away from the side of the first line 1242a, and the second convex 1246b is located on the circumference of the shoulder 1242c.

As shown in FIGS. 63, 69 and 74, the manipulation system 13 includes a gear selection mechanism 131, a brake mechanism 132 and a steering mechanism 133. The gear selection mechanism 131 is mounted on the frame 10 and one end of the gear selection mechanism 131 is connected to the transmission 122. The other end of the gear selection mechanism 131 is located inside the cabin 1121 for the driver to operate and shift. The brake mechanism 132 is mounted on the frame 10 and is connected to the brake disc 173 of the wheel to brake the front wheels 17 and the rear wheels 18. The steering mechanism 133 is mounted on the frame 10 and is connected to the front wheels 17. The part of the steering mechanism 133 is located inside the cabin 1121 to allow the driver to control the direction of the front wheels 17.

As shown in FIGS. 63 and 64, the gear selection mechanism 131 includes a shifter base 1311, a shift cable component 1314 and a gear shift lever 1317. The shifter base 1311 is mounted on the frame 10, one end of the gear shift lever 1317 rotates and fits into the shifter base 1311 and the other end of the gear shift lever 1317 extends into the cabin 1121 for driver to operate. One end of the shift cable component 1314 is connected to the gear shift lever 1317 and the other end of the shift cable component 1314 extends towards the rear end of the side-by-side utility vehicle 100 and is connected to the transmission 122 to transmit the shift command of the gear shift lever 1317 to the transmission 122. When a gear shift is required, the driver operates the gear shift lever 1317 and transmits the shift signal to the transmission 122 through the transmission 1314 so that the transmission 122 changes speed or direction and thus controls the power output of the engine 121.

The shifter base 1311 includes a fifth connection plate 1312 and the shield 1313, and the bottom plate 1122c defines a second mounting hole 1122ce. The fifth connection plate 1312 is mounted on the frame 10 by welding or screw connection. At least part of the fifth connection plate 1312 is located at the second mounting hole 1122ce of to connect to the gear shift lever 1317. The shield 1313 is arranged at 1122ce of the second mounting hole and is connected to the bottom plate 1122c, thus forming an integral whole of the bottom plate 1121c and making the structure more compact and artistic. It should be noted that the fifth connection plate 1312 is directly mounted on the frame 10 and the gear shift lever 1317 is directly connected to the fifth connection plate 1312, thus omitting components such as the existing shift mounting base, which is not only simple in construction but also reduces costs by at least 30 percent. At the same time, since the fifth connection plate 1312 and the gear shift lever 1317 are independent components, the fifth connection plate 1312 is fixed on the frame 10 in advance during installation. In this way, when installing the gear shift lever 1317, the gear shift lever 1317 is directly mounted on the fifth connection plate 1312. No additional sheet metal parts or supports are required. The connection is convenient, the structure is simple and the cost is low.

The shift cable component 1314 includes a shift cable 1315 and an shift cable adjuster 1316. One end of the shift cable 1315 is connected to the transmission 122 and the other end of the shift cable 1315 is connected to the gear shift lever 1317. The shift cable adjuster 1316 is mounted on the shift cable 1315 to adjust the tightness of the shift cable 1315 to compensate for the installation error of the gear shift lever 1317 and the loosening of the shift cable 1315. Operate the gear shift lever 1317 and drive the rocker arm of the transmission 122 through the shift cable 1315 to change the transmission ratio of the transmission 122 so as to change the power output of the engine 121.

Referring to FIG. 64, in one embodiment, an adjuster support 1112n is provided on the frame 10, and the connection between the first support 1112n and the frame 10 use a removable connection such as a bolt connection, a snap connection, or the like. In this way, the shift cable 1315 and the shift cable adjuster 1316 are fixed on the frame 10 and can be selected and adjusted with high versatility. One end of the shift cable adjuster support 1112d is bolted to the frame 10, and the other end has a bayonet 1112ο, wherein the shift cable adjuster 1316 is stuck in, thus realizing the installation of the shift cable adjuster 1316.

As shown in FIGS. 65 to 67, the bottom plate 1122c defines a shift cable adjuster access port 1122cf corresponds to the position of the shift cable adjuster 1316. That is to say, the maintenance personnel can repair and adjust the shift cable adjuster 1316 through the shift access 1122cf. In this way, the fast overhaul and adjustment of shift cable adjuster 1316 can be realized, thereby avoiding dismantling a large number of components. It should be noted that the shift cable adjuster access port 1122cf is not limited to the overhaul of shift cable adjuster 1316, but also to all components located in this area.

Referring to FIG. 65, a protuberance 1122cg towards the interior of the cabin 1121 is provided on one side of the bottom plate 1122c facing the ground, and the bulge defines open holes 1122ce. The shield 1313 is connected to the protuberance 1122cg and covers the open holes 1122ce. The side face of the protuberance 1122cg and the bottom face of the bottom plate collectively defines a L-shaped shift cable adjuster access port 1122cf, maximizing the area of the access port for convenient overhaul. When overhaul is not required, the shift cable adjuster access port 1122cf is blocked by the fourth cover plate 1122cj so that the bottom plate 1122c is integrated in the daily use process.

As shown in FIG. 65 and FIG. 67, the fourth cover plate 1122cj and the bottom plate 1122c are connected by a removable structure such as a bayonet structure and a threaded structure to facilitate the disassembly and assembly of the fourth cover plate 112cj. In one embodiment, the bottom plate 1122c defines recesses 1122ch and a snap openings 1122ci at the shift access 1122cf positioned on opposite sides of the shift cable adjuster access port 1122cf. Plugging interface 1122ch and snap openings 1122ci are located at the opposite sides of the shift cable adjuster access port 1122cf. The corresponding fourth cover plate 1122cj is provided with plug tabs 1122ck plugged into the corresponding recesses 1122ch and a snap-fit portion 1122cl fitted in the snap openings, so as to achieve a removable connection between the bottom plate 1122c and the fourth cover plate 1122cj. It should be noted that, the positions of the recesses 1122ch and the plug tabs 1122ck are interchanged, and the positions of the snap openings 1122ci and the snap-fit portion 1122cl may also be interchanged.

As shown in FIG. 68, in order to achieve the integrity of the fourth cover plate 1122cj and the bottom plate 1122c. The bottom plate 1122c defines a recessed sink 1122cm, and the shift cable adjuster access port 1122cf is located at the bottom of the recessed sink 1122cm. After the fourth cover plate 1122cj covers the shift cable adjuster access port 1122cf, the fourth cover plate 1122cj is located within the recessed sink 1122cm, and the surface of the fourth cover plate 1122cj is substantially flush with that of the bottom plate 1122c, thus forming an integral structure between the fourth cover plate 1122cj and the bottom plate 1122c, improving the integrity and aesthetics.

Combined with FIG. 69, a guide structure 1122cn is also provided between the fourth cover plate 1122cj and the bottom plate 1122c, which is used to guide the installation of the fourth cover plate 1122cj so that the snap-fit portion 1122cl can be quickly fitted in the snap openings 1122ci. In one embodiment, the guide structure 1122cn includes a guide portion 1122co, and the bottom plate defines guide slots 1122cp. When the fourth cover plate 1122cj covers the bottom plate 1122c, the guide structure 1122co is inserted into the guide slot 1122cp to guide the snap-fit portion 1122cl fitted into the snap openings 1122ci. It should be noted that the positions of the guide portion 1122co and guide slot 1122cp is interchanged. At the same time, the guide structure 1122cn is not limited to the combination of the described guide structure 1122co and the guide slot 1122cp, it may also be slope guiding, etc.

In one embodiment, the number of guide slots 1122cp is at least two, and the two guide slots 1122cp are positioned relative to each other, and between the recesses 1122ch and the snap openings 1122ci. Meanwhile, the guide slot 1122cp, the recesses 1122ch and the snap openings 1122ci are all located at the bottom of the recessed sink and enclosed in the circumference of the shift cable adjuster access port 1122cf.

As shown in FIG. 63, the gear selection mechanism 131 is located on the side of the seat adjacent to the driver to facilitate the driver to switch gears. The gear selection mechanism 131 includes reverse gear 1319 and forward gear 131a. The gear shift lever 1317 rotates relative to the shifter base 1311 to switch gears between reverse gear 1319 and forward gear 131a to achieve forward and reverse of side-by-side utility vehicle 100. The reverse gear 1319 is arranged in front of the forward gear 131a along a front-rear direction of the side-by-side utility vehicle 100. The forward gear 131a is arranged relatively backwards, thus avoiding collision between the gear shift lever 1317 and the driver during normal driving of side-by-side utility vehicle 100, which may cause the position of the gear shift lever 1317 to change and affect driving. In some embodiments, the forward gear 131A is adjacent to the rear end of the side-by-side utility vehicle 100 and is arranged at the seatback 1122fb of the seats 1122f. The seat 1122f usually includes a seat cushion 1122fa and the seatback 1122fb. The seatback is the seatback for the driver and the cushion is in contact with the driver's hip. With this change, contact between the gear shift lever 1317 and the driver's body can be further reduced during driving, thereby avoiding any change in the position of the gear shift lever 1317 and affecting driving.

In this embodiment, the gear selection mechanism 131 includes a parking gear 1318, a reverse gear 1319, and a forward gear 131a. The gear shift lever 1317 rotates relative to the shifter base 1311, thus switching between parking gear 1318, a reverse gear 1319, and a forward gear 131a, which corresponds to the forward, backward and parking of side-by-side utility vehicle 100. Along a front-rear direction of side-by-side utility vehicle 100, the parking gear 1318 and the reverse gear 1319 are arranged near the front end of side-by-side utility vehicle 100, and the forward gear 131a is near the rear end of side-by-side utility vehicle 100 and is arranged at the back of the seat. The parking gear 1318 is closer to the front end of the side-by-side utility vehicle 100 than the reverse gear 1319. That is to say, reverse gear 1319 is located between forward gear 131a and the parking gear 1318. The forward gear 131a includes a high gear and a low gear. The low gear is arranged between the high gear and the parking gear 1318. In one embodiment, parking gear 1318, reverse gear 1319, low gear and high gear are arranged sequentially from a front-rear direction of the side-by-side utility vehicle 100. In this way, gear shift and switch are clear, and shift is more convenient and faster.

As shown in FIG. 70 and FIG. 75, the brake mechanism 132 includes a pedal-operated brake portion 132a and hand-operated brake portion 132b. The pedal-operated brake portion 132a is located inside the cabin 1121 and is used for the driver's foot to brake the front and rear wheels. The hand-operated brake portion 132b is substantially on the side of the seat 1122f for the driver and is adjacent to the gear shift lever 1317 for braking by the driver's hand. The pedal-operated brake portion 132a includes a brake seat 1326, a brake pedal 1321, a brake pump 1322, a brake line 1323, and a brake caliper 1324. Front wheels 17 include a left-front wheel 171 and a right-front wheel 172. The rear wheels 18 include a left-rear wheel 181 and a right-rear wheel 182. The brake pedal 1321 is rotatably mounted on the brake seat 1326. The brake pump 1322 is mounted on the frame 10 and connected to the brake pedal 1321. All of the left-front wheel 171, the right-front wheel 172, the left-rear wheel 181 and the right-rear wheel 182 are provided with one brake caliper 1324. One end of the brake line 1323 is connected to the brake pump 1322 and the other end is connected to the corresponding brake caliper 1324. When it is necessary to brake the vehicle, operate the brake pedal, and the brake pedal 1321 controls the output of the brake pump 1322 to control the oil pressure. The oil pressure is transported to the corresponding brake caliper 1324 through the corresponding brake line 1323. The brake caliper 1324 brakes the brake disc 173 of the wheels, thus braking the front wheels 17 and/or the rear wheels 18.

In one embodiment, as shown in FIG. 71, the brake seat 1326 is mounted on the pedal mounting seat 1111e. The brake pedal is provided with a rotating shaft rotatably connected to and passing through the brake seat 1326. The rotating shaft and the brake seat 1326 are connected by at least two connection points. The movement clearance of the brake pedal 1321 can be reduced and the braking accuracy can be improved. The rotating shaft is provided with a second torsion spring 1325a. One end of the second torsion spring 1325a is fixed on the brake pedal 1326 and the other end of the second torsion spring 1325a is fixed on the brake pedal 1321 to reset the brake pedal 1321 and provide damping feedback for pedaling the brake pedal 1321.

Referring to FIG. 70, the brake pump 1322 has several load ports (not shown). The number of the brake lines 1323 corresponds at least to the number of load ports. In other word, at least one brake line 1323 is connected to each load port. The brake pump 1322 controls the pressure output from each load port. The pressure is transported to the corresponding brake caliper 1324 through the brake line 1323 to drive the brake caliper 1324 to brake the corresponding wheels. In one embodiment, the brake pump 1322 has a first load port, a second load port and a third load port. The brake line 1323 includes a left-front wheel line, a right-front wheel line and a rear wheel lines. One end of the left-front wheel line is connected to the first load port and the other end of the left-front wheel line extends toward the left-front wheel 171 and is connected to the brake caliper 1324 on the left-front wheel 171. One end of the right-front wheel line is connected to the second load port and the other end of the right-front wheel line extends toward the right-front wheel 172 and is connected to the brake caliper 1324 on the right-front wheel 172. One end of the rear wheel lines is connected to the third load port, and the other end of the rear wheel line extends from the front end to the rear end and separates into two output ports through a distribution box. The two output ports are connected to the left-rear wheel 181 and the right-rear wheel 182 respectively. The distribution box is mounted on the frame 10 by removable means such as bolting, snap-on connections, or the like. which is simple to install, easy to repair and can be adapted to different frame types 10, improving product versatility.

As shown in FIGS. 72 to 74, the side of the brake caliper 1324 away from the brake disc 173 includes an oil-pressure input port 1324a and a bulge 1324b. The brake line 1323 is arranged along the circumference of the bulge 1324b and is connected to the oil-pressure input port 1324a. Thus, the brake line 1323 is protected by the bulge 1324b, so that the routing of the brake line 1323 can be hidden, avoiding collision with hard objects such as gravel and injuring the brake line 1323 during the journey of side-by-side utility vehicle 100, thus improving the safety performance. At the same time, during the routing of the brake line 1323, several line holders 1112e are arranged on the frame 10 and arranged at intervals along a front-rear direction of the frame 10.| The brake lines 1323 is restricted to the brake line holders 1112e. In other words, the brake line 1323 is guided by the brake line holders 1112e to avoid the brake line 1323 shaking and interference between the sharp metal edges on the frame 10 and to improve the safety of the brake line 1323.

As shown in FIGS. 75 to 77, the hand-operated brake portion 132b includes a brake handle 1327, a brake line 1328, and a parking junction box 1329. The brake handle 1327 is used for driver operation, one end of the brake line 1328 is connected to the brake handle 1327 and the other end of the brake line 1328 is connected to the brake caliper 1324, which transmits the hand brake signal of the brake handle 1327 to the brake caliper 1324 to control the brake caliper 1324 to brake the brake disc 173. The parking junction box 1329 is removably mounted on the frame 10 to separate at least two brake lines 1328 so that the two brake lines 1328 correspond to different wheels, e.g. left-rear wheel 181 and right-rear wheel 182, left-front wheel 171 and right-front wheel 172. It should be noted that the removable installation of the parking junction box 1329 allows it to be mounted on a frame 10 of different configurations, improving product adaptability, reducing costs and contributing to maintain and installment. In one embodiment, the hand-operated brake portion 132b also includes a mounting seat 132c removably mounted on the frame 10 by means of bolts and snaps. The parking junction box 1329 is mounted on the mounting seat 132c to achieve a removable connection between the mounting seat 132c and the frame.

As shown in FIG. 78, the steering mechanism 133 includes a steering wheel 1331, a first steering lever 1332, an electric power steering 1333, a second steering lever 1334, and a steering gear 1335. The steering wheel 1331 is located inside the cabin 1121 for the driver to operate. The electric power steering 1333 is mounted on the front frame portion 1111 and has both input and output ends. One end of the first steering lever 1332 is connected to the steering wheel 1331 by the universal joints 1336 and the other end of the first steering lever 1332 is connected to the input end of the electric power steering 1333 by the universal joints 1336. The steering gear 1335 is mounted on the frame 10 and connected to the front wheels 17. The second steering lever 1334 is located between the steering gear 1335 and the electric power steering 1333. One end of the second steering lever 1334 is connected to the steering gear 1335 by the universal joints 1336 and the other end of the second steering lever 1334 is connected to the output end of the electric power steering 1333 by the universal joints 1336. Turn the steering wheel 1331 to drive the first steering lever 1332 to move. The force of the first steering lever 1332 is transmitted to the second steering lever 1334 by the electric power steering 1333, and drives the second steering lever 1334 to rotate. The second steering lever 1334 drives the steering gear 1335, so that the steering gear 1335 controls the rotation of the front wheels 17 to realize the steering control of the side-by-side utility vehicle 100.

As shown in FIGS. 79 to 80, a groove 1333a is provided on the outer wall of the input and/or output ends of the electric power steering 1333 and extends along the axis of the input and output ends. The universal joint 1336 mounted on the output and/or input end can be adjusted along the groove 1333a, so as to eliminate assembly errors caused by inadequate assembly accuracy of the electric power steering 1333 and the steering gear 1335 during assembly and to eliminate steering clearance and steering virtual position, thereby improving control accuracy.

The universal joint 1336 includes a first yoke 1336a and a second yoke 1336f. The steering mechanism 133 further includes a second fastener 1337. The first yoke 1336a and the second yoke 1336f are rotatably connected to each other. The end of the first yoke 1336a away from the second yoke 1336f is locked at the input/output end of the electric power steering 1333, the steering wheel 1331 or the steering gear 1335 by the second fastener 1337.| The end of the second yoke 1336f away from the first yoke 1336a is welded to the corresponding first steering lever 1332 or the second steering lever 1334. This makes the connection easier and cheaper than the existing spline sleeve method.

In one embodiment, the first yoke 1336a defines a yoke hole 1336b, a locking hole 1336c and a yoke groove 1336d. The input or output end is capable of stretching into the yoke hole 1336b. The second fastener 1337 is provided with a locking hole 1336c and is abutted against the bottom of the groove 1333a. The second yoke 1336f is locked at the output or input end. The axis of the locking hole 1336c is substantially perpendicular to the axis of the yoke hole 1336b. The yoke groove 1336d is located outside of the first yoke 1336a and has an opening. The yoke groove 1336d is connected to the yoke hole 1336b. The second fastener 1337 goes through the locking hole 1336c and is capable of changing the opening size, so that the first yoke 1336a is tightened and locked on the input or output end of the electric power steering 1333 or unlocked on the first yoke 1336a, and the position of the first yoke 1336a is adjusted relative to the input or output end of the electric power steering 1333.

Please referring to FIG. 80, the second fastener 1337 is provided with a second gasket 1338. The second yoke 1336f also has a gasket groove 1336e on the side having a locking hole 1336c. The second gasket 1338 is mounted in the gasket slot 1336e to improve the stability of the connection between the second fastener 1336 and the second yoke 1336f. The second fastener 1337 is a bolt, and the locking hole 1336c is provided with an internal thread. Alternatively, the second fastener 1337 is a combination of bolt and nut. One end of the bolt goes through the locking hole 1336c and fits with the nut. It should be noted that in other embodiments, the second fastener 1337 may also be other structures.

As shown in FIG. 81, the side-by-side utility vehicle 100 further includes an intake and exhaust system 14. The intake and exhaust system 14 is connected to the prime mover assembly 12 for conveying or discharging gases to provide the necessary media for cooling the prime mover assembly 12 or combustion of the fuel and to expel fuel combustion gases. In one embodiment, the intake and exhaust system 14 includes a first intake and exhaust system 141 and a second intake and exhaust system 142. The first intake and exhaust system 141 is connected to the engine 121 for supplying gases for the internal combustion of the engine 121 and for timely removal of gases from fuel combustion. The second intake and exhaust system 142 is connected to the transmission 122 for conveying cooling media such as water or air to the cooling of the transmission 122.

Please referring to FIG. 81, the first intake and exhaust system 141 includes a first intake manifold 1411 and the first outlet manifold 1412. A first intake cavity 1125 in fluid communication with the external atmosphere is provided on the side of the vehicle cover 11. One end of the first intake manifold 1411 is connected to the engine 121 and the other end extends into the first intake cavity 1125 on the vehicle cover 11. The gas is capable of entering the first intake manifold 1411 via the first intake cavity 1125. One end of the first exhaust manifold 1412 is connected to the engine 121 and the other end extends to the rear end of the vehicle cover 11 to facilitate exhaust gas removal after fuel combustion.

As shown in FIG. 82, after the fuel combustion in the engine 121, the temperature of the first exhaust manifold 1412 near the air outlet of the engine 121 is more than 800 °C, and the temperature of the external exhaust gas discharged by the first exhaust manifold 1412 is also about 300 °C. In order to avoid the effect of the heat radiated by the first exhaust manifold 1412 on the vehicle cover 11 and the electrical components, a heat shield 1413 is provided on the outer wall of the first exhaust manifold 1412. Therefore, the first exhaust manifold 1412 is insulated by the heat shield 1413 to avoid the effect of the heat radiated by the first exhaust manifold 1412 on other components.

As shown in FIGS. 83 and 84, the heat shield 1413 is secured to the first exhaust manifold 1412 by fasteners. The fasteners is clamps or other components. The heat shield 1413 includes a first sleeve body 1413a having at least one first heat insulation layer 1413c and a second sleeve body 1413b. The first sleeve body 1413a is sleeved on the first exhaust manifold 1412 and the second body 1413b is sleeved on the first sleeve body 1413a. The first insulation layer 1413c is filled between the first sleeve body 1413a and the second sleeve body 1413b. Thereby, three layers of insulation are used to reduce the heat radiated by the first exhaust manifold 1412. In one embodiment, the first sleeve body 1413a and/or the second sleeve body 1413b is selected from rubber sleeve or ceramic fiber sleeve. The first insulation layer is selected from insulation cotton layer and ceramic fiber layer.

As shown in FIGS. 85 and 86, the tail pipe 1414 at one end of the first exhaust manifold 1412 away from the air outlet of the engine 121 is used to guide the exhaust gas from the first exhaust manifold 1412. The heat insulation effect of the tail pipe 1414 is used to reduce the influence of the exhaust gas on the vehicle cover 11 and electrical components. In one embodiment, the tail pipe 1414 includes an inner cover 1414a, an outer cover 1414b, and at least one second insulation layer 141414c. The outer cover 1414b covers the inner cover 1414a, and both the inner cover 414a and the outer cover 1414b are connected to the first exhaust manifold 1412 by welding, threaded connections, or the like. The second insulation layer 141414c is filled between the outer cover 1414b and the inner cover 1414a to further improve the insulation effect and avoid the influence of radiated heat on the vehicle cover 11 and electrical components. The outer cover 1414b is formed by flanging the inner cover 1414a, or the inner cover 1414a is formed by flanging the outer cover 1414b. In this way, not only the processing is convenient but also the structure is simple. The tail pipe 1414 is a rigid tube and the second insulation layer 1414c is either an insulation cotton layer or a ceramic fiber layer.

The second intake and exhaust system 142 further includes a second intake manifold 1421 and a second exhaust manifold 1422. A second intake cavity 1126 in fluid communication with the external atmosphere is provided on the side of the vehicle cover 11. One end of the second intake manifold 1421 is connected to the transmission 122, and the other end of the second exhaust manifold 1421 extends into the second intake cavity 1126. The cooling gas is capable of entering the second exhaust manifold 1421 through the second intake cavity 126 to cool the transmission 122.

As shown in FIGS. 87 and 88, the position of the outlet of the second exhaust manifold 1422 is aligned with that of the first exhaust manifold 1412. It should be noted that the exhaust gas from the second exhaust manifold 1422 is about 100-150°C, while the exhaust gas temperature from the first exhaust manifold 1412 is more than 300°C. The position of the outlet of the second exhaust manifold 1422 is aligned with that of the first exhaust manifold 1412 so that the gas discharged from the second exhaust manifold 1422 can assist and compel the first exhaust manifold 1412 to dissipate heat, promote air flow, increase the cooling efficiency of the first exhaust manifold 1412 and reduce heat damage.

Along the extension direction of the first exhaust manifold 1412, the circumference of the first exhaust manifold 1412 is provided with a guide plate 1415, thus forming a guide airway 1416 in the extension direction of the first exhaust manifold 1412. The outlet of the second exhaust manifold 1422 is aligned with the guide airway 1416, and guided by the guide airway 1416, which effectively improves the gas flow speed at the first exhaust manifold 1412 and accelerates the heat dissipation and cooling efficiency of the first exhaust manifold 1412.

As shown in FIGS. 89 and 90, an insulation plate 1417 is also provided above the first exhaust manifold 1412 in a vertical direction to prevent the upward transfer of heat from the first exhaust manifold 1412. The insulation plate 1417 at least includes ceramic fiber layer 1417a and at least two aluminum layer 1417b laid on the surfaces of both sides of ceramic fiber layer 1417a. The ceramic fiber layer 1417a and the aluminum layers 1417b is connected by compression molding or other means. In this way, the ceramic fiber layer 1417a is well insulated and combines the heat reflection of the aluminum layer 1417b to reduce or avoid the upward heat transfer of the first exhaust manifold 1412. One side of the surface of the aluminum layer 1417b away from the ceramic fiber layer 1417a has embossing to facilitate thermal infrared diffuse reflection and improve the thermal radiation capacity of the insulation plate 1417.

As shown in FIGS. 20 and 21, the first intake cavity 1125 and the second intake cavity 1126 are positioned on the side of the vehicle cover 11 and along the vertical direction. The first and second intake cavities 1125 and 1126 are arranged relatively far from the bottom of the side-by-side utility vehicle 100 so that the first and second intake cavities 1125 and 1126 have sufficient height. It should be noted that the side-by-side utility vehicle 100, as a popular recreational vehicle, often wades deeper. The first and second intake cavities 1125 and 1126 are arranged high enough. When the vehicle wades, a sufficiently high first intake cavity 1125 can effectively guarantee the supply of gas required for engine 121 and a sufficiently high second intake cavity 1126 can effectively guarantee the supply of cooling gas required for transmission 122, to increase the wading depth of side-by-side utility vehicle 100 and the place of use, so as to avoid damage to the vehicle caused by water inflow of engine 121.

As an example, the first intake cavity 1125 is arranged on the left side of the vehicle cover 11 and adjacent to the rear end of the vehicle cover 11, while the second intake cavity 1126 is arranged on the right side of the vehicle cover 11 and adjacent to the rear end of the vehicle cover 11. Along a vertical direction, the position height of the first intake cavity 1125 on the left side of the vehicle cover 11 is the same as that of the second intake cavity 1126 on the right side of the vehicle cover 11. This arrangement enables the engine 121 and the transmission 122 to intake separately, i.e. to avoid water entering into the first and second intake manifolds 1421 at the same time during wading. At the same time, the first intake cavity 1125 and the second intake cavity 1126 are respectively positioned on two sides of the vehicle cover 11, which can make full use of the space of the vehicle cover 11 and improve the compactness of the layout.

Continuing with FIGS. 20 and 21, the first intake cavity 1125 and the second intake cavity 1126 are located between the cabin 1121 and the rear wheels 18.

The structure of the first intake cavity 1125 and the second intake cavity 1126 is the same or different as required. In this embodiment, the structure of the first intake cavity 1125 and the second intake cavity 1126 are the same for saving the overall processing and manufacturing process. The following will describe the intake mode of the power module 12 by taking the first intake cavity 1125 as an example. The structure of the first intake cavity 1125 is the same in principle as the structure of the second intake cavity 1126.

As shown in FIGS. 91 to 94, the frame 10 also includes an intake seat 143. The vehicle cover 11 defines an installation cavity 1121g corresponding to the intake seat 143 on the side near the rear end. The intake seat 143 is partially or completely embedded in the installation cavity 1121g, and the first intake cavity 1125 is defined on the intake seat 143. It should be noted that the intake seat 143 is a separate component. The processing of the vehicle cover 11 can be simplified, as it is no longer necessary to defines a first intake cavity 1125 on the side of the vehicle cover 11. At the same time, the intake seat 143 as an integral part has a very good sealing property, so that air can only enter the first intake cavity 1125 through the upper opening of the intake seat 143. In this way, the filtering efficiency of air is effectively improved. Secondly, the material between the intake seat 143 and the side of the vehicle cover 11 is different. As a result, the design flexibility is improved, and since the intake seat 143 needs to be sucked with the first intake manifold 1411, it is under high pressure, so the material for processing the intake seat 143 can be selected according to requirements, thus improving the reliability of the intake seat 143.

In one embodiment, the side-by-side utility vehicle 100 includes two intake seats 143, with one having a first intake cavity 1125 and the other having a second intake cavity 1126. The left and right sides of the side-by-side utility vehicle 100 include an installation cavity 1121g, respectively. One intake seat 143 is at least partially embedded in the left intake seat mounting cavity 1121g and the other is at least partially embedded in the right intake seat mounting cavity 1121g. Rear wheels 18 includes a left-rear wheel 181 and a right-rear wheel 182. Based on the position of the first and second intake cavities 1125 and 1126, we can see that the intake seat 143 is located between the cabin 1121 and the rear wheels 18. One intake seat 143 is located between the left-rear wheel 181 and the cabin 1121, and the other is located between the right-rear wheel 182 and the cabin.

The installation hole 1431 connected to the first intake cavity 1125 is also provided on the intake seat 143. The axis of the installation hole 1431 is substantially parallel to the vertical axis. The first intake manifold 1411 protrudes from the installation hole 1431 into the interior of the first intake cavity 1125 and is mounted on the intake seat 143 at one end of the intake manifold 1411 away from the air inlet of the engine 121 and the air filter 146. The side of vehicle cover 11 corresponding to the first intake cavity 1125 defines a fourth opening 1432 in fluid communication with the external atmosphere. That is to say, the external gases enters the first intake cavity 1125 through the fourth opening 1431 to achieve the normal intake of the first intake manifold 1411.

As shown in FIG. 91, a baffle 1433 covers the fourth opening 1432. The baffle 1433 defines a plurality of filter holes 1434. After being filtered by the filter hole 1434, the external air enters the first intake cavity 1125, That is to say, the impurities in the external air are removed through the filter hole 1434 to ensure the cleanliness of the air in the first intake cavity 1125. The inner side of the baffle 1433 or the inside of the filter holes 1434 is provided with at least one filter layer (not illustrated in the FIGS.) through which the external air entering the filter hole can be further filtered, thereby making the air entering the first intake cavity 1125 cleaner and extending the service life of the engine 121. It should be noted that the connection between the baffle plate 1433 and the intake seat 143 or vehicle cover 11 can use removable structures such as bolts, screws or snaps to facilitate the removal of the baffle plate and the cleaning and maintenance of the interior of the first intake cavity 1125.

As shown in FIGS. 92 and 94, the bottom of the first intake cavity 1125 is provided with a third convex 1125a relatively protruding from the bottom of the first intake cavity 1125. The third convex 1125a defines an installation hole 1431, and the orientation of the installation hole 1431 is inconsistent with that of the fourth opening 1432. The first intake manifold 1411 extends into the first intake cavity 1125 or is connected to the first intake cavity 1125 via the third installation hole 1431 on the third convex 112a. In this way, the installation hole 1431 can be positioned higher than the bottom of the intake seat mounting cavity 1121g and is facing differently from the fourth opening 1432. In other words, the intake position of the first intake manifold 1411 is elevated. The intake port of the first intake manifold 1411 is staggered from the fourth opening 1432. When the side-by-side utility vehicle 100 is running or cleaning, water or other impurities enter the first intake cavity 1125 from the fourth opening 1432, the third convex 1125a has a blocking and draining effect to prevent water or other impurities from entering the first intake manifold 1411 and to direct the water away from the intake position of the first intake manifold 1411. In this way, the parallel blocking and guiding can achieve double blocking of water and other impurities at the inlet of the first intake manifold 1411, which effectively enhances the waterproof and dust-proof effect of the first intake manifold 1411, reduces the probability of engine 121 damage due to the entry of ambient fluids or impurities, which reduces the failure rate of engine 121 and improves the safety of side-by-side utility vehicle 100.

The third convex 1125a extends upward along the vertical direction. The axis of the installation hole1431 substantially coincides with the vertical direction. Thus, when water or other impurities enter the first intake cavity 1125 from the fourth opening 1432, they first contact the side facing the fourth opening 1432 of the third convex 1122a, then guide or block the flow down to the bottom of the first intake cavity 1125 from the side of the third convex 1122a, and then exit the first intake cavity 1125 through the assembly gap between the intake seat 143 and the vehicle cover 11.

As shown in FIGS. 92 and 94, the end face of the third convex 1125a away from the bottom end of the first intake cavity 1125 is a third slope 1125b. The installation hole 1431 is located on the third slope 1125b. The third slope 1125b inclines from the side of the third convex 1125a adjacent to the fourth opening 1432 to the side of the third convex 1125a away from the fourth opening 1432. The side of the third slope 1125b adjacent to the fourth opening 1432 is relatively higher than the side of the third slope 1125b away from the fourth opening 1432 along the vertical direction. In this way, in the space of the first intake cavity 1125, the side of the third convex 1125a facing the fourth opening 1432 is highest, and water or other impurities can be adequately blocked when water or other impurities enter from the fourth opening 1432.

As shown in FIG. 92, for ease of guiding water out of the first intake cavity 1125, the bottom surface of the first intake cavity 1125 is a fourth slope 1125c. The fourth slope 1125c is tilted towards the ground (i.e. the underside) along the direction from the rear end of side-by-side utility vehicle 100 to the front end. When water enters the first intake cavity 1125, it first flows to the bottom of the first intake cavity 1125 under the blocking and guide of the third convex 1125a, so that the water can be discharged quickly and timely, reducing the possibility of water intake into the first intake manifold 1411.

As shown in FIG. 95, the first intake and exhaust system 141 also includes an elevated intake manifold 144 for elevating the intake position of the first intake manifold 1411 vertically to achieve a higher intake position for the side-by-side utility vehicle 100. This ensures water not entering into the engine 121 even when wading deeper. It should be noted that the elevated intake manifold 144 is an after-market accessory. When the side-by-side utility vehicle 100 drives in normal without wading places, the elevated intake manifold 144 is not needed. When the side-by-side utility vehicle 100 drive in deep wading places (such as beach, river cross-country), it may directly connect the elevated intake manifold 144 to the first intake manifold 1411 for heightening the air inlet of the first intake manifold 1411, which is easy to use and install.

In conjunction with FIG. 94, one end of the elevated intake manifold 144 can be extended into the first intake cavity 1125 and connected to the first intake manifold 1411, while the other end of the elevated intake manifold 144 extends away from the intake seat 143 and along a substantially upward direction. The first intake cavity 1125 defines a fifth opening 1125d adjacent to the fourth opening 1432. The fifth opening 1125d faces the same direction as the installation hole 1431. At the same time, a fifth cover 1125e covers the fifth opening 1125d, the installation hole1431 and the air inlet of the first intake manifold 1411 to prevent water or other impurities (stones, debris) from entering the engine 121 from the air inlet. In other words, the fifth opening 1125d is normally blocked to prevent the air inlet of the first intake manifold 1411 from being exposed to the outside.

Further, the fifth cover 1125e defines a wall-breaking area 1125f in fluid communication with the air inlet of the first intake manifold 1411 and distributed around the air inlet. The bearing capacity of wall-breaking area 1125f is less than that of other areas of the fifth cover 1125e. When it is necessary to elevate the air intake, simple tools such as hammer can be used to destroy the wall-breaking area 1125f directly to form a through-hole. Then one end of the elevated intake manifold 144 can be inserted into the first intake cavity 1125 from the through-hole and sealed to the first intake manifold 1411. In this way, not only the complicated procedure for elevating the air inlet is avoided, but also the elevated air manifold is simple and positioned reasonably. After the wall-breaking area 1125f is destroyed, the first intake manifold 1411 directly stretches into the first intake cavity 1125. This installation in a straight-line direction is easy to align and connect, and does not require professional maintenance personnel to retrofit it. The driver or ordinary personnel can complete with less difficulty in operation.

The fifth cover 1125e is preferably a plastic part, and the strength of the wall-breaking area 1125f is less than or equal to that of the other areas of the fifth cover 1125e. In this way, the wall-breaking area 1125f can be easily destroyed compared with other areas, and the assembly procedure for elevating the intake manifold 144 is simple. In one embodiment, the wall thickness of the wall-breaking area 1125f is less than that of the other areas of the fifth cover 115e, so that the pressure-bearing capacity of the wall-breaking area 1125f is less than that of the other areas. In another embodiment, the inner wall of the fifth cover 1125e defines a groove to defines a wall-breaking area 1124f on the fifth cover plate 1125e. In other words, the wall-breaking area 1125f is defines by grooves, which is not only simple in construction, but also convenient in processing and lower in manufacturing cost. It should be noted that wall-breaking area 1125f can also be defined on the fifth cover 1125e by other means.

As shown in FIGS. 96 and 97, in order to facilitate the connection between the elevated intake manifold 144 and the first intake manifold 1411, an adapter pipe 145 is provided between the elevated intake manifold 144 and the first intake manifold 1411. One end of the adapter pipe 145 extends into the installation hole 1431 and connects to the first intake manifold 1411. The other end of the adapter pipe 145 is located in the first intake cavity 1125 and is connected to the elevated intake manifold 144. In one embodiment, the adapter pipe 145 is a hose, with a sealing groove 1455 formed around the periphery of the hose, one end of the hose running through the third installation hole 1431 and a sleeve and sealing connection with the first intake manifold 1411, and the edge of the third installation hole 1431 is clamped in the sealing groove 1455 so that the adapter 145 is sealed to the intake seat 143. The other end of the hose is connected to the sealing sleeved and connected to the elevated intake manifold 144. It should be noted that the sealing effect between the adapter 145 and the first intake manifold 1411/ the elevated intake manifold 144 is improved due to the sealing properties of the hose. At the same time, the hose has a certain deformation. As the adapter pipe of the first intake manifold 1411 and the elevated intake manifold 144, the hose has a certain damping and vibration absorption effect on the bumpy road surface. In this embodiment, the hose is a rubber tube or a silicone tube, or the like.

The adapter pipe 145 includes a first connection section 1451, a second connection section 1452 and a third connection section 1453, and the second connection section 1452 is located between the first connection section 1451 and the third connection section 1453. The first connection section 1451 is located in the first intake cavity 1125, and the third connection section 1453 is located outside the first intake cavity 1125 and is arranged near the first intake manifold 1411. The second connection section 1452 is embedded into the installation hole 1431 for bridging the first connection section 1451 and the second connection section 1452. In addition, the outer wall of the second connection section 1452 defines a sealing groove 1455. The edge of the installation hole 1431 is clamped in the sealing groove 1455. At the same time, the end of the first connection section 1451 away from the second connection section 1452 and the end of the third connection section 1453 away from the second connection section 1452 are both defines flares for guiding the connection between the first intake manifold 1411 and the elevated intake manifold 144 and the adapter pipe 145.1 In this embodiment, The second connection section 1452 is in the shape of a corrugated pipe. On the peripheral surface of the second connection section 1452, two adjacent peaks defines the sealing groove 1455.

Furthermore, clamps 1454 are sleeved on the periphery of the adapter pipe 145 and the first intake manifold 1411, and on the periphery of the adapter pipe 145 and the elevated intake manifold 144 to achieve stable connection and improve the sealing performance. It should be noted that the above example only illustrates a connection mode between the first intake manifold 1411 and the elevated intake manifold 144. In other embodiments, the first intake manifold 1411 and the elevated intake manifold 144 may also be connected by means of clamping, threading, or the like. The peripheral surfaces of the first connection section 1451 and the third connection section 1453 define corresponding positioning grooves. The clamps 1454 are sleeved in the corresponding positioning grooves, and the clamp 1454 is clamped between the first connection section 1451 and the elevated intake manifold 144, and between the first intake manifold 1411 and the third connection section 1453.

As shown in FIG. 98 and FIG. 99, the elevated intake manifold 144 includes a first pipe section 1441 and a second pipe section 1442. One end of the first pipe section 1441 extends into the first intake cavity 1125 from the through hole on the fifth cover 1125e and is connected to the adapter pipe 145. The other end of the first pipe section 1441 extends away from the intake seat 143 and substantially upwards. One end of the second pipe section 1442 is connected to the end of the first pipe section 1441 away from the first intake cavity 1125. The other end of the second pipe section 1442 is used an air inlet. The axis of the first section 1441 and the axis of the second pipe section 1442 collectively defines an angle. It should be noted that water and impurities always have a vertical downward movement trend under the action of gravity, so the water or other impurities are prevented from directly entering the elevated intake manifold 144 from the air inlet under the effect of gravity. The angle defined between the axis of the first pipe section 1441 and the axis of the second pipe section 1442 is in the range between 40° and 140°. The end of the second pipe section 1442 away from the first pipe section 1441 extends to the front end of the side-by-side utility vehicle 100. In this way, the second pipe section 1442 can be tilted toward the frame 10 or the ground, so as to reduce the possibility of water or other impurities entering in to the engine 121 and improve the safety of engine 121. In one embodiment, the angle defined between the axis of the first pipe section 1441 and the axis of the second pipe section 1442 is in the range between 60° and 140°. It should be noted that within the above angle range, the intake height of the elevated intake manifold 144 can be increased to the best, and water, dust, or the like can also be avoided from entering from the second pipe section 1442. At the same time, the position of the second pipe section 1442 will not interfere with the ROPS assembly 1123c. Optionally, the angle defined between the axis of the first pipe section 1441 and the axis of the second pipe section 1442 is in the range between 80° and 110°.

In one embodiment, the second pipe section 1442 is inclined, and the axis of the second pipe section 1442 is inclined downward relative to the axis of the first pipe section 1441. The end of the second pipe section 1442 away from the first pipe section 1441 is closed, and the side of the second pipe section facing the ground defines intake hole 1446. The intake hole 1446 is provided with a filter 1447 for filtering the medium entering into the second pipe section 1442 from the intake hole 1446 to ensure the cleanliness of the air entering the elevated intake manifold 144. The axis of the intake hole 1446 and the axis of the first pipe section 1441 is substantially parallel or relatively inclined. In this way, the intake hole 1446 can always facing toward the direction of the first intake manifold 1411, The direction of gravity is the same as that of water or other impurities, so that water or other impurities can be prevented from entering into the elevated intake manifold 144 from the intake hole 1446. The axis of the first pipe section 1441 and the axis of the second pipe section 1442 jointly define an acute angle. Even if a small amount of water or other impurities enter into the second pipe section 1442 from the intake hole 1446, they will be stored at the end of the second pipe section 1442 away from the first pipe section 1441 under the guidance of the second pipe section 1442. When water or impurities accumulate to a certain extent, they can be discharged or removed through the intake hole 1446.

As shown in FIG. 98 and FIG. 99, the elevated intake manifold 144 also includes a third pipe section 1443 located between the first pipe section 1441 and the second pipe section 1442. The third pipe section 1443 is a curved pipe section. In addition, the bending direction of the third pipe section 1443 is substantially the same as that of the second pillar 1113a, so as to improve the coordination and integrity between the elevated intake manifold 144 and the vehicle cover 11. A first positioning step 1444 is formed between the third pipe section 1443 and the first pipe section 1441. After the first pipe section 1441 is inserted into the first intake cavity 1125, the first positioning step 1444 abuts against the fifth cover 1125e, so as to realize the positioning of the elevated intake manifold 144 and avoid the excessive insertion of the first pipe section 1441 into the first intake cavity 1125 or the adapter pipe 145.

A third connection portion 1445 is arranged on the elevated intake manifold 144. When the elevated intake manifold 144 is connected to the first intake manifold 1411, the third connection portion 1445 is connected to the frame 10, the double positioning of the elevated intake manifold 144 can be realized to avoid the failure of the connection between the elevated intake manifold 144 and the first intake manifold 1411 due to the vibration or external force of the side-by-side utility vehicle 100. In this embodiment, the connection between the third connection portion 1445 and the frame 11 can be connected by the quick disassembly structure 1122e such as bolts, clips or hoops. In one embodiment, the third connection portion 1445 is arranged on the third pipe section 1443.

As shown in FIG. 99, the elevated intake manifold 144 also includes a second fixation plate 1448, one end of the second fixation plate 1448 is fixed on the second pipe section 1442, and the other end of the second fixation plate 1448 is used to connect the upper vehicle cover 11, so the triple positioning of the elevated intake manifold 144 can be realized, effectively improving the installation stability of the elevated intake manifold 144. In one embodiment, the second fixation plate 1448 is removably connected to the second pipe section 1442. Thus, the position between the second fixation plate 1448 and the elevated intake manifold 144 can be adjusted. In this way, the connection position between the elevated intake manifold 144 and the vehicle cover 11 can be adjusted, thereby improving the installation flexibility of the elevated intake manifold 144. In this embodiment, the second fixation plate 1448 and the second pipe section 1442 is removably connected through bolts, buckles and other structures.

As shown in FIG. 81 and FIG. 100, the first intake and exhaust system 141 further includes an air filter 146, which is mounted on the first intake manifold 1411 and fixed on the frame 10 or the vehicle cover 11. The air filter 146 is used to filter the air entering the first intake manifold 1411, so that the gas entering the engine 121 meets the requirements. In addition, the air filter 146 is provided with a wire rack 1461 for fixing the brake line, electrical harness, carbon canister 1244 pipeline, and the like, so as to avoid opening on the frame 10 and adding other supports, thus reducing the cost and weight of the vehicle. It should be noted that the filter element of air filter 146 needs to be cleaned or replaced regularly. The position of the air filter 146 should be convenient for replacing the filter element, and dust or sediment will not be brought into the prime mover assembly 12 during the replacement process, which will affect the service life of the prime mover assembly 12. The disclosure adjusts the position of the air filter 146, so that it can be replaced quickly and conveniently, and the filter element can be prevented from being polluted during the replacement process.

As shown in FIGS. 20, 100 and 108, the cavity wall of the cabin 1121 adjacent to the rear end of the side-by-side utility vehicle 100 is provided with a filter element access port 1121b, and the air filter 146 is located at the filter element access port 1121b. That is, the maintenance of the air filter 146 and the filter element can be realized through the filter element access port 1121b. In this way, the cabin 1121 is mainly used as a space for personals, which is the cleanest area in the vehicle compared with other areas. In other words, the air filter 146 is arranged at the filter element access port 1121b by arranging the position of the engine 121 and the direction of the first intake manifold 1411, so as to reduce the probability of contamination during the filter element replacement. At the same time, the removal of the vehicle cover 11 can be avoided, and the possibility of bringing dust or sediment into the interior of the air filter 146 during maintenance can be reduced.

As shown in FIG. 104 and FIG. 105, the filter element access port 1121b is defined on the rear baffle 1122d, and the seat 1122f is removably connected to the frame 10 or the vehicle cover 11 and can be quickly removed. The filter element access port 1121b is directly below the seat 1122f. Thus, the filter element access port 1121b is shielded by the seat 1122f to prevent some dust from entering the filter element access port 1121b when the air filter 146 and the filter element does not need maintenance.

The side-by-side utility vehicle 100 further includes a rear trunk 1123ba removably connected to the rear frame portion 1113 and used for loading goods or other articles. The filter element access port 1121b is located above the rear frame portion 1113 along an upper-down direction of the side-by-side utility vehicle 100 and is located at the rear end of seat 1122f and the front end of rear trunk 1123ba along a front-rear direction of side-by-side utility vehicle 100. In other words, the filter element access port 1121b is located between the seat 1122f and rear trunk 1123ba along a front-rear direction of side-by-side utility vehicle 100. In this way, the layout height of the air filter cavity can be raised to improve the wading depth of side-by-side utility vehicle 100.

As shown in FIG. 105, a cover assembly 1127 is arranged at the filter element access port 1121b, which covers and seals the filter element access port 1121b, so that when the air filter 146 does not need to be repaired or maintained, the filter element access port 1121b can be blocked by the cover assembly 1127 to prevent dust from entering into the air filter 146 from the filter element access port 1121b. It should be noted that since the filter element access port 1121b is located inside the cabin 1121, based on the environment of the cabin 1121, the sealing performance of the cover assembly 1127 can appropriately reduce the requirements, thereby reducing the production cost of the cover assembly 1127. In addition, even if the seal of the cover assembly 1127 fails, the dust prevention of the air filter 146 will not fail due to its position.

As shown in FIGS. 106 to 108, the cover assembly 1127 includes a first cover 1127a and a second cover 1127e. The air filter 146 includes a housing 1452 mounted on the first intake manifold 1411. The filter element is mounted in the housing 1452 and is used to filter the gas entering into the first intake manifold 1411. The side of the housing 1452 facing toward the filter element access port 1121b defines a filter element opening. The filter element is mounted in the housing 1452 through filter element access port 1121b and the filter element opening. The first cover 1127a covers the filter element opening and is removably connected to the housing 1452. The second cover 1127e covers the filter element access port 1121b, and is disassembled and connected to the vehicle cover 11 in the cabin 1121. The second cover 1127e covers the first cover 1127a. When the filter element needs to be replaced, move the seat 1122f to make room for the removal of the first cover 1127a and the second cover 1127e, and then remove the second cover 1127e and the first cover 1127a, so that the filter element can be exposed for corresponding maintenance and repair.

The first cover 1127a is connected to the housing 1452 by a first quick disassembly structure 1122e, so that the first cover 1127a does not need to be disassembled with additional electric tools, making the disassembly of the first cover 1127a and the repair and maintenance of the air filter 146 more convenient and simple. As an example, one end of the first cover 1127a is provided with a first snap 1127b, and the other end of the first cover 1127a is provided with a second snap 1127c, and the second snap 1127c is relatively located above the first snap 1127b along a vertical direction. Correspondingly, the housing 1452 defines a first snap slot 1453 and a second snap slot 1454. The first snap 1127b can be clamped in the first snap slot 1453, and the second snap 1127c can be clamped in the second snap slot 1454, so as to realize the quick disassembly connection between the first cover 1127a and the housing 1462. When the first cover 1127a needs to be disassembled, only the first snap 1127b and the second snap 1127c need to separate from the first snap slot 1453 and the second snap slot 1454 respectively. It should be noted that the positions of the snaps and the snap slots is interchanged. That is to say, the snaps are correspondingly arranged on the housing 1462, and the snap slots are correspondingly defined on the first cover 1127a. It should be noted that, the quick disassembly structure 1122e is not limited to the above example, and it may also be a thread or other structure.

As shown in FIG. 108, the cover assembly 1127 also includes a second limit portion 1127h and a second spring clip 1127i. The second limit portion 1127h is arranged adjacent to the first snap 1127b. The side of one end of the first cover body 1127a is capable of abutting against the second limit portion 1127h, so as to form a limit in a front-rear direction of the side-by-side utility vehicle 100 and prevent the first snap 1127b from leaving the first snap slot 1453. The second spring clip 1127i is arranged adjacent to the other end of the first cover 1127a, and the housing 1452 is provided with a spring clip shaft 1455. One end of the second spring clip 1127i is connected to the spring clip shaft 1455. The side surface of the first cover 1127a away from the housing 1452 is provided with a spring clip groove 1127d. The second spring clip 1127i is capable of deforming under the action of external force, so that part of the second spring clip 1127i is stuck in the spring clip groove 1127d, and the first cover 1127a is tightly squeezed against the housing 1452, which realizes the locking of the first cover 1127a. In this way, the vibration of the side-by-side utility vehicle 100 can be avoided, so that the first cover 1127a is separated from the housing 1452, and the reliability and stability of the connection are improved. At the same time, in the process of repair or maintenance, there is no need to use additional electric tools, so the repair and maintenance is more convenient.

As shown in FIG. 102 and FIG. 103, the second cover 1127e is also connected to the vehicle cover 11 through a second quick disassembly structure, so that the disassembly of the second cover 1127e and the repair and maintenance of the air filter 146 are more convenient and simpler without the use of additional electric tools. One end of the second cover 1127e is provided with a positioning portion 1127f, and the other end of the second cover 1127e is provided with a deformation portion 1127g. The positioning portion 1127f is arranged adjacent to the first snap 1127b. The deformation portion 1127f is arranged adjacent to the second spring clip 1127i. The wall of the filter element access port 1121b is provided with a first matching portion 1121f which is matched with the positioning portion 1127f. The deformation portion 1127g deforms under the action of an external force and abuts against the wall of the filter element access port 1121b, so that the second cover 1127e can block the filter element access port 1121b under the action of the deformation force of the deformation portion 1127g. It should be noted that the filter element access port 1121b can also be provided with a corresponding clamping slot to enable the deformation portion 1127g to be clamped into the clamping slot. When the second cover 1127e needs to be disassembled, it is only necessary to press the deformation portion 1127g to create a gap between the deformation portion 1127g and the inner part of the filter element access port 1121b, so that the second cover 1127e can be pulled out of the filter element access port 1121b as a whole through the deformation portion 1127g for maintenance. In this embodiment, the first quick disassembly structure 1122e and the second quick disassembly structure is the same or different. The first quick release structure 1122e and the second quick release structure are not limited to the above examples, and they may also be structures such as threads.

The maintenance and repair of air filter 146 can be completed by the following steps: firstly, moving the seat 1122f for leaving enough operating space between the seat 1122f and rear baffle 1122d; secondly, pressing the deformation portion 1127g forcibly to separate the second cover 1127e from the wall of the filter element access port 1121b, so as to realize the disassembly of the second cover 1127e; thirdly, lifting the second spring clip 1127i to make the second spring clip 1127i separate from the spring snap slot 1127d and releasing the locking force of the first cover 1127a; Fourthly, separating the snap from the corresponding slot under the action of external force, to realize the disassembly of the first cover 1127a; and fifthly, taking out the filter element from the housing 1462, installing the new or cleaned filter element in the housing 1462, and installing the first cover 1127a and the second cover 1127e. It is not necessary to disassemble any external accessories of the vehicle cover 11, which reduces the probability of dust or sediment entering the interior of the prime mover assembly 12 during the replacement process, as well as the possibility of the filter element being polluted. At the same time, the above structures all adopt the quick disassembly structure 1122e, which is quick and convenient to replace without the help of additional electrical tools.

As shown in FIG. 20 and FIG. 102, the rear of seat 1122f defines an ECU access port 1121c. The ECU access port 1121c is defined on the cavity wall of cabin 1121, and ECU 21 can be overhauled through ECU access port 1121c. In this way, when the electronic control element 21 needs to be overhauled, there is no need to disassemble other large components, and the maintenance is very convenient. It should be noted that the cavity wall of the cabin 1121 adjacent to the rear end of the side-by-side utility vehicle 100 defines an ECU access port 1121c, and the electronic control element 21 is correspondingly located at the ECU access port 1121c.

Continuing to refer to FIG. 20, the ECU access port 1121c is defined on the rear baffle 1122d and located between the rear baffle 1122d and the seat 1122f. Along the front and rear directions of side-by-side utility vehicle 100, the orthographic projection of ECU access port 1121c is located on seat 1122f. It should be noted that the seat 1122f is removably connected to the frame 10 or the vehicle cover 11 and can be quickly removed. Thus, when ECU access port 1121c does not need to be opened, it is covered by seat 1122f for concealment, so as to ensure the integrity and tidiness of cabin 1121. At the same time, in order to prevent impurities, water, or the like from entering the cabin 1121 through the ECU access port 1121c, the ECU access port 1121c is provided with an ECU cover plate, which is connected to the rear baffle 1122d through a quick disassembly structure 1122e to facilitate the opening/closing of the ECU access port 1121c. The ECU cover plate and the rear baffle 1122d is connected to each other by means of fasteners, threaded pieces, or the like. In this embodiment, the ECU cover plate is connected to the rear side plate 1123bc and the rear baffle 1122d by means of clamping. Other connection method may also be used.

In one embodiment, the ratio of the area of ECU access port 1121c to the area of rear baffle 1122d is greater than or equal to 0.2. In this way, it can be ensured that ECU access port 1121c has enough operation space to facilitate operation by operators. At the same time, the rear baffle 1122d defines a recessed sink. The ECU access port e1121c is located at the bottom of the recessed sink. When an ECU access port 1121c is covered by the ECU cover plate, the ECU cover plate is housed in the recessed sink so that the ECU cover plate and the rear baffle 1122d collectively form as a whole.

As shown in FIG. 109, the electrical assembly 19 includes a generator (not shown), a battery pack 192, a diagnostic interface 193, a fuse box 194, a starting relay 195, a rectifier voltage regulator 196, an on-board T-BOX 197, a lighting system 198, a dashboard device 200, a warning indicator 201, an electrical connector unit 204, a switching device 203, and the like. The generator is located inside the engine 121 and is capable of generating electricity driven by the engine 121. The generator serves as the main power supply. When the generator works normally, it supplies power to the electrical equipment of the whole vehicle and charges the battery pack 192. The diagnostic interface 193 is used to connect external vehicle detectors to detect the components and systems of side-by-side utility vehicle 100 through vehicle detectors, so as to ensure that the vehicle's emissions during its service life do not exceed the requirements of OBD (On Board Diagnostics) regulations. The fuse box 194 is integrated with fuses for protecting the safety of various electrical components. The starting relay 195 mainly controls the current of the high-voltage line by controlling the current of the low-voltage line and acts as a current switch.

Please referring to FIGS. 104, 110 to 114, the diagnostic interface 193 and fuse box 194 are mounted on the rear frame portion 1113, adjacent to the electronic control unit 21 and at the ECU access port 1121c. In other words, the diagnostic interface 193 and fuse box 194 can be operated through ECU access port 1121c. Thus, ECU, diagnostic interface 193 and fuse box 194 is overhauled at the same time, effectively improving maintenance efficiency. The starting relay 195 is located behind the seat 1122f along a front-rear direction of the side-by-side utility vehicle 100. In this way, during the repair process, it is only necessary to remove the seat 1122f, which is convenient for maintenance and replacement. The function of the variable voltage rectifier 196 is to keep the output voltage of the generator constant. The variable voltage rectifier 196 is arranged adjacent to the engine 121 and in front of the right-rear wheel 182. In other words, the variable voltage rectifier 196 is located between the engine 121 and the right-rear wheel 182. In this way, it is convenient to connect the generator 121 with the variable voltage rectifier 196.

As shown in FIG. 115, the on-board T-BOX is a Telematics BOX (T-BOX), which acts as a wireless gateway and functions as remote wireless communication, GPS satellite positioning, acceleration sensing and CAN communication. It provides remote communication interfaces for side-by-side utility vehicle 100, such as driving data acquisition, driving track recording, vehicle fault monitoring, remote vehicle query and control (opening and locking, air conditioning control, window control, engine torque limit, engine 121 start and stop), driving behavior analysis, wireless hotspot sharing and other services. The on-board T-BOX197 is arranged inside the cabin 1121, which has good anti-theft and dust-proof effect. The bottom plate 1122c defines a mounting port 1121e. The on-board T-BOX197 is mounted in the mounting port 1121e, and the signal receiving surface of the on-board T-BOX197 is exposed from the mounting port 1121e, that is, the signal receiving surface of the on-board T-BOX197 is not blocked, which is conducive to signal transmission.

As shown in FIG. 109, the dashboard device 200 includes various electrical dashboards, such as ammeter, charging indicator or voltmeter, oil pressure gauge, thermometer, fuel gauge, vehicle speed and odometer, engine tachometer, and the like. The dashboard device 200 is mainly used to display the working conditions of relevant devices when the engine 121 and the side-by-side utility vehicle 100 are running. A warning indicator 201 is mainly used to generate sound to prompt or warning. The electrical terminal assembly 204 is mounted on the frame 10. The purpose of the electrical terminal assembly 204 is to provide a convenient location for electrical connections to supply electricity to aftermarket accessories added to the side-by-side utility vehicle 100. By providing such a convenient connection location, electrical aftermarket accessories can be added and wired without any splicing or other damage to the original wiring of the side-by-side utility vehicle 100.

As shown in FIGS. 116 to 118, the battery pack 192 includes a battery junction box 1921 and a battery 1922. The battery junction box 1921 is connected to the positive or negative electrode of the battery 1922 to lead a plurality of connection terminals, so as to facilitate the connection of external electrical components. The battery pack 1922 is mounted on the middle frame portion 1112, and is located at the rear-lower direction of the seat 1122f (driver's seat 1122f) and adjacent to the rear frame portion 1113. In this way, when battery 1922 needs to be repaired, it is only necessary to remove seat 1122f, which is convenient for maintenance and replacement. At the same time, the battery pack 1922 is adjacent to the rear frame portion 1113, which can make the center of gravity of the side-by-side utility vehicle 100 backward and improve the driving stability of the vehicle.

As shown in FIG. 118, the battery junction box 1921 includes a box body enclosure 1921a, a conductive member 1921k, and a plurality of terminals 1921o. The box body 1921a defines a box body base 1921b and at least one harness protector 1921c which one-to-one corresponds to the terminals 1921o. The conductive member 1921k includes a first end at least partially arranged in the box body enclosure 1921a and a second end extending out of the box body enclosure 1921a through the box body base 1921b. The conductive member is electrically connected to the positive or negative electrode of the battery 1922. A plurality of terminals 1921o are spaced in the box body enclosure 1921a and connected to the conductive member 1921k. The electrical components that need to be connected to the battery 1922 can extend its harness into the box body enclosure 1921a through the corresponding harness protector 1921c and is connected to the corresponding terminals 1921o, so that the battery 1922 can directly supply power to the corresponding electrical components. In this way, the connection is reliable, and the loose connection between wires can be effectively avoided. The corresponding harness extends into the box body enclosure 1921a through the corresponding harness protector 1921c, making the harness layout adjacent to the positive or negative electrode of the battery very neat.

In one embodiment, the number of the terminals 1921o is three. Correspondingly, the number of harness protector 1921c is also three. The three terminals 1921o are respectively connected to the starting motor power line, brake power line and vehicle power line. In other words, the starting motor, brake, vehicle and other high current components are directly connected to the battery 1922. It should be noted that, the number of terminals 1921o may not be limited to three, which is four, five or more. In this embodiment, the specific number of the terminals 1921o is selected according to the actual situation.

In one embodiment, the conductive member 1921k includes a connection end 1921m and a battery terminal end 1921n. The connection end 1921m are arranged in the box body enclosure 1921a and connected to the terminals 1921o. The battery terminal end 1921n is located outside the box body enclosure 1921a and is used to connect the positive or negative electrode of the battery 1922. The bend piece 1921n and the connection end 1921m collectively defines an angle. In this way, the battery junction box 1921 can be located on the side of the battery 1922, thereby reducing the space occupied by the battery junction box 1921. In this embodiment, the angle defined between the connection end 1921m and the battery terminal end 1921n is in the range from 60° to 90°. In this way, the side of the battery junction box 1921 and the battery 1922 can be directly opposite, so as to further reduce the space occupied by the battery junction box 1921.

Please continue to refer to FIG. 118, the connection end 1921m defines a through hole corresponding to the terminals 1921o (not shown). One end of the terminals 1921o is fixed on the box body enclosure 1921a, and the other end of the terminals 1921o passes through the through hole. One end of the corresponding harness is sleeved on the terminals 1921o and is pressed on the connection end 1921m through the cooperation of the nut and the terminals 1921o, so as to realize the electrical connection between the harness and the terminals 1921o. It should be noted that in other embodiments, the corresponding harness may also be electrically connected to the conductive member 1921k.

The box body enclosure 1921a includes a bottom box 1921d and a bottom cover 1921e respectively molded by injection molding. The conductive member 1921k and a plurality of terminals 1921o are arranged on the bottom cover 1921e or the bottom box 1921d. The outer wall of the bottom box 1921d is provided with an elastic tabs 1921f having a third snap 1921g. The bottom cover 1921e is provided with a second matching portion 1921h clamped with the third snap 1921g, so as to realize the connection between the bottom box 1921d and the bottom cover 1921e. When it is necessary to remove the bottom cover 1921e, break off the elastic tabs 1921f and make the box body enclosure 1921a to move, so that the third snap 1921g can be separated from the second matching portion 1921h, which is very convenient for disassembly and assembly. It should be noted that the connection between the bottom box 1921d and the bottom cover 1921e may also use threads.

In this embodiment, the outer wall of the bottom box 1921d is provided with a convex portion (not shown). The elastic tabs 1921f is mounted on the convex portion, and can swing relative to the convex portion under the action of an external force, so that the third snap 1921g is clamped with/unclamped with the second matching portion 1921h. Secondly, the end of the elastic tabs 1921f away from the third snap 1921g turns outward from the box body enclosure 1921a for the operator to press, thus controlling the movement of the elastic tabs 1921f.

Please continue to refer to FIG. 118, in one embodiment, the bottom box 1921d is provided with a coverage portion 1921i at the box body base 1921b. The coverage portion 1921i is capable of shielding the connection between the conductive member 1921k and the positive electrode of the battery, so as to protect this place and improve the safety of use. In this embodiment, the bottom box 1921d and the coverage portion 1921i are integrally molded to reduce processing steps and costs. The coverage portion 1921i defines a second groove 1921j on one side facing toward the guide element 1921k. The conductive element 1921k is located in the second groove 1921j, so that the conductive element 1921k can be shielded in a plurality of directions through the second groove 1921j, further improving the safety of use.

As shown in FIG. 119, the lighting system 198 includes various interior and exterior lights on the side-by-side utility vehicle 100. The lighting system 198 is mainly used to ensure the safety of vehicle driving at night and serve as a reminder of vehicle position. The lighting system 198 mainly may include headlights 1981, fog lights, taillights, brake lights, cabin lights, turn signal lights 1981e, and the like. As shown in FIG. 122 and FIG. 132, the headlights 1981 are mounted on the front frame portion 1111 for lighting and/or outputting turn signals and prompt signals. The taillights 1982 are mounted on the rear frame portion 1113. The atmosphere lights 1983 are located inside or outside the cabin 1121. The headlights 1981 includes a headlight housing 1981a, low beam 1981h, a high beam 1981i, daytime running lamps 1981j, a turn signal 1981m, a circuit board 1981n and light cover 1981q. The headlight housing 1981a is mounted on the front frame portion 1111 and includes a mounting groove 1981b with an opening at one end. The circuit board 1981n is mounted into the headlight housing 1981a from the opening. The low beam light 1981h, the high beam light 1981i, the daytime running light 1981j and the turn light 1981m are mounted on the headlight housing 1981a by the opening and electrically connected to circuit board 1981n. The low beam 1981h is capable of starting the low beam lighting according to signals, and the high beam 1981i is capable of starting the high beam lighting according to signals. It should be noted that the low beam 1981h and the high beam 1981i is separately manufactured or integrally manufactured. The daytime running light 1981j is capable of generating prompt signals to indicate the position of the vehicle. The steering light 1981m is capable of generating turn signals to assist the steering of side-by-side utility vehicle 100. The light cover 1981q is transparent, which is arranged at one end of the opening of the headlight housing 1981a and is sealed with the headlight housing 1981a to protect the circuit board 1981n in the headlight housing 1981a and lights.

Combined with FIG. 21, the atmosphere light 1983 is located between the upper dashboard panel 1122ba and the lower dashboard panel 1122bc, and connects the upper dashboard panel 1122ba and the lower dashboard panel 1122bc. In other words, the upper dashboard panel 1122ba and the lower dashboard panel 1122bc are connected together by the atmosphere lights 1983, which reduces the mold opening cost of the upper and lower dashboard panels 1122bc and improves the texture of the whole vehicle. In this embodiment, the atmosphere light 1983 is connected to the upper dashboard panel 1122ba and lower dashboard panel 1122bc by means of clip connection, screw connection, welding connection, or the like.

As shown in FIG. 121 and FIG. 122, a light holder bracket 1981c is integrated on the outer wall of headlight housing 1981a. That is to say, the light holder bracket 1981c is integrally manufactured with the headlight housing 1981a. The wire in circuit board 1981n is connected to light holder bracket 1981c, and light holder bracket 1981c is connected to the electrical control unit 21 through harness, so that electronic control unit 21 controls headlight 1981 through signals. This arrangement not only avoids the fixation of complex wire harness, but also facilitates the connection with the electronic control unit 21. It should be noted that only the headlight housing 1981a of headlight 1981 is integrated with the light holder bracket 1981c. In other embodiments, the rear headlight 1982 and the atmosphere light 1983 is integrated with the above light holder bracket 1981c to avoid the installation of complex harness 2042 and improve the assembly efficiency of the rear headlight 1982 and the atmosphere light 1983.

As shown in FIG. 120 and FIG. 121, the headlight housing 1981a is equipped with an indicator headlight housing 1981ac, a LED strand 1981e, a back turn signal bracket 1981f and a front turn signal bracket 1981g. The daytime running light 1981j includes a flute 1981l and at least two daytime running light beads 1981k. The indicator headlight housing 1981ac is fixed on the headlight housing 1981a by screws, and two daytime running light beads 1981k are arranged at both ends of the indicator headlight housing 1981f. The flute 1981l is mounted between two daytime running light beads 1981k to transmit the light emitted by the daytime running light beads 1981k. The LED strand 1981e is mounted on the headlight housing 1981a, and is covered on the flute 1981l and the daytime running light beads 1981k to distribute the light emitted by the flute 1981l, so that the light of the daytime running light 1981j is stronger and more uniform. The circuit board holder 1981f is located on one side of the headlight housing 1981a, and defines flutes. One end of the circuit board 1981n is inserted into the flute from the opening, and the other end of the circuit board 1981n is limited by the limit bracket 1981g, which effectively reduces the space for arranging the circuit board 1981n, provides enough space for other components, makes the structure of the headlight 1981 more compact. The vehicle also uses the plug-in and combined limit bracket 1981g, which is more convenient for installation and greatly reduces the installation time. In one embodiment, the limit bracket 1981g is removably mounted on the headlight housing 1981a by threads or clips.

In one embodiment, the daytime running light 1981j and the turn signal light 1981m are located in two different areas within the headlight housing 1981a, and the daytime running light 1981j is capable of emitting one of white light and yellow light according to signals. The turn signal light 1981m is capable of emitting white light or yellow light according to signals. That is to say, the daytime running light 1981j and the turn light 1981m have two lighting modes. In mode I, after the headlight 1981 receives the power on signal, the daytime running light 1981j and the turn signal light 1981m are lit at the same time, and the daytime running light 1981j and the turn signal light 1981m emit light of the same color, thus increasing the luminous area of the headlight 1981 under the mode, improving the vehicle recognition and safety performance. For example, in the daytime driving mode, the light is strong, so the luminous intensity can be enhanced by increasing the luminous area of the headlight 1981, so that the exterior can obtain the light signal in time, and the safety performance of the side-by-side utility vehicle 100 can be improved. In mode II, the daytime running light 1981j and turn signal light 1981m can be separately lit. In other words, in this mode, the daytime running light 1981j and turn signal light 1981m is capable of operating independently.

In combination with FIGS. 26 and 109, the warning indicator 201 includes a loudspeaker 202, a sound 205, and the like. The horn 202 is mounted in the middle of the cooling medium storage box 1233. In this way, in combination with the position of the cooling medium storage box 1233 1233 at the front frame portion 1111, the horn 202 position is relatively centered relative to the side-by-side utility vehicle 100, thus making the sound source direction of the horn 202 more uniform. The sound system 205 is arranged on the front baffle 1122a and adjacent to the front wheels 17. The sound system 205 is mounted on the left side of the driver's left leg and/or the right side of the passenger's lower leg. In this way, the sound quality is good and the use environment is clean.

In one embodiment, the sound system 205 and the front baffle 1122a are removably connected by threads, fasteners, or the like. The front baffle 1122a near the front wheels 17 includes a plurality of foot support surfaces 1122aa for the driver's foot or the passenger's foot, and the front baffle 1122a also includes a mounting surface 1122ab corresponding to the foot support surface 1122aa and projecting from the foot support surfaces 1122aa. A yielding area is formed between the foot support surfaces 1122aa and the mounting surface 1122ab, and the feet of drivers and passengers can be prevented from being in the yielding area. The sound system 205 is arranged on the mounting surface 1122ab.

As shown in FIGS. 123-125, the electrical connector unit 204 may include a terminal block 2021, a plurality of harnesses 2042, a plurality of wiring terminals 2043 and a power relay 2044. The wiring terminal 2043 is connected to the battery by the wiring harness 2042. The power relay 2044 is connected between the terminal block 2021 and the battery 1922, and the opening/closing of the power relay 2044 corresponds to the opening/closing of the side-by-side utility vehicle 100. That is to say, the power relay 2044 is turned on when the side-by-side utility vehicle 100 is started or powered on. and the power relay 2044 is turned off when the side-by-side utility vehicle 100 is turned off. The wiring terminal 2043 may include a first type of wiring terminal 2043a and a second type of wiring terminal 2043b. The first type of wiring terminal 2043a is electrically connected to the battery 1922 by the wiring harness 2042. The second type of wiring terminal 2043b is electrically connected to the power relay 2044 by the wiring harness 2042. The power relay 2044 is electrically connected to the battery 1922. In this way, the electrical connection between the second type of wiring terminal 2043b and the battery 1922 needs to be controlled by the power relay 2044, so that during the process of installing accessories (after-market parts) on the side-by-side utility vehicle 100, if the accessories need continuous electricity power supply, the accessories can be connected to a corresponding first type of wiring terminal 2043a that is not controlled by the power relay 2044. If the electricity supply of the accessories needs to be controlled by the opening/closing of the side-by-side utility vehicle 100, the accessories can be connected to a corresponding second type of wiring terminal 2043b that is controlled by the power relay 2044.

In some embodiments, the first type of wiring terminal 2043a may include a first wiring terminal 2043c and a second wiring terminal 2043d. The second type of wiring terminal 2043b may include a third wiring terminal 2043e. The first wiring terminal 2043c is connected to the positive electrode of the battery 1922 by the wiring harness 2042, and the second wiring terminal 2043d is connected to the negative electrode of the battery 1922, so that a continuous electricity supply circuit is formed by the first wiring terminal 2043c, the second wiring terminal 2043d and the battery 1922. The power relay 2044 corresponds to the start switch of the side-by-side utility vehicle 100, that is to say, the power relay 2044 is turned on when the side-by-side utility vehicle 100 is started, and the power relay 2044 is turned off when the side-by-side utility vehicle 100 is turned off. One end of the power relay 2044 is connected to the positive electrode of the battery 1922, and the other end is connected to the third wiring terminal 2043e by the wiring harness 2042. The third wiring terminal 2043e is conducted with the positive electrode of the battery 1922 when the power relay 2044 is turned on, and the third wiring terminal 2043e is disconnected from the positive electrode of the battery 1922 when the power relay 2044 is turned off. In this way, an electricity supply circuit controlled by the power relay 2044 is formed by the third wiring terminal 2043e, the power relay 2044, the second wiring terminal 2043d and the battery 1922. During the process of installing accessories on the side-by-side utility vehicle 100, the accessories can be connected to the first wiring terminal 2043c and the second wiring terminal 2043d when the accessories need continuous power supply. When the electricity supply to the accessories needs to be controlled by the opening/closing of the side-by-side utility vehicle 100, the wiring harnesses of the accessories is connected to the second wiring terminal 2043d and the third wiring terminal 2043e.

In other embodiments, as shown in FIG. 126, the first type of wiring terminal 2043a may include a first wiring terminal 2043c and a second wiring terminal 2043d. The second type of wiring terminal 2043b may include a third wiring terminal 2043e and a fourth wiring terminal 2043f. The first wiring terminal 2043c is connected to the positive electrode of the battery 1922, and the second wiring terminal 2043d is connected to the negative electrode of the battery 1922 to form a continuous electricity supply circuit. The third wiring terminal 2043e is connected to the negative electrode of the battery 1922 by the wiring harness 2042, and the fourth wiring terminal 2043f is connected to the power relay 2044 by the wiring harness 2042. The power relay 2044 is connected to the positive electrode of the battery 1922. In this way, a electricity supply circuit controlled by the power relay 2044 is formed. Of course, the numbers of the first type of wiring terminal 2043a and the second type of wiring terminal 2043b is three, four or other, respectively. The connection between the wiring terminal 2043, the power relay 2044 and the battery 1922 is a combination of the above two embodiments, or one of the above two embodiments or others according to actual needs, and this is not limited.

As shown in FIG. 123, the electrical connector unit 204 may further include a plurality of fuse boxes 2045, a cover 2047 and a plurality of barrier plates 2046. The fuse boxes 2045 is provided on the corresponding wiring harness 2042 for protecting the battery 1992, so as to avoid the problem of feeding the battery 1922. The cover 2047 is covered on the terminal block 2021 to protect the wiring terminals 2043, thereby avoiding the short circuit phenomenon of the wiring terminals 2043 caused by falling metal objects. The number of the barrier plates 2046 is a plurality of, and the plurality of barrier plates 2046 is arranged on connecting seats at intervals. The two adjacent wiring terminals 2043 is isolated by one barrier plate 2046 to avoid interference of the wiring harnesses 2042 between the two adjacent wiring terminals 2043. Here, the barrier plates 2046 and the connecting seats is integrated.

In one embodiment, the fuse boxes 2045 includes a main fuse 2045a and a plurality of sub-fuses 2045b. The main fuse 2045a is close to the positive electrode of the battery 1922. One of the sub-fuses 2045b is on the harness 2042 connected between the wiring terminal 2043 and the positive electrode of battery 1922. The other fuse 2045b is arranged on the harness 2042 connected between the wiring terminal 2043 and the power relay 2044. In this embodiment, the main fuse 2045a and the sub-fuse 2045b on the harness 2042 connected between the wiring terminal 2043 and the positive electrode of the battery 1922 is provided in series, so as to achieve dual protection and further to avoid the feeding problem of the battery 1922.

As shown in FIGS. 123-125, the wiring harnesses 2042 includes a first wiring harness 2042a and a second wiring harness 2042c. One end of the first wiring harness 2042a is connected to the wiring terminal 2043, and the other end of the first wiring harness 2042a is provided with a wiring male plug 2042b. One end of the second wiring harness 2042c is connected to the battery 1922, and the other end of the second wiring harness 2042c is provided with a wiring female plug 2042d. The wiring male plug 2042b is plugged with the wiring female plug 2042d, so that the electrical connection between the terminal block 2021 and the battery 1922 can be realized. In this way, the terminal block 2021 and the wiring harness 2042 on the battery 1922 is integrated, and the wiring can be very simple and convenient.

As shown in FIGS. 109 and 127, a plurality of switches 203 may include a mode switch 2031, an air conditioning switch (not shown), a temperature adjustment switch (not shown), and the like. The mode switch 2031, the air conditioning switch, and the temperature adjustment switch is generally mounted on an dashboard panel 1122b for the convenience of driver and front passenger. The mode switch 2031, the air conditioner switch, the temperature adjustment switch, and the like are electrically/signally connected to the electronic control unit by wiring harnesses 2042, so as to control a series of functions of the side-by-side utility vehicle 100, such as the switching of the two-wheeled drive and the four-wheeled drive, the turning on of the air conditioner, and the adjustment of the air conditioner temperature, and the like.

As shown in FIGS. 127 to 130, the mode switch 2031 may include a two-wheeled drive gear 2031a, a four-wheeled drive gear 2031b, and a front-wheeled drive lock gear 2031c. The four-wheeled drive gear 2031b is located between the two-wheeled drive gear 2031a and the front-wheeled drive lock gear 2031c. The two-wheeled drive gear 2031a enables the two-wheeled drive operation of the side-by-side utility vehicle 100. The four-wheeled drive gear 2031b enables the four-wheeled drive operation of the side-by-side utility vehicle 100. The front-wheeled wheel lock gear 2031c enables the front wheel locking of the side-by-side utility vehicle 100. The mode switch 2031 may include a housing 2031d, a pushing plate 2031x, a switch shaft 2031t, and a gear lever assembly 2031u. The housing 2031d may include a cavity 2031za, a first gear slot 2031e, a second gear slot 2031f, and a third gear slot 2031j. The first gear slot 2031e, the second gear slot 2031f, and the third gear slot 2031j is all located in the cavity 2031za. The second gear slot 2031f is located between the first gear slot 2031e and the third gear slot 2031j. The pushing plate 2031x is rotatably connected to the housing 2031d by the switch shaft 2031t. One end of the gear lever assembly 2031u is connected to the pressing plate 2031x, and the other end of the gear lever assembly 2031u is able of swinging with the pressing plate 2031x and switching between the first gear slot 2031e, the second gear slot 2031f, and the third gear slot 2031j, so as to realize the mutual switching between the two-wheeled drive gear 2031a, the four-wheeled drive gear 2031b, and the front drive lock gear 2031c.

As shown in FIG. 128, the gear lever assembly 2031u may include a switching lever 2031v, an elastic member 2031x and a ball 2031y. One end of the switching lever 2031v is connected to the pressing plate 2031x, and the switching lever 2031v is able of swinging in the housing 2031d driven by the pressing plate 2031x. A fourth mounting hole 2031w is formed in one end of the switching lever 2031v away from the pressing plate 2031x. The elastic member 2031x is mounted within the fourth mounting hole 2031w. A part of the ball 2031y is located in the fourth mounting hole 2031w and may abut against the elastic member 2031x. The other end of the switching lever 2031v is able of swinging and falling into the first gear slot 2031e, the second gear slot 2031f, or the third gear slot 2031j.

As shown in FIGS. 128 and 130, the first gear slot 2031e, the second gear slot 2031f, and the third gear slot 2031j are arc-shaped, and the first gear slot 2031e, the second gear slot 2031f, and the third gear slot 2031j is sequentially connected. The second gear slot 2031f comprises a first connection end connected to the first gear slot 2031e, and the first gear slot 2031e comprises a second connection end connected to the first connection end, the first connection end intersects with the second connection end creating a first intersection point P and a first included angle β1. The second gear slot 2031f comprises a third connection end connected to the first gear slot 2031j, and the third gear slot 2031j includes a fourth connection end connected to the third connection end, the third connection end intersects with the fourth connection end creating a first intersection point P and a first included angle β2. The difference between β1 and β2 is in the range from 5° to 30°. That is to say, the slope of the second gear slot 2031f near the third gear slot 2031j is larger than the slope of the second gear slot 2031f near the first gear slot 2031e. The transition between the first gear slot 2031e and the second gear slot 2031f is smoother than the transition between the second gear slot 2031f and the third gear slot 2031j. In this way, when switching gears, the damping of switching lever 2031v from second gear slot 2031f to third gear slot 2031j is larger than the damping of switching lever 2031v from first gear slot 2031e to second gear slot 2031f. That is to say, the force values required for switching each gear is different. The force value required becomes larger when the four-wheeled drive gear is switched to the front-wheeled drive lock gear 2031c, so as to avoid the two-wheeled drive gear 2031a directly switching to the front-wheeled drive lock gear 2031c when the two-wheeled drive gear 2031a is switched to the four-wheeled lock gear 2031b, and to improve the safety.

In one embodiment, as shown in FIG. 130, the position of the second intersection point Q is relatively higher than the position of the first intersection point P along the axis Z direction of the cavity 2031za. In this way, based on the above angle, the stroke of the four-wheeled gear 2031b to the front-wheeled drive lock gear 2031c is increased, so the damping when the switching lever 2031v is switched from the second gear slot 2031f to the third gear slot 2031j is increased, thereby avoid over-shifting during the switching process.

Please referring to FIGS. 129 and 130, the second gear slot 2031f may include a second arc-shaped section 2031g, a first straight section 2031h, and a second straight section 2031i. One end of the first straight section 2031h is connected to the first gear slot 2031e, and the other end is connected to the second arc-shaped section 2031g. One end of the second straight section 2031i is connected to the third gear slot 2031j, and the other end is connected to the second arc-shaped section 2031g. The first gear slot 2031e may include at least a third straight section 2031k. The third gear slot 2031j may include at least a fourth straight section 2031z. The third straight section 2031k intersects with the first straight section 2031h, creating a first included angle β1. The fourth straight section 2031z intersects with the second straight section 2031i, creating a second included angle β2. The first included angle β1 is in the range from 120° to 140°, and the second included angle β2 is in the range from 100° to 125°.

Further, the first straight section 2031h intersects with the plane A1, creating a third included angle β3. The second straight section 2031i intersects the plane A1, creating a fourth included angle β4. The difference between the fourth included angle β4 and the third included angle β3 is in the range from 5° to 30°. The third included angle β3 is in the range from 45° to 60°, and the fourth included angle β4 is in the range from 55° to 75°. Therefore, the slope of the second straight section 2031i with respect to the plane A1 is larger than the slope of the first straight section 2031h with respect to the plane A1. Therefore, the force value required for the switching lever 2031v to switch from the second gear slot 2031f to the third gear slot 2031j is increased.

In one embodiment, the third straight section 2031k intersects with the plane A1, creating a fifth included angle β5. The fourth straight section 2031z intersects with the plane A1, creating a sixth included angle β6. The value of the fifth included angle β5 is substantially the same as the value of the sixth included angle β6. In this way, the operating force value of switching from the two-wheeled drive gear 2031a to the four-wheeled drive gear 2031b is substantially equal to the operating force value of switching from the front-drive lock gear 2031c to the four-wheeled drive gear 2031b f, thereby improving the consistency of operation.

As shown in FIG. 131 and FIG. 132, the housing 2031d may have an output contact 2031l, and the output contact 2031l protrudes from the outer surface of the housing 2031d. The output contact 2031l is connected to the circuit board on the corresponding switches 203, such as the circuit board 1981n in the mode switch 2031, the circuit board in the air conditioner switch, the circuit board in the temperature adjustment switch, and the like. The wiring harness 2042 may have a butt connection socket 2031n connected to the output contact 2031l, and the butt connection socket 2031n is connected to the output contact 2031l, so that the switches 203 is electrically/signally connected to the ECU 21. A connection cover 2031m surrounding the output contact 2031l is provided on the outer surface of the housing 2031d. The connection cover 2031m and the housing 2031d is integrated or is separated. The connection cover 2031m or the butt connection socket 2031n is provided with a sealing member 2031q. After the butt connection socket 2031n and the output contact 2031l are butted, the sealing member 2031q is able of sealing the gap between the butt connection socket 2031n and the connection cover 2031m, so that the output contact 2031l is in a sealed state, avoiding short-circuit ablation of the output contact 2031l and the butt connection socket 2031n due to water and the like. At the same time, during the butting process, the connection cover 2031m also plays a guiding role, which is beneficial to the connection of the butt connection socket 2031n and the output contact 2031l, and the assembly is more convenient.

In one embodiment, a second 2031o and a second slot 2031p is formed on the butt connection socket 2031n, and the second receiving groove 2031o is provided with a connection contact corresponding to the output contact 2031l. The second slot 2031p is provided surrounding the second receiving groove 2031o. The sealing member 2031q is disposed within the second slot 2031p, and the connection cover 2031m is inserted into the second slot 2031p, and is sealedly connected to the sealing member 2031q. That is to say, the sealing is not only realized by the seal 2031q, but also by covering the butt connection socket 2031n on the connecting cover 2031m, thereby increasing the sealing path and improving the sealing effect. The second receiving groove 2031o is disposed concentrically with the second slot 2031p. The sealing member 2031q is sleeved on the outer wall of the second slot 2031p. Meanwhile, the sealing member 2031q is a rubber sealing ring or a silicone sealing ring. An annular sealing protrusion 2031r is provided on the outer side wall of the sealing member 2031q in the circumferential direction. The sealing protrusion 2031r is in sealing contact with the inner wall of the connection cover 2031m. Here, the number of the sealing protrusions 2031r is more than one, and a plurality of sealing protrusions 2031r is provided at intervals along the axial direction of the second slot 2031p. In another embodiment, the sealing member 2031q may also be directly disposed on the inner wall of the connection cover 2031m, and the butt connection socket 2031n is inserted into the connection cover 2031m and may abut against the sealing member 2031q.

## Claims

1. A side-by-side utility vehicle (100) comprising
a frame (10) comprising a front frame portion (1111), a rear frame portion (1113), and a middle frame portion (1112) between the front frame portion and the rear frame portion;
a vehicle cover (11) defining a cabin (1121), the vehicle cover comprising a front baffle (1122a) arranged between the front frame portion and the middle frame portion, a bottom plate (1122c) arranged on the middle frame portion, a dashboard panel (1122b) arranged at an end of the front baffle away from the bottom plate, a rear baffle (1122d) arranged between the middle frame portion and the rear frame portion, and rear side plates (1123bc) arranged on sides of the rear frame portion;
a prime mover assembly (12) having an air inlet and an air outlet mounted on the rear frame portion;
an intake and exhaust system (14) comprising an intake manifold (1411) in fluid communication with the air inlet of the prime mover assembly, an exhaust manifold (1412) in fluid communication with the air outlet of the prime mover assembly; and
an electrical control unit (21) at least partially supported by the frame;
wherein the intake and exhaust system further comprises an intake seat (143) defining a mounting hole and an intake cavity having an opening; at least one intake seat mounting cavity (1121g) positioned above one of the rear side plates in a vertical direction is defined at one side of the side-by-side utility vehicle; the intake seat is embedded into the intake seat mounting cavity, the end of the intake manifold away from the air inlet of the prime mover assembly and the air filter extends toward the intake seat and into the intake seat mounting cavity through the mounting hole;
**characterized in that,**
the intake and exhaust system further comprises an air filter (146) comprising a filter element and being at least partially in fluid communication with the intake manifold to filter the gas that enters into the prime mover assembly through the intake manifold,
wherein the intake and exhaust system further comprises an elevated intake manifold (144), one end of the elevated intake manifold extending into the intake cavity and in fluid communication with the intake manifold, and the other end of the elevated intake manifold extending away from the intake seat and extending substantially along a vertical direction; and
wherein a filter element access port (1121b) is defined on the rear baffle, and the filter element access port is in fluid communication with the cabin and the air filter,
wherein the elevated intake manifold comprises
a first pipe section (1441) with one end being connected to the intake manifold and the other end extending vertically and upward; and
a second pipe section (1442) arranged at the end of the first pipe section far from the intake manifold and in communication with the first pipe section;
wherein an angle defined between the axis of the first pipe section and the axis of the second pipe section is in the range between 40° and 140°.

2. The side-by-side utility vehicle (100) of claim 1, wherein the side-by-side utility vehicle further comprises one or more seats (1122f) within the cabin, the seats are removably arranged on the middle frame portion and above the bottom plate; the filter element access port is positioned above the middle frame portion along a vertical direction and behind the seats along a front-rear direction; wherein the side-by-side utility vehicle further comprises a rear trunk (1123ba) mounted on the rear frame portion; the filter element access port is positioned between the rear trunk and the seats.

3. The side-by-side utility vehicle (100) of claim 1, wherein the air filter comprises a housing defining a filter element opening facing toward the filter element access port; and the filter element is mounted inside the housing through the filter element opening; the side-by-side utility vehicle further comprises a cover plate assembly covering the filter element access port and the filter element opening;
wherein the cover plate assembly comprises
a first cover body sealing and covering the filter element opening and being arranged in the filter element access port, the first cover body being connected to the housing through a first quick disassembly structure; and
a second cover body sealing and covering the filter element access port and mounted on the inner wall of the cabin through a second quick disassembly structure; wherein the second cover vehicle covers the first cover body.

4. The side-by-side utility vehicle (100) of claim 1, wherein the side-by-side utility vehicle further comprises a plurality of switches (203) connected to the electrical control unit by wiring harnesses; the dashboard panel or front baffle defines a dashboard access port (1122bh) in communication with the cabin, and the plurality of switches are disposed around the dashboard access port.

5. The side-by-side utility vehicle (100) of claim 1, further comprising a gear selection mechanism (131) comprising a shifter base fixed on the frame, a gear shift lever, a shift cable component and an shift cable adjuster, one end of the gear shift lever being rotatably connected to the shifter base, and the other end of the gear shift lever extending into the cabin for the driver to operate; the shift cable component being connected between the gear shift lever and a transmission for transmitting the gear shifting command of the gear shift lever to the transmission, the shift cable adjuster being mounted on the shift cable component for regulating the tightness of the shift cable component; wherein the bottom plate defines a shift cable adjuster access port (1122cf), and the shift cable adjuster is arranged in the shift cable adjuster access port.

6. The side-by-side utility vehicle (100) of claim 1, wherein the frame further comprises side bumpers (1116b) penetrating into the vehicle cover from outside to inside of the side-by-side utility vehicle and mounted on a corresponding connection plate arranged on the middle frame portion; the bottom plate defines a bumper access port (1122cc), and the connection between the side bumpers and the connection plates are arranged at the bumper access port.

7. The side-by-side utility vehicle (100) of claim 1, wherein the vehicle cover further comprises a front panel (1123aa) covering upper surface of the front frame portion and defining a front access port (1123ae).

8. The side-by-side utility vehicle (100) of claim 1, wherein the vehicle cover further comprises an air intake grille (1123ac) removably connected to the front frame portion and covering the front end of the front frame portion; wherein the ratio of the width of the air intake grille to the width of the side-by-side utility vehicle is in the range between 0.4 and 0.8.

9. The side-by-side utility vehicle (100) of claim 1, wherein the bottom of the intake cavity is provided with a convex therein the mounting hole is arranged, and the end of the intake manifold far from the air inlet of the prime mover assembly extends into the intake seat mounting cavity through the mounting hole; wherein the end face of the convex away from the bottom of the intake cavity is tilted.

10. The side-by-side utility vehicle (100) of claim 1, wherein the intake manifold comprises an intake manifold body and an adapter pipe (145), one end of the intake manifold body being connected to the air inlet of the prime mover assembly, and the other end of the intake manifold body extending toward the intake seat, one end of the adapter pipe being connected to the intake manifold body, and the other end of the adapter pipe extending into the intake seat mounting cavity through the mounting hole; wherein the adapter pipe is a hose, and the adapter pipe is sealed with the intake manifold body and the mounting hole; wherein the adapter pipe comprises a first connection section (1451), a second connection section (1452) and a third connection section (1453), wherein the first connection section is located in the intake cavity, and the third connection section is located outside the intake cavity and adjacent to the intake manifold; the second connection section between the first connection section and the third connection section is embedded in the mounting hole; and the outer surface of the second connection section defines a sealing groove therein the edges of the mounting hole are clamped.

11. The side-by-side utility vehicle (100) of claim 1, wherein the end face of the end of the intake manifold extending into the intake cavity is a slope; the slope inclines from the side adjacent to the opening to the side away from the opening, and the side of the slope adjacent to the opening is relatively higher than the side of the slope away from the opening along a vertical direction.

12. The side-by-side utility vehicle (100) of claim 1, wherein the prime mover assembly comprises an engine (121) and a transmission (122), the engine comprises an air inlet of engine and an air outlet of engine, and the transmission comprises an air inlet of transmission and an air outlet of transmission;
wherein the intake and exhaust system comprises a first intake and exhaust system (141) and a second intake and exhaust system (142); wherein the first intake and exhaust system comprises a first intake manifold and a first exhaust manifold; the second intake and exhaust system comprises a second intake manifold and a second exhaust manifold;
the first intake manifold is in fluid communication with the air inlet of the engine, and the first exhaust manifold is in fluid communication with the air outlet of the engine;
the second exhaust manifold is in fluid communication with the air outlet of transmission, and the cooling gas enters into the transmission through the second intake manifold to cool down the transmission; and
wherein the side-by-side utility vehicle comprises two mounting cavities respectively arranged on sides of the side-by-side utility vehicle, each intake seat mounting cavity is correspondingly equipped with an intake seat, the first intake manifold and the second intake manifold corresponds to one intake seat, respectively.

13. The side-by-side utility vehicle (100) of claim 1, wherein the opening comprises a first opening and a second opening adjacent to each other, the first opening faces toward the side of the vehicle cover, and the second opening faces upward; the second opening is provided with a cover plate, and one end of the elevated intake manifold is capable of passing through the cover plate and connected to the intake manifold; the cover plate is provided with a wall-breaking area (1124f) in communication with the air inlet and around the air inlet;
wherein the strength of the wall-breaking area is less than or equal to the strength of other areas of the cover plate.

14. The side-by-side utility vehicle (100) of claim 13, wherein the elevated intake manifold further comprises a third pipe section (1443) located between the first pipe section and the second pipe section, and the third pipe section is arc-shaped.

## Patentansprüche

1. Nebeneinander-Nutzfahrzeug (100), umfassend
einen Rahmen (10), der einen vorderen Rahmenabschnitt (1111), einen hinteren Rahmenabschnitt (1113) und einen mittleren Rahmenabschnitt (1112) zwischen dem vorderen Rahmenabschnitt und dem hinteren Rahmenabschnitt umfasst;
eine Fahrzeugabdeckung (11), die eine Kabine (1121) definiert, wobei die Fahrzeugabdeckung eine vordere Verkleidung (1122a), die zwischen dem vorderen Rahmenabschnitt und dem mittleren Rahmenabschnitt angeordnet ist, eine Bodenplatte (1122c), die auf dem mittleren Rahmenabschnitt angeordnet ist, eine Armaturenbrettplatte (1122b), die an einem Ende der vorderen Verkleidung entfernt von der Bodenplatte angeordnet ist, eine hintere Verkleidung (1122d), die zwischen dem mittleren Rahmenabschnitt und dem hinteren Rahmenabschnitt angeordnet ist, und hintere Seitenplatten (1123bc), die auf Seiten des hinteren Rahmenabschnitts angeordnet sind, umfasst;
eine Antriebsaggregat-Anordnung (12) mit einem Lufteinlass und einem Luftauslass, die an dem hinteren Rahmenabschnitt montiert ist;
ein Ansaug- und Abgassystem (14), das einen Ansaugkrümmer (1411) in Fluidverbindung mit dem Lufteinlass der Antriebsaggregat-Anordnung und einen Abgaskrümmer (1412) in Fluidverbindung mit dem Luftauslass der Antriebsaggregat-Anordnung umfasst; und
eine elektrische Steuereinheit (21), die zumindest teilweise von dem Rahmen getragen ist;
wobei das Ansaug- und Abgassystem ferner einen Ansaugsitz (143) umfasst, der ein Montageloch und einen Ansaughohlraum mit einer Öffnung definiert; mindestens ein Ansaugsitz-Montagehohlraum (1121g), der in vertikaler Richtung über einer der hinteren Seitenplatten positioniert ist, an einer Seite des Nebeneinander-Nutzfahrzeugs definiert ist; der Ansaugsitz in den Ansaugsitz-Montagehohlraum eingebettet ist, wobei sich das Ende des Ansaugkrümmers, das vom Lufteinlass der Antriebsaggregat-Anordnung entfernt ist, und der Luftfilter durch das Montageloch in Richtung des Ansaugsitzes und in den Ansaugsitz-Montagehohlraum erstrecken;
**dadurch gekennzeichnet, dass**
das Ansaug- und Abgassystem ferner einen Luftfilter (146) umfasst, der ein Filterelement umfasst und zumindest teilweise in Fluidverbindung mit dem Ansaugkrümmer steht, um das Gas zu filtern, das durch den Ansaugkrümmer in die Antriebsaggregat-Anordnung eintritt,
wobei das Ansaug- und Abgassystem ferner einen erhöhten Ansaugkrümmer (144) umfasst, wobei sich ein Ende des erhöhten Ansaugkrümmers in den Ansaughohlraum erstreckt und in Fluidverbindung mit dem Ansaugkrümmer steht und sich das andere Ende des erhöhten Ansaugkrümmers von dem Ansaugsitz weg erstreckt und sich im Wesentlichen entlang einer vertikalen Richtung erstreckt; und
wobei eine Filterelement-Zugangsöffnung (1121b) an der hinteren Verkleidung definiert ist und die Filterelement-Zugangsöffnung in Fluidverbindung mit der Kabine und dem Luftfilter steht,
wobei der erhöhte Ansaugkrümmer umfasst:
einen ersten Rohrabschnitt (1441), dessen eines Ende mit dem Ansaugkrümmer verbunden ist und dessen anderes Ende sich vertikal und nach oben erstreckt; und
einen zweiten Rohrabschnitt (1442), der an dem Ende des ersten Rohrabschnitts weit entfernt von dem Ansaugkrümmer angeordnet ist und mit dem ersten Rohrabschnitt in Verbindung steht;
wobei ein Winkel, der zwischen der Achse des ersten Rohrabschnitts und der Achse des zweiten Rohrabschnitts definiert ist, in dem Bereich zwischen 40° und 140° liegt.

2. Nebeneinander-Nutzfahrzeug (100) nach Anspruch 1, wobei das Nebeneinander-Nutzfahrzeug ferner einen oder mehrere Sitze (1122f) innerhalb der Kabine umfasst, wobei die Sitze entfernbar auf dem mittleren Rahmenabschnitt und über der Bodenplatte angeordnet sind; wobei die Filterelement-Zugangsöffnung über dem mittleren Rahmenabschnitt entlang einer vertikalen Richtung und hinter den Sitzen entlang einer Vorwärts-Rückwärts-Richtung positioniert ist; wobei das Nebeneinander-Nutzfahrzeug ferner einen hinteren Kofferraum (1123ba) umfasst, der auf dem hinteren Rahmenabschnitt montiert ist; wobei die Filterelement-Zugangsöffnung zwischen dem hinteren Kofferraum und den Sitzen positioniert ist.

3. Nebeneinander-Nutzfahrzeug (100) nach Anspruch 1, wobei der Luftfilter ein Gehäuse umfasst, das eine Filterelementöffnung definiert, die der Filterelement-Zugangsöffnung zugewandt ist; und das Filterelement durch die Filterelementöffnung im Inneren des Gehäuses montiert ist; das Nebeneinander-Nutzfahrzeug ferner eine Abdeckungsplattenanordnung umfasst, die die Filterelement-Zugangsöffnung und die Filterelementöffnung abdeckt;
wobei die Abdeckungsplattenanordnung umfasst:
einen ersten Abdeckungskörper, der die Filterelementöffnung abdichtet und abdeckt und in der Filterelement-Zugangsöffnung angeordnet ist, wobei der erste Abdeckungskörper mit dem Gehäuse durch eine erste Schnelldemontagestruktur verbunden ist; und
einen zweiten Abdeckungskörper, der das Filterelement und die Zugangsöffnung abdichtet und abdeckt und auf der Innenwand der Kabine durch eine zweite Schnelldemontagestruktur montiert ist; wobei der zweite Abdeckungskörper den ersten Abdeckungskörper abdeckt.

4. Nebeneinander-Nutzfahrzeug (100) nach Anspruch 1, wobei das Nebeneinander-Nutzfahrzeug ferner mehrere Schalter (203) umfasst, die durch Kabelbäume mit der elektrischen Steuereinheit verbunden sind; die Armaturenbrettplatte oder die vordere Verkleidung eine Armaturenbrett-Zugangsöffnung (1122bh) definiert, die mit der Kabine in Verbindung steht, und die mehreren Schalter um die Armaturenbrett-Zugangsöffnung herum angeordnet sind.

5. Nebeneinander-Nutzfahrzeug (100) nach Anspruch 1, ferner umfassend einen Gangwahlmechanismus (131), der eine Schaltbasis, die auf dem Rahmen befestigt ist, einen Gangschalthebel, eine Schaltkabelkomponente und einen Schaltkabeleinsteller umfasst, wobei ein Ende des Gangschalthebels drehbar mit der Schaltbasis verbunden ist und sich das andere Ende des Gangschalthebels in die Kabine erstreckt, damit der Fahrer ihn betätigen kann; wobei die Schaltkabelkomponente zwischen den Gangschalthebel und ein Getriebe geschaltet ist, um den Gangschaltbefehl des Gangschalthebels an das Getriebe zu übertragen, wobei der Schaltkabeleinsteller auf der Schaltkabelkomponente montiert ist, um die Spannung der Schaltkabelkomponente zu regulieren; wobei die Bodenplatte eine Schaltkabeleinsteller-Zugangsöffnung (1122cf) definiert und der Schaltkabeleinsteller in der Schaltkabeleinsteller-Zugangsöffnung angeordnet ist.

6. Nebeneinander-Nutzfahrzeug (100) nach Anspruch 1, wobei der Rahmen ferner Seitenstoßstangen (1116b) umfasst, die von außen nach innen in die Fahrzeugabdeckung des Nebeneinander-Nutzfahrzeugs eindringen und auf einer entsprechenden Verbindungsplatte montiert sind, die auf dem mittleren Rahmenabschnitt angeordnet ist; die Bodenplatte eine Stoßstangen-Zugangsöffnung (1122cc) definiert und die Verbindung zwischen den Seitenstoßstangen und den Verbindungsplatten an der Stoßstangen-Zugangsöffnung angeordnet ist.

7. Nebeneinander-Nutzfahrzeug (100) nach Anspruch 1, wobei die Fahrzeugabdeckung ferner eine vordere Platte (1123aa) umfasst, die die obere Fläche des vorderen Rahmenabschnitts abdeckt und eine vordere Zugangsöffnung (1123ae) definiert.

8. Nebeneinander-Nutzfahrzeug (100) nach Anspruch 1, wobei die Fahrzeugabdeckung ferner ein Luftansauggitter (1123ac) umfasst, das abnehmbar mit dem vorderen Rahmenabschnitt verbunden ist und das vordere Ende des vorderen Rahmenabschnitts abdeckt; wobei das Verhältnis der Breite des Luftansauggitters zu der Breite des Nebeneinander-Nutzfahrzeugs in dem Bereich zwischen 0,4 und 0,8 liegt.

9. Nebeneinander-Nutzfahrzeug (100) nach Anspruch 1, wobei der Boden des Ansaughohlraums mit einer konvexen Ausformung versehen ist, in der das Montageloch angeordnet ist, und wobei sich das Ende des Ansaugkrümmers, das von dem Lufteinlass der Antriebsaggregat-Anordnung entfernt ist, durch das Montageloch in den Ansaugsitz-Montagehohlraum erstreckt; wobei die Endfläche der konvexen Ausformung, die von dem Boden des Ansaughohlraums entfernt ist, geneigt ist.

10. Nebeneinander-Nutzfahrzeug (100) nach Anspruch 1, wobei der Ansaugkrümmer einen Ansaugkrümmerkörper und ein Adapterrohr (145) umfasst, wobei ein Ende des Ansaugkrümmerkörpers mit dem Lufteinlass der Antriebsaggregat-Anordnung verbunden ist und sich das andere Ende des Ansaugkrümmerkörpers in Richtung des Ansaugsitzes erstreckt, wobei ein Ende des Adapterrohrs mit dem Ansaugkrümmerkörper verbunden ist und sich das andere Ende des Adapterrohrs durch das Montageloch in den Ansaugsitz-Montagehohlraum erstreckt; wobei das Adapterrohr ein Schlauch ist und das Adapterrohr mit dem Ansaugkrümmerkörper und dem Montageloch abgedichtet ist; wobei das Adapterrohr einen ersten Verbindungsabschnitt (1451), einen zweiten Verbindungsabschnitt (1452) und einen dritten Verbindungsabschnitt (1453) umfasst, wobei sich der erste Verbindungsabschnitt in dem Ansaughohlraum befindet und sich der dritte Verbindungsabschnitt außerhalb des Ansaughohlraums und benachbart zu dem Ansaugkrümmer befindet; der zweite Verbindungsabschnitt zwischen dem ersten Verbindungsabschnitt und dem dritten Verbindungsabschnitt in dem Montageloch eingebettet ist; und die äußere Fläche des zweiten Verbindungsabschnitts eine Dichtungsnut definiert, in der die Ränder des Montagelochs verklemmt sind.

11. Nebeneinander-Nutzfahrzeug (100) nach Anspruch 1, wobei die Endfläche des Endes des Ansaugkrümmers, der sich in den Ansaughohlraum erstreckt, eine Schräge ist; die Schräge sich von der Seite, die der Öffnung benachbart ist, zu der Seite, die von der Öffnung entfernt ist, neigt, und die Seite der Schräge, die der Öffnung benachbart ist, entlang einer vertikalen Richtung relativ höher ist als die Seite der Schräge, die von der Öffnung entfernt ist.

12. Nebeneinander-Nutzfahrzeug (100) nach Anspruch 1, wobei die Antriebsaggregat-Anordnung einen Motor (121) und ein Getriebe (122) umfasst, der Motor einen Lufteinlass des Motors und einen Luftauslass des Motors umfasst und das Getriebe einen Lufteinlass des Getriebes und einen Luftauslass des Getriebes umfasst;
wobei das Ansaug- und Abgassystem ein erstes Ansaug- und Abgassystem (141) und ein zweites Ansaug- und Abgassystem (142) umfasst; wobei das erste Ansaug- und Abgassystem einen ersten Ansaugkrümmer und einen ersten Abgaskrümmer umfasst; das zweite Ansaug- und Abgassystem einen zweiten Ansaugkrümmer und einen zweiten Abgaskrümmer umfasst;
der erste Ansaugkrümmer in Fluidverbindung mit dem Lufteinlass des Motors steht und der erste Abgaskrümmer in Fluidverbindung mit dem Luftauslass des Motors steht;
der zweite Abgaskrümmer in Fluidverbindung mit dem Luftauslass des Getriebes steht und das Kühlgas durch den zweiten Ansaugkrümmer in das Getriebe eintritt, um das Getriebe zu kühlen; und
wobei das Nebeneinander-Nutzfahrzeug zwei Montagehohlräume umfasst, die jeweils auf Seiten des Nebeneinander-Nutzfahrzeugs angeordnet sind, jeder Ansaugsitz-Montagehohlraum entsprechend mit einem Ansaugsitz ausgestattet ist, der erste Ansaugkrümmer und der zweite Ansaugkrümmer jeweils einem Ansaugsitz entsprechen.

13. Nebeneinander-Nutzfahrzeug (100) nach Anspruch 1, wobei die Öffnung eine erste Öffnung und eine zweite Öffnung umfasst, die benachbart zueinander sind, wobei die erste Öffnung in Richtung der Seite der Fahrzeugabdeckung weist und die zweite Öffnung nach oben weist; wobei die zweite Öffnung mit einer Abdeckungsplatte versehen ist und ein Ende des erhöhten Ansaugkrümmers in der Lage ist, durch die Abdeckungsplatte hindurchzutreten und mit dem Ansaugkrümmer verbunden zu sein; wobei die Abdeckungsplatte mit einem Wanddurchbruchbereich (1124f) versehen ist, der mit dem Lufteinlass in Verbindung steht und um den Lufteinlass herum angeordnet ist;
wobei die Festigkeit des Wanddurchbruchbereichs kleiner oder gleich der Festigkeit anderer Bereiche der Abdeckungsplatte ist.

14. Nebeneinander-Nutzfahrzeug (100) nach Anspruch 13, wobei der erhöhte Ansaugkrümmer ferner einen dritten Rohrabschnitt (1443) umfasst, der sich zwischen dem ersten Rohrabschnitt und dem zweiten Rohrabschnitt befindet, und der dritte Rohrabschnitt bogenförmig ist.

## Revendications

1. Véhicule utilitaire côte-à-côte (100) comprenant
un châssis (10) comprenant une partie de châssis avant (1111), une partie de châssis arrière (1113) et une partie de châssis centrale (1112) entre la partie de châssis avant et la partie de châssis arrière ;
une carrosserie de véhicule (11) définissant un habitacle (1121), la carrosserie de véhicule comprenant une chicane avant (1122a) disposée entre la partie de châssis avant et la partie de châssis centrale, une plaque inférieure (1122c) disposée sur la partie de châssis centrale, un panneau de tableau de bord (1122b) disposé à une extrémité de la chicane avant opposée à la plaque inférieure, une chicane arrière (1122d) disposée entre la partie de châssis centrale et la partie de châssis arrière, et des plaques latérales arrière (1123bc) disposées sur des côtés de la partie de châssis arrière ;
un ensemble de moteur principal (12) comportant une entrée d'air et une sortie d'air montée sur la partie de châssis arrière ;
un système d'admission et d'échappement (14) comprenant un collecteur d'admission (1411) en communication fluidique avec l'entrée d'air de l'ensemble de moteur principal, un collecteur d'échappement (1412) en communication fluidique avec la sortie d'air de l'ensemble de moteur principal ; et
une unité de commande électrique (21) au moins partiellement supportée par le châssis ;
dans lequel le système d'admission et d'échappement comprend en outre un siège d'admission (143) définissant un trou de montage et une cavité d'admission comportant une ouverture ; au moins une cavité de montage de siège d'admission (1121g) positionnée au-dessus des plaques latérales arrière dans une direction verticale est définie sur un côté du véhicule utilitaire côte-à-côte ; le siège d'admission est incorporé dans la cavité de montage de siège d'admission, l'extrémité du collecteur d'admission opposée à l'entrée d'air de l'ensemble de moteur principal et le filtre à air s'étend vers le siège d'admission et dans la cavité de montage de siège d'admission à travers le trou de montage ;
**caractérisé en ce que**
le système d'admission et d'échappement comprend en outre un filtre à air (146) comprenant un élément de filtre et étant au moins partiellement en communication fluidique avec le collecteur d'admission pour filtrer le gaz entrant dans l'ensemble de moteur principal à travers le collecteur d'admission,
dans lequel le système d'admission et d'échappement comprend en outre un collecteur d'admission surélevé (144), une extrémité du collecteur d'admission surélevé s'étendant dans la cavité d'admission et en communication fluidique avec le collecteur d'admission, et l'autre extrémité du collecteur d'admission surélevé s'étendant à distance du siège d'admission et s'étendant substantiellement le long d'une direction verticale ; et
dans lequel un orifice d'accès à l'élément de filtre (1121b) est défini sur la chicane arrière, et l'orifice d'accès à l'élément de filtre est en communication fluidique avec l'habitacle et le filtre à air,
dans lequel le collecteur d'admission surélevé comprend
une première section de tuyau (1441) dont une extrémité peut être raccordée au collecteur d'admission et l'autre extrémité s'étend verticalement et vers le haut ; et
une deuxième section de tuyau (1442) disposée à l'extrémité de la première section de tuyau éloignée du collecteur d'admission et en communication avec la première section de tuyau ;
dans lequel un angle défini entre l'axe de la première section de tuyau et l'axe de la deuxième section de tuyau est compris dans la plage entre 40° et 140°.

2. Véhicule utilitaire côte-à-côte (100) selon la revendication 1, dans lequel le véhicule utilitaire côte-à-côte comprend en outre un ou plusieurs sièges (1122f) à l'intérieur de l'habitacle, les sièges sont disposés de façon amovible sur la partie de châssis centrale et au-dessus de la plaque inférieure ; l'orifice d'accès à l'élément de filtre est positionné au-dessus de la partie de châssis centrale le long d'une direction verticale et derrière les sièges le long d'une direction avant-arrière ; dans lequel le véhicule utilitaire côte-à-côte comprend en outre un coffre arrière (1123ba) monté sur la partie de châssis arrière ; l'orifice d'accès à l'élément de filtre est positionné entre le coffre arrière et les sièges.

3. Véhicule utilitaire côte-à-côte (100) selon la revendication 1, dans lequel le filtre à air comprend un boîtier définissant une ouverture d'élément de filtre tournée vers l'orifice d'accès à l'élément de filtre ; et l'élément de filtre est monté à l'intérieur du boîtier à travers l'ouverture d'élément de filtre ; le véhicule utilitaire côte-à-côte comprend en outre un ensemble de plaque de couverture recouvrant l'orifice d'accès à l'élément de filtre et l'ouverture d'élément de filtre ;
dans lequel l'ensemble de plaque de couverture comprend
un premier corps de couverture scellant et recouvrant l'ouverture d'élément de filtre et disposé dans l'orifice d'accès à l'élément de filtre, le premier corps de couverture étant relié au boîtier par le biais d'une première structure de démontage rapide ; et
un deuxième corps de couverture scellant et recouvrant l'orifice d'accès à l'élément de filtre et monté sur la paroi intérieure de l'habitacle par le biais d'une deuxième structure de démontage rapide ; dans lequel le deuxième corps de couverture recouvre le premier corps de couverture.

4. Véhicule utilitaire côte-à-côte (100) selon la revendication 1, dans lequel le véhicule utilitaire côte-à-côte comprend en outre une pluralité de commutateurs (203) connectés à l'unité de commande électrique par des faisceaux de câbles ; le panneau de tableau de bord ou la chicane avant définit un orifice d'accès au tableau de bord (1122bh) en communication avec l'habitacle, et la pluralité de commutateurs sont disposés autour de l'orifice d'accès au tableau de bord.

5. Véhicule utilitaire côte-à-côte (100) selon la revendication 1, comprenant en outre un mécanisme de sélection de vitesses (131) comprenant une base d'embrayeur fixée au châssis, un levier de vitesses, un composant de câble de changement de vitesses et un organe d'ajustement de câble de changement de vitesses, une extrémité du levier de vitesses étant reliée de façon rotative à la base d'embrayeur, et l'autre extrémité du levier de vitesses s'étendant dans l'habitacle pour être actionné par le conducteur ; le composant de câble de changement de vitesses étant connecté entre le levier de vitesses et une transmission pour transmettre la commande de changement de vitesses du levier de vitesses à la transmission, l'organe d'ajustement de câble de changement de vitesses étant monté sur le composant de câble de changement de vitesses pour régler le serrage du composant de câble de changement de vitesses ; dans lequel la plaque inférieure définit un orifice d'accès à l'organe d'ajustement de câble de changement de vitesses (1122cf), et l'organe d'ajustement de câble de changement de vitesses est disposé dans l'orifice d'accès à l'organe d'ajustement de câble de changement de vitesses.

6. Véhicule utilitaire côte-à-côte (100) selon la revendication 1, dans lequel le châssis comprend en outre des pare-chocs latéraux (1116b) pénétrant dans la carrosserie de véhicule depuis l'extérieur vers l'intérieur du véhicule utilitaire côte-à-côte et montés sur une plaque d'assemblage correspondante disposée sur la partie de châssis centrale ; la plaque inférieure définit un orifice d'accès au pare-chocs (1122cc), et l'assemblage entre les pare-chocs latéraux et les plaques d'assemblage est disposé au niveau de l'orifice d'accès au pare-chocs.

7. Véhicule utilitaire côte-à-côte (100) selon la revendication 1, dans lequel la carrosserie de véhicule comprend en outre un panneau avant (1123aa) recouvrant une surface supérieure de la partie de châssis avant et définissant un orifice d'accès avant (1123ae).

8. Véhicule utilitaire côte-à-côte (100) selon la revendication 1, dans lequel la carrosserie de véhicule comprend en outre une grille d'admission d'air (1123ac) reliée de façon amovible à la partie de châssis avant et recouvrant l'extrémité avant de la partie de châssis avant ; dans lequel le rapport de la largeur de la grille d'admission d'air à la largeur du véhicule utilitaire côte-à-côte est compris dans la plage entre 0,4 et 0,8.

9. Véhicule utilitaire côte-à-côte (100) selon la revendication 1, dans lequel le fond de la cavité d'admission est doté d'une partie convexe dans laquelle est disposé le trou de montage, et l'extrémité du collecteur d'admission éloignée de l'entrée d'air de l'ensemble de moteur principal s'étend dans la cavité de montage de siège d'admission à travers le trou de montage ; dans lequel la face d'extrémité de la partie convexe éloignée du fond de la cavité d'admission est inclinée.

10. Véhicule utilitaire côte-à-côte (100) selon la revendication 1, dans lequel le collecteur d'admission comprend une corps de collecteur d'admission et une tube d'adaptateur (145), une extrémité du corps de collecteur d'admission étant raccordée à l'entrée d'air de l'ensemble de moteur principal, et l'autre extrémité du corps de collecteur d'admission s'étendant vers le siège d'admission, une extrémité du tube d'adaptateur étant raccordée au corps de collecteur d'admission, et l'autre extrémité du tube d'adaptateur s'étendant dans la cavité de montage de siège d'admission à travers le trou de montage ; dans lequel le tube d'adaptateur est un tuyau flexible, et le tube d'adaptateur est scellé avec le corps de collecteur d'admission et le trou de montage ; dans lequel le tube d'adaptateur comprend une première section de raccordement (1451), une deuxième section de raccordement (1452) et une troisième section de raccordement (1453), dans lequel la première section de raccordement se trouve dans la cavité d'admission, et la troisième section de raccordement se trouve à l'extérieur de la cavité d'admission et est adjacente au collecteur d'admission ; la deuxième section de raccordement entre la première section de raccordement et la troisième section de raccordement est incorporée dans le trou de montage ; et la surface extérieure de la deuxième section de raccordement définit une rainure d'étanchéité dans laquelle sont coincés les bords du trou de montage.

11. Véhicule utilitaire côte-à-côte (100) selon la revendication 1, dans lequel la face d'extrémité de l'extrémité du collecteur d'admission s'étendant dans la cavité d'admission est une pente ; la pente est inclinée à partir du côté adjacent à l'ouverture vers le côté opposé à l'ouverture, et le côté de la pente adjacent à l'ouverture est relativement plus haut que le côté de la pente opposé à l'ouverture le long d'une direction verticale.

12. Véhicule utilitaire côte-à-côte (100) selon la revendication 1, dans lequel l'ensemble de moteur principal comprend un moteur (121) et une transmission (122), le moteur comprend une entrée d'air de moteur et une sortie d'air de moteur, et la transmission comprend une entrée d'air de transmission et une sortie d'air de transmission ;
dans lequel le système d'admission et d'échappement comprend un premier système d'admission et d'échappement (141) et un deuxième système d'admission et d'échappement (142) ; dans lequel le premier système d'admission et d'échappement comprend un premier collecteur d'admission et un premier collecteur d'échappement ; le deuxième système d'admission et d'échappement comprend un deuxième collecteur d'admission et un deuxième collecteur d'échappement ;
le premier collecteur d'admission est en communication fluidique avec l'entrée d'air du moteur, et le premier collecteur d'échappement est en communication fluidique avec la sortie d'air du moteur ;
le deuxième collecteur d'échappement est en communication fluidique avec la sortie d'air de la transmission, et le gaz de refroidissement entre dans la transmission à travers le deuxième collecteur d'admission pour refroidir la transmission ; et
dans lequel le véhicule utilitaire côte-à-côte comprend deux cavités de montage disposées respectivement sur des côtés du véhicule utilitaire côte-à-côte, chaque cavité de montage de siège d'admission est équipée de façon correspondante d'un siège d'admission, le premier collecteur d'admission et le deuxième collecteur d'admission correspondent à un siège d'admission, respectivement.

13. Véhicule utilitaire côte-à-côte (100) selon la revendication 1, dans lequel l'ouverture comprend une première ouverture et une deuxième ouverture adjacentes l'une à l'autre, la première ouverture étant tournée vers le côté de la carrosserie de véhicule, et la deuxième ouverture étant tournée vers le haut ; la deuxième ouverture est dotée d'une plaque de couverture, et une extrémité du collecteur d'admission surélevé est capable de traverser la plaque de couverture et raccordée au collecteur d'admission ; la plaque de couverture est dotée d'une zone de rupture de paroi (1124f) en communication avec l'entrée d'air et autour de l'entrée d'air ;
dans lequel la résistance de la zone de rupture de paroi est inférieure ou égale à la résistance d'autres zones de la plaque de couverture.

14. Véhicule utilitaire côte-à-côte (100) selon la revendication 13, dans lequel le collecteur d'admission surélevé comprend en outre une troisième section de tuyau (1443) située entre la première section de tuyau et la deuxième section de tuyau, et la troisième section de tuyau est arquée.
